(19) Europäisches Patentamt
European Patent Office
Office européen des brevets

(11) **EP 2 196 098 B1**

(12) **EUROPÄISCHE PATENTSCHRIFT**

(45) Veröffentlichungstag und Bekanntmachung des Hinweises auf die Patenterteilung:
**27.07.2016 Patentblatt 2016/30**

(51) Int Cl.:
***A23L 27/00*** *(2016.01)*    ***C08L 1/02*** *(2006.01)*

(21) Anmeldenummer: **09176691.5**

(22) Anmeldetag: **20.11.2009**

(54) **In Cellulose inkudierte Aromastoffe**

Aroma substances included in cellulose

Substances aromatiques inclues dans de la cellulose

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.11.2008 DE 102008044126**

(43) Veröffentlichungstag der Anmeldung:
**16.06.2010 Patentblatt 2010/24**

(73) Patentinhaber: **Symrise AG**
**37603 Holzminden (DE)**

(72) Erfinder: **Siegel, Sven**
**37671 Höxter (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**GB-A- 2 079 578    US-A- 4 341 807**
**US-A- 4 471 871    US-A- 5 700 397**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft Aromastoffinklusionscellulosen umfassend oder bestehend aus Cellulose und bestimmten inkludierten Aromastoffen. Diese Aromastoffinklusionscellulosen liegen in erfindungsgemäßen Mischungen vor mit Begleitsubstanzen sowie gegebenenfalls Wasser.

Die vorliegende Erfindung betrifft zudem ein Verfahren zur Herstellung von Aromastoffinklusionscellulosen, die Verwendung erfindungsgemäß einzusetzender Aromastoffinklusionscellulosen bzw. erfindungsgemäßer Mischungen als Mittel zur Aromatisierung von der Ernährung oder dem Genuss dienenden Zubereitungen oder Halbfertigwaren und entsprechende der Ernährung oder dem Genuss dienende Zubereitungen und Halbfertigwaren.

Aromastoffe sind überwiegend flüchtige Verbindungen, die während Lagerung oder auch Verarbeitungsprozessen in der Lebensmittelindustrie hohe Verlustraten aufweisen, beispielsweise durch Verflüchtigung, Verdampfen, Verdunsten, Wasserdampfdestillation und Oxidation. Aufgrund dieser genannten und weiterer negativen Umstände weisen Aromastoffe in den verschiedensten Anwendungsgebieten häufig eine unzureichende Stabilität auf, so dass sich z.B. die beim Verzehr wahrgenommene Aromaintensität verringern, das Aromaprofil verändern und ggf. die Bildung unerwünscht schmeckender Aromafehlnoten auftreten können.

Zur Stabilisierung von Aromastoffen setzt man im bekannten Stand der Technik überwiegend Zusatzstoffe, wie zum Beispiel Antioxidantien, ein oder/und schützt die Aromastoffe durch eine Verkapselung. Die Verwendung von Zusatzstoffen sollte jedoch nur erfolgen, sofern die Verwendung unbedingt notwendig ist, und auch dann sollte die verwendete Menge möglichst gering gehalten werden. Auch tragen Antioxidantien als solche in der Regel nicht zur Verminderung der Flüchtigkeit von Aromastoffen bei.

Zur Verringerung der Verflüchtigung von Aromastoffen werden häufig Verkapselungsprodukte verwendet. Gebräuchliche Trägerstoffe hierfür besitzen jedoch zumeist einen oder häufiger sogar mehrere Nachteile. So können beispielsweise native Stärken, Maltodextrine sowie Zucker kariogen wirken. Als Ersatz für diese Stoffe eingesetzte Zuckeralkohole beheben zwar das Problem der Kariogenität, wirken jedoch in größeren Mengen oft abführend. Hefezellen können zur Steigerung der Aromazurückhaltung während des Kochens, Backens und Frittierens eingesetzt werden, besitzen jedoch oft einen ausgeprägten Eigengeschmack, der in einigen Anwendungen unerwünscht sein kann. Bei der Verwendung von Proteinen tierischen Ursprungs gibt es zahlreiche religiöse und ethnische Besonderheiten sowie spezielle Ernährungsweisen (z.B. Vegetarismus) zu beachten, so dass Verkapselungsprodukte mit tierischen Proteinen ggf. von bestimmten Konsumenten abgelehnt werden. Der Ersatz der tierischen Proteine durch pflanzliche Proteine ist wegen zum Teil stark unterschiedlicher Eigenschaften nicht immer möglich. Bei einigen anderen Rohstoffen kam es in der Vergangenheit gelegentlich zur Verknappung. Beispielsweise sei hier Gummi Arabicum angeführt, dessen Hauptproduktionsland Sudan von einem langjährigen Bürgerkrieg betroffen war.

Sofern eine Kombination aus beispielsweise Oxidationsschutz und Verflüchtigungsschutz bei Aromastoffen erforderlich ist, ist für viele (bei der Verkapselung verwendete) Trägerstoffe nachteilhafterweise eine Verkapselung in Kombination mit dem Einsatz von Antioxidantien notwendig. So ist es beispielsweise ratsam, in Hefezellen eingekapseltes Orangenöl zusätzlich durch Antioxidantien zu schützen, um eine lange Lagerfähigkeit zu erzielen. Prinzipiell kann eine Oxidationsstabilität in Kombination mit einem sehr guten Verflüchtigungsschutz auch durch alleinige Verwendung von Cyclodextrinen erzielt werden, jedoch ist die Verwendung von beta-Cyclodextrin zur Verkapselung von Aromastoffen in Europa durch die Gesetzgebung nur sehr beschränkt zulässig und für andere Cyclodextrine kaum gegeben.

Viele in Verkapselungen verwendete Trägerstoffe können zudem vom Körper energetisch verwertet werden. In hoch entwickelten Industrieländern hat sich die übermäßige Aufnahme von Energie über die Nahrung als Problem erwiesen und führt in zunehmendem Maße zu Adipositas sowie den damit in Zusammenhang gebrachten Begleiterkrankungen wie Diabetes, Herz-Kreislauferkrankungen sowie Erkrankungen des Stütz- und Bewegungsapparates. Viele Trägerstoffe, insbesondere Stärke, Maltodextrine, Glucose und Saccharose werden gegebenenfalls nach ihrem Abbau durch Enzyme insulinabhängig im Körper verstoffwechselt. Jedoch leidet ein hoher und stetig zunehmender Anteil der Bevölkerung, insbesondere in hochentwickelten Industrieländern an der Stoffwechselkrankheit Diabetes, weshalb die Zufuhr insulinabhängig verstoffwechselter Stoffe möglichst kontrolliert erfolgen sollte.

Primäre Aufgabe der vorliegenden Erfindung war es daher, ein Erzeugnis mit Aromastoffen, insbesondere ein Verkapselungsprodukt mit Aromastoffen bereitzustellen, in dem die Aromastoffe eine erhöhte Stabilität aufweisen und wobei das Erzeugnis bzw. das Verkapselungsprodukt vorzugsweise einzelne oder sämtliche der vorangehend erwähnten Nachteile nicht aufweist.

Zudem war es Aufgabe der vorliegenden Erfindung, ein Verfahren zur Herstellung solcher Erzeugnisse bzw. Verkapselungsprodukte anzugeben.

Weitere Aufgabenstellungen, die der vorliegenden Erfindung zugrunde liegen, ergeben sich aus den nachfolgenden Ausführungen und den beigefügten Patentansprüchen.

Die primäre Aufgabe wird erfindungsgemäß gelöst durch eine Mischung umfassend oder bestehend aus (i+ii) Aromastoffinklusionscellulose, umfassend oder bestehend aus

(i) Cellulose und

(ii) einem, zwei, drei, vier oder mehr in die Cellulose inkludierten Aromastoffen, mit der Maßgabe, dass die inkludierten Aromastoffe keine Alkansäuren mit 1 bis 4 C-Atomen sind,

(iii) Begleitsubstanzen, wobei die Begleitsubstanzen (iii) ausgewählt sind aus der Gruppe bestehend aus Hemicellulose und Lignin,

wobei

die Gesamtmenge an Hemicellulose bezogen auf das Gesamtgewicht der Begleitsubstanzen (iii) im Bereich von 70 bis 100 Gew.-%, vorzugsweise im Bereich von 88 bis 99,9 Gew.-% und/oder die Gesamtmenge an Lignin bezogen auf das Ge-samtgewicht der Begleitsubstanzen (iii) im Bereich bis 30 Gew.-%, vorzugsweise im Bereich von 0,1 bis 12 Gew.-% liegt,

wobei die Mischung herstellbar ist durch ein Verfahren umfassend die Schritte eines erfindungsgemäßen Verfahrens wie hierin beschrieben.

Nähere Ausführungen und bevorzugte Ausgestaltungen einer erfindungsgemäß einzusetzenden Aromastoffinklusionscellulose werden weiter unten erläutert.

Inklusionscellulosen mit niederen Fettsäuren (Essigsäure, Propionsäure, Buttersäure) finden seit langer Zeit Einsatz in der Textilindustrie als eine Möglichkeit der Celluloseaktivierung. Die Bildung der Einschlusskomplexe verringert die Kristallinität und steigert die spezifische Oberfläche der Cellulose. Diese Modifikation macht Cellulose zugänglicher für Vernetzungs- und andere spezielle Finishingreagenzien. Beispielsweise lässt sich die Reaktionsgeschwindigkeit der Celluloseacetylierung durch Bildung von Einschlusskomplexen mit den genannten Fettsäuren beschleunigen. Nach dem wässrigen Vorquellen der Cellulose wird das Wasser durch die niederen Fettsäuren ersetzt. Anschließend wird die Acetylierungsreaktion durchgeführt (Staudinger H.; Eicher, T.: Über die Quellung resp. Inclusion der Cellulose mit niederen Fettsäuren, Makromol. Chem. 10, 254-260 (1953)). Eine erfindungsgemäße Aromastoffinklusionscellulose wird dort jedoch nicht beschrieben.

Staudinger und Döhle stellen gemäß J. Prakt. Chem., 161, 219 (1942) eine Reihe von Lösungsmittel-Inklusionscellulosen dar, um die Cellulose auf die Acetylierungsreaktion vorzubereiten. Eine erfindungsgemäße Aromastoffinklusionscellulose wird auch dort nicht beschrieben.

Wade und Creely beschreiben in Textile Research Journal (1974), 44(12)), 941-5 ("Structure and stability of chloroform-included cotton cellulose") Einschlusskomplexe von Chloroform bzw. Tetrachlormethan in Baumwollcellulose, wobei 20% Chloroform bzw. 7% Tetrachlormethan inkludiert werden können. Zur Herstellung wird Baumwolle 30 Minuten in flüssigem Ammoniak gequollen und anschließend in eine Mischung aus flüssigem Ammoniak und Chloroform bzw. Tetrachlormethan getaucht. Der Ammoniak wird entfernt. Die Komplexe weisen eine geringe Stabilität auf. Eine erfindungsgemäß vorliegende Aromastoffinklusionscellulose wird dort nicht beschrieben.

Zeronian (Zeronian, S.H.: Crystallinity Determinations on Chloroform-Included Cellulose; Textile Research Journal, Jan. 1964; p. 83 seq.) beschreibt für den Einschluss von Chloroform eine Methode unter Verwendung der intermediären, indirekten Quellsubstanz Ethanol. In einem ersten Schritt wird die Cellulose für 18 Stunden in Wasser gequollen. Das Wasser wird dann über einen Zeitraum von 24 Stunden mit sieben Portionen Ethanol sukzessiv ersetzt. Im letzten Schritt erfolgt über einen Zeitraum von 24 Stunden durch sukzessiven Zusatz von Chloroform in sieben Portionen die Inklusion des Chloroforms. Nach dem Trocknen wird ein Komplex mit einem Chloroformgehalt von 4,0 % erhalten. Inklusionscellulosen mit Aromastoffen werden jedoch nicht beschrieben. Bei dem Verfahren werden enorme Mengen Ethanol (280 kg Ethanol / kg Cellulose) verbraucht und die Verluste an Chloroform betragen mehr als 99 %. Das Verfahren ist folglich nicht wirtschaftlich.

WO 2006/062089 beschreibt hoch dispergierbare Cellulosekomplexe aus einer hydrophilen Substanz, einem wasserlöslichen Polymer und wasserdispergierbarer Cellulose. Das wasserlösliche Polymer kann ausgewählt werden aus Gummi Arabicum, Xanthan, Natrium-Carboxymethylcellulose, Gellan, und unverdaulichem Dextrin. Die hydrophile Substanz hat eine hohe Löslichkeit in kaltem Wasser, ist niedrigviskos und ist bei Raumtemperatur fest. Beispiele der hydrophilen Substanzen sind Dextrine, wasserlösliche Zucker und Zuckeralkohole. Die Herstellung der Komplexe erfolgt in wässriger Dispersion bzw. Lösung. Die beschriebenen Komplexe können mit Aromen gemischt werden, wobei jedoch, wie nachfolgend in den vergleichenden Beispielen und davon insbesondere in Beispiel 33 dargelegt wird, keine Inklusionscellulosen mit Aromastoffen gebildet werden.

US 2004/137138 beschreibt Komplexe aus Cellulose, Johannisbrotkernmehl, Xanthan und einem hydrophilen Material. Das hydrophile Material hat eine hohe Löslichkeit in Wasser und beeinflusst kaum die Viskosität. Die hydrophilen Materialien werden ausgewählt aus Dextrinen, wasserlöslichen Zuckern, Zuckeralkoholen und niedrigviskosen wasserlöslichen Diätfasern. Die Komplexe bilden sich bei einer Nassvermahlung nur in Gegenwart größerer Mengen Wasser und während der anschließenden Trocknung. Die Komplexe aus Cellulose, Johannisbrotkernmehl, Xanthan und einem hydrophilen Material werden in Lebensmitteln eingesetzt, wobei den Lebensmitteln auch Aromen zugesetzt werden können. Dabei entstehen jedoch gemäß eigenen Untersuchungen weder in feuchten noch in trockenen Lebensmitteln Aromastoffinklusionscellulosen, wie nachfolgend in den vergleichenden Beispielen 4, 21 und 33 gezeigt wird.

Eine erfindungsgemäß einzusetzende Aromastoffinklusionscellulose (wie oben beschrieben) ist eine Cellulose, in die ein, zwei, drei, vier oder mehr Aromastoffe (mit Ausnahme von Alkansäuren mit 1 bis 4 C-Atomen) inkludiert sind. Im Rahmen der vorliegenden Erfindung gilt generell die Maßgabe, dass die inkludierten bzw. die in Cellulose zu inkludierenden Aromastoffe keine Alkansäuren mit 1 bis 4 C-Atomen sind.

Die erfindungsgemäß einzusetzende Aromastoffinklusionscellulose ist eine Einschlussverbindung im Sinne der folgenden Definition: Eine Einschlussverbindung besteht aus sogenannten Wirt- (hier: Cellulose) und Gastsubstanzen (hier: Aromastoff(e)). Die Wirtsubstanzen stellen auf molekularer Ebene Hohlräume zur Verfügung, in die Gastsubstanzen eingelagert (inkludiert) werden. Der Hohlraum kann im Molekül der Wirtsubstanz selbst (intramolekulare Einschlussverbindung) oder im Verband der Wirtmoleküle (z.B. Kristallgitter) vorhanden sein. Das Wesen der Einschlussverbindungen besteht darin, dass die Gastsubstanzen nicht durch Haupt- oder Nebenvalenzbindungen, sondern hauptsächlich durch räumliche Vergatterung in der Wirtsubstanz integriert vorliegen. Eine Möglichkeit, inkludierte Aromastoffe und nicht inkludierte (beispielsweise an die Oberfläche gebundene) Aromastoffe im Rahmen der vorliegenden Erfindung zu unterscheiden, wird weiter unten erläutert.

Cellulose ist ein aus beta-1,4-glycosidisch verknüpften Glukoserestmolekülen (Anhydroglucopyranoseeinheiten) aufgebautes lineares Polysaccharid. Wegen der beta-Position der OH- Gruppe am C-1 Atom sind benachbarte Glukoserestmoleküle um 180° verdreht. Die kleinste wiederkehrende Einheit wird als Cellobiose bezeichnet. Cellulose ist ein wichtiger Bestandteil pflanzlicher Zellwände und das am meisten verbreitete und bedeutendste Biopolymer in der Natur. In den Pflanzenfasern ist Cellulose hierarchisch strukturiert. So finden sich in einer Pflanzenfaser zahlreiche Cellulose-Makrofibrillen, die wiederum mehrere Mikrofibrillen umfassen. Die Mikrofibrillen der Cellulose umfassen wiederum mehrere Elementarfibrillen, welche ihrerseits wiederum aus mehreren Celluloseketten (einzelnen Cellulosemolekülen) bestehen. Bei Cellulose als Wirtsubstanz einer Einschlussverbindung findet möglicherweise ein Einschluss im Verband der Wirtmoleküle statt, wobei Untersuchungen annehmen lassen, dass die Gastsubstanzen (hier: Aromastoff(e)) in Hohlräume (vermutlich sowohl in amorphen als auch in kristallinen Bereichen) eingelagert werden, die zwischen Celluloseketten vorliegen. Man nimmt gegenwärtig an, dass diese Einlagerung insbesondere innerhalb der Elementarfibrillen erfolgt, wobei auch (zusätzlich) ein Einschluss zwischen den Elementarfibrillen, Mikrofibrillen und/oder Makrofibrillen erfolgen kann. Es ist zu beachten, dass die vorstehenden Überlegungen vorläufiger Art sind und nicht als abschließend gesichert gelten können.

Je nach Pflanzenart ist Cellulose mit unterschiedlich hohen Anteilen an Lignin und Hemicellulose (Polyosen) vergesellschaftet. Lignin und Hemicellulose werden daher häufig als Begleitsubstanzen der Cellulose bezeichnet.

Der Begriff Aromastoffe wird in der vorliegenden Erfindung im Sinne der Richtlinie des Rates 88/388/EWG vom 22. Juni 1988, veröffentlicht im ABI. L 184 vom 15. Juli 1988, S. 61 verwendet. Aromastoffe sind nach dieser Richtlinie:

"Definierte chemische Stoffe mit Aromaeigenschaften, die wie folgt gewonnen werden:

i) durch geeignete physikalische Verfahren (einschließlich Destillation und Extraktion mit Lösungsmitteln) oder enzymatische bzw. mikrobiologische Verfahren aus Stoffen pflanzlichen oder tierischen Ursprungs, die als solche verwendet oder mittels herkömmlicher Lebensmittelzubereitungsverfahren (einschließlich Trocknen, Rösten und Fermentierung) für den menschlichen Verzehr verarbeitet werden;

ii) durch chemische Synthese oder durch Isolierung mit chemischen Verfahren, wobei ihre chemische Beschaffenheit mit einer Substanz identisch ist, die in einem Stoff pflanzlichen oder tierischen Ursprungs im Sinne von Ziffer i) natürlich vorkommt;

iii) durch chemische Synthese, wobei jedoch ihre chemische Beschaffenheit nicht mit einer Substanz identisch ist, die in einem Stoff pflanzlichen oder tierischen Ursprungs im Sinne von Ziffer i) natürlich vorkommt."

Aromastoffe im Sinne dieser Definition kommen insbesondere vor in folgenden Extrakten, etherischen Ölen, Concretes, Absolues, Resinen, Resinoiden, Balsamen bzw. Tinkturen: Amyrisöl; Angelicasamenöl; Angelicawurzelöl; Anisöl; Baldrianöl; Basilikumöl; Baummoos-Absolue; Bayöl; Beifußöl; Benzoeresin; Bergamotteöl; Bienenwachs-Absolue; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolue; Castoreum-Absolue; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eichenmoos-Absolue; Elemiöl; Estragonöl; Eucalyptus-citriodora-Öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl; Helichrysum-Absolue; Helichrysumöl; Ingweröl; Iriswurzel-Absolue; Iriswurzelöl; Jasmin-Absolue; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolue; Labdanumresin; Lavandin-Absolue; Lavandinöl; Lavendel-Absolue; Lavendelöl; Lemongrasöl; Liebstocköl; Limettenöl destilliert; Limettenöl gepresst; Linaloeöl; Litsea-cubeba-Öl; Lorbeerblätteröl; Macisöl; Majoranöl; Mandarinenöl; Massoirindenöl; Mimosa-Absolue; Moschuskörneröl; Moschustinktur; Muskateller-Salbei-Öl;

Muskatnußöl; Myrrhen-Absolue; Myrrhenöl; Myrtenöl; Nelkenblätteröl; Nelkenblütenöl; Neroliöl; Olibanum-Absolue; Olibanumöl; Opopanaxöl; Orangenblüten-Absolue; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolue; Rosenholzöl; Rosenöl; Rosmarinöl; Salbeiöl dalmatinisch; Salbeiöl spanisch; Selleriesamenöl; Spiklavendelöl; Sternanisöl; Styraxöl; Tagetesöl; Tannennadelöl; Teebaumöl; Terpentinöl; Thymianöl; Tolubalsam; Tonka-Absolue; Tuberosen-Absolue; Vanilleextrakt; Veilchenblätter-Absolue; Verbenaöl; Vetiveröl; Wacholderbeeröl; Weinhefenöl; Wermutöl; Wintergrünöl; Ylangöl; Ysopöl; Zibet-Absolue; Zimtblätteröl; Zimtrindenöl.

Beispiele erfindungsgemäß einzusetzender Aromastoffe sind aufgelistet in den Abschnitten 1 bis 3 der Entscheidung der Kommission vom 23. Februar 1999 über ein Verzeichnis der in oder auf Lebensmitteln verwendeten Aromastoffe, das gemäß Verordnung (EG) Nr. 2232/96 des Europäischen Parlaments und des Rates vom 28. Oktober 1996 erstellt wurde (1999/217/EG), einzusehen im Amtsblatt der Europäischen Gemeinschaften L 84/1 vom 27. März 1999 sowie im Anhang der Entscheidung der Kommission vom 18. Juli 2000 zur Änderung der Entscheidung 1999/217/EG der Kommission über ein Verzeichnis der in oder auf Lebensmitteln verwendeten Aromastoffe (2000/489/EG), einzusehen im Amtsblatt der Europäischen Gemeinschaften L 197/53 vom 3. August 2000.

Im Zusammenhang mit der vorliegenden Erfindung werden vorzugsweise lipophile Aromastoffe in die Cellulose inkludiert. Lipophile Aromastoffe lassen sich jedoch nicht durch einfaches Tauchen in Cellulose einlagern, da ihnen die Fähigkeit zur Quellung nicht bereits vorgequollener Cellulose fehlt, d.h. sie können nur in eine vorgequollene Cellulose eingelagert (inkludiert) werden. Erfindungsgemäße Verfahren zur Herstellung solch erfindungsgemäßer Aromastoffinklusionscellulosen werden weiter unten beschrieben.

Unter lipophilen Aromastoffen werden im Rahmen des vorliegenden Textes insbesondere Aromastoffe mit einem $logP_{OW}$ von größer als 1,0 verstanden.

Unter dem $logP_{OW}$ ist der dekadische Logarithmus des Verteilungskoeffizienten eines Stoffes, hier des jeweiligen Aromastoffes, betreffend seine Verteilung zwischen 1-Octanol und Wasser zu verstehen. Der Koeffizient gibt das Verhältnis der Anteile eines Stoffes in den beiden kontaktierten Phasen 1-Octanol (apolar) und Wasser (polar) im Gleichgewicht an. Der Koeffizient $P_{OW}$ steigt also mit zunehmender Fettlöslichkeit. Demnach sind Verbindungen mit größerem $logP_{OW}$ lipophiler als solche mit kleinerem $logP_{OW}$. Sofern im Rahmen des vorliegenden Textes $logP_{OW}$-Werte angegeben sind, beziehen sich diese auf Messungen bei einer Temperatur von 25 °C.

Demnach ist gemäß der vorliegenden Erfindung eine Aromastoffinklusionscellulose bevorzugt, wobei der eine bzw. einer, mehrere oder sämtliche der inkludierten Aromastoffe einen $logP_{OW}$ größer als 1,0 besitzen. Weiter bevorzugt besitzt der eine bzw. einer, mehrere oder sämtliche der inkludierten Aromastoffe einen $logP_{OW}$ größer als 1,5, vorzugsweise größer als 2,0, weiter bevorzugt größer als 3,0 und besonders bevorzugt größer als 4,0.

Besonders bevorzugt ist eine Aromastoffinklusionscellulose (wie oben beschrieben), wobei der Gesamtanteil an inkludierten Aromastoffen mit $logP_{OW}$ größer als 1,0 bezogen auf die Gesamtmenge an inkludierten Aromastoffen vorzugsweise wenigstens 10 %, bevorzugt wenigstens 30 % und besonders bevorzugt wenigstens 50 % beträgt.

Die vorangehend beschriebenen Aromastoffinklusionscellulosen (und insbesondere die weiter unten beschriebenen bevorzugten Ausgestaltungen davon) weisen zahlreiche Vorteile auf. So sind die inkludierten Aromastoffe darin beispielsweise vor Verflüchtigung, Oxidation und Aromastoff-Aromastoff-Reaktionen besonders geschützt. Die Inklusion der Aromastoffe ermöglicht vorteilhafterweise insbesondere einen Schutz vor negativen Einflüssen wie Verflüchtigung, Verdampfen, Verdunsten, Wasserdampfdestillation, UV-Strahlen, thermische Belastung, Druck und Oxidation. Weitere Vorteile der erfindungsgemäßen Aromastoffinklusionscellulosen sind, dass Cellulose wegen der weiten Verbreitung in der Natur praktisch überall und in sehr großen Mengen verfügbar ist, nicht kariogen wirkt, als pflanzlicher Rohstoff auch für vegetarische Ernährung geeignet ist, einen neutralen Eigengeschmack aufweist, regulierend auf die Verdauung wirkt und weitere positive gesundheitliche Wirkungen diskutiert werden. Bei allen genannten Vorteilen ist die Verwendung von Cellulose sehr kostengünstig. In Kombination mit dem erfindungsgemäßen Verfahren (siehe unten) kann die Stabilisierung von Aromastoffen vorteilhafterweise ohne Zusatz von Antioxidantien erzielt werden.

Die erfindungsgemäß einzusetzenden Aromastoffinklusionscellulosen ermöglichen eine besonders gute Stabilisierung der inkludierten Aromastoffe. Die Aromastoffinklusionscellulose können vorteilhafterweise über einen längeren Zeitraum hinweg ohne großen Aromastoff-Verlust gelagert werden. Das Aromaprofil der Aromastoffinklusionscellulosen kann daher über einen längeren Zeitraum hinweg konstant gehalten werden.

Zudem wird vorteilhafterweise eine hohe Stabilität während der Lebensmittelverarbeitung bzw. -zubereitung gewährleistet. Die Aromastoffinclusionscellulosen können deshalb beispielsweise beim Erhitzen, Backen, Braten, Frittieren, Kochen, Dünsten, Schmoren, Grillen, Dämpfen, Pasteurisieren, Sterilisieren, Extrudieren, Conchieren, Aufstreuen, Einstreuen, Einrühren, Mischen (nass/feucht oder trocken), Mixen, Kneten, Aufschäumen, Schmelzen, Erstarren, Trocknen, Dispergieren von Lebensmitteln eingesetzt werden. Dabei können durch die Aromastoffinklusionscellulosen insbesondere Verluste sowie unerwünschte Reaktionen der (inkludierten) Aromastoffe vermindert oder sogar ausgeschlossen werden. Auch während der Lagerung, des Transports und der Bereithaltung fertiger oder halbfertigen Lebensmittel in beispielsweise Kantinen, Restaurants, Cateringunternehmen, Speditionen, Lagerhallen und Supermärkten sowie beim Verbraucher können die Aromastoffinklusionscellulosen zur Stabilisierung der Aromastoffe beitragen. Überraschend ist, dass die Aromastoffinklusionscellulosen, trotz der hohen Stabilität, insbesondere während des Verzehrs die Freisetzung der inkludierten Aromastoffe ermöglichen, so dass diese vom Konsumenten deutlich wahrgenommen werden können. Die Aromastoffinklusionscellulosen sind somit insbesondere für einen "Delivery on demand" geeignet. Auch können die erfindungsgemäßen Aromastoffinklusionscellulosen zur Verlängerung der Aromastofffreisetzung eingesetzt werden, wobei die Anwendung in Kaugummis von besonders großer Bedeutung ist. Zudem kann eine solche Aromastoffinklusionscellulose in Abhängigkeit von den inkludierten Aromastoffen gezielt bei der Lebensmittelverarbeitung eingesetzt werden, um ein Lebensmittel zu aromatisieren oder um unangenehm schmeckende Stoffe zu maskieren. Erfindungsgemäße der Ernährung oder dem Genuss dienende Zubereitungen und Halbfertigwaren werden weiter unten beschrieben.

Ein weiterer Vorteil der Aromastoffinklusionscellulosen ist, dass deren Verkapselungsmittel (Cellulose) zumindest in der Regel keine kariogene Wirkung besitzt. Die Verwendung der Aromastoffinklusionscellulosen empfiehlt sich daher besonders in Kaugummi, Zahnpasta und sonstigen Zahnpflegeprodukten, zahnfreundlichen Hartkaramellen, Weichkaramellen, Dragees, Pastillen und weiteren Anwendungen insbesondere zur Erfrischung des Atems und zur Steigerung bzw. Erhaltung der Mundhygiene.

Zudem eignen sich Aromastoffinklusionscellulosen vorteilhafterweise auch als Mittel oder als Bestandteil eines Mittels zur Anregung der Stimulanz der Darmtätigkeit und somit zur Erhaltung der Darmgesundheit sowie zur Vorbeugung von (Darm-) Krankheiten. Wegen ihrer kalorischen Unverwertbarkeit leisten die Aromastoffinklusionscellulosen zudem keinen Beitrag zur Energieversorgung des Körpers und wegen der zusätzlichen sättigungssteuernden Eigenschaften und Begünstigung der Fettausscheidung können sie demnach helfen, das Entstehen bzw. Fortschreiten von Adipositas und damit in Verbindung stehenden Krankheiten zu vermindern bzw. zu verzögern. Die (in Lebensmittel eingearbeiteten) Aromastoffinklusionscellulosen sind Ballaststoffe und können somit zur Gesunderhaltung des Körpers und zur Steigerung des Wohlbefindens beitragen. Die Aromastoffinklusionscellulosen lassen sich gezielt zur Vorbeugung, Bekämpfung bzw. Abmilderung der genannten sowie weiterer Krankheiten einsetzen. Die Aromastoffinklusionscellulosen werden vorteilhafterweise allenfalls in geringen Mengen vom Körper aufgenommen und müssen daher nicht insulinabhängig verstoffwechselt werden, weshalb sie auch insbesondere in Lebensmitteln für Diabetiker eingesetzt werden können. Die Aromastoffinklusionscellulosen können die Aufnahme von Glucose steuern (insbesondere verzögern), wobei einem schnellen und starken Ansteigen der Glucosekonzentration entgegengewirkt werden kann. Man nimmt gegenwärtig an, dass diese Steuerung durch das Wasserbindungsvermögen der Cellulose erfolgt, wodurch die Viskosität des Nahrungsbreis im Verdauungstrakt erhöht wird und die Glucoseaufnahme folglich verlangsamt wird. Zudem finden möglicherweise Cellulose-Glucose-Interaktionen statt, die ebenfalls die Aufnahme von Glucose verzögern können. Dieser Umstand kann auch zum Wohlbefinden gesunder Menschen beitragen, indem z.B. ein Leistungstief infolge einer übersteigerten Insulinantwort auf sehr schnell resorbierte Kohlenhydrate verringert werden kann, sowie zur Reduzierung eines Heißhungergefühls, welches aufgrund des Übersteuerns der Insulinausschüttung und der dadurch hervorgerufenen zu geringen Glucosekonzentration im Blut auftreten kann.

Die im Rahmen der vorliegenden Erfindung bevorzugt zu verwendenden und damit bevorzugt in Cellulose inkludierten lipophilen Aromastoffe einer Aromastoffinklusionscellulose gehören unterschiedlichen chemischen Gruppen an, wie beispielsweise:

der Gruppe der Kohlenwasserstoffe, wie z.B. 3-Caren; alpha-Pinen; beta-Pinen; alpha-Terpinen; gamma-Terpinen; p-Cymol; Bisabolen; Camphen; Caryophyllen; Cedren; Farnesen; Limonen; Longifolen; Myrcen; Ocimen; Valencen; (E,Z)-1,3,5-Undecatrien;

der Gruppe der aliphatischen Alkohole wie z.B. Hexanol; Octanol; 3-Octanol; 2,6-Dimethyl-heptanol; 2-Methylheptanol, 2-Methyloctanol; (E)-2-Hexenol; (E)- und (Z)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (E,Z)-2,6-Nonadienol; 3,7 Dimethyl-7-methoxyoctan-2-ol; 9-Decenol; 10-Undecenol; 4-Methyl-3-decen-5-ol;

der Gruppe der aliphatischen Aldehyde und deren Acetale wie z. B. Hexanal; Heptanal; Octanal; Nonanal; Decanal; Undecanal; Dodecanal; Tridecanal; 2-Methyloctanal; 2 Methylnonanal; (E)-2-Hexenal; (Z)-4-Heptenal; 2,6-Dimethyl-5-heptenal; 10 Undecenal; (E)-4-Decenal; 2-Dodecenal; 2,6,10-Trimethyl-5,9-undecadienal; Heptanaldiethylacetal; 1,1-Dimethoxy-2,2,5-trimethyl-4-hexen;

der Gruppe der aliphatischen Ketone und deren Oxime wie z.B. 2-Heptanon; 2-Octanon; 3-Octanon; 2-Nonanon; 5-Methyl-3-heptanon; 5-Methyl-3-heptanonoxim; 2,4,4,7-Tetramethyl-6-octen-3-on; der aliphatischen schwefelhaltigen Verbindungen wie z.B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1 Menthen-8-thiol;

der Gruppe der aliphatischen Nitrile wie z.B. 2-Nonensäurenitril; 2-Tridecensäurenitril; 2,12-Tridecadiensäurenitril;

3,7-Dimethyl-2,6-octadiensäurenitril; 3,7-Dimethyl-6-octensäurenitril;

der Gruppe der aliphatischen Carbonsäureester wie z.B. (E)- und (Z)-3-Hexenylformiat; Ethylacetoacetat; Isoamylacetat; Hexylacetat; 3,5,5-Trimethylhexylacetat; 3-Methyl-2-butenylacetat; (E)-2-Hexenylacetat; (E)- und (Z)-3-Hexenylacetat; Octylacetat; 3-Octylacetat; 1-Octen-3-ylacetat; Ethylbutyrat; Butylbutyrat; Isoamylbutyrat; Hexylbutyrat; (E)- und (Z)-3-Hexenylisobutyrat; Hexylcrotonat; Ethylisovalerianat; Ethyl-2-methylpentanoat; Ethylhexanoat; Allylhexanoat; Ethylheptanoat; Allylheptanoat; Ethyloctanoat; Ethyl-(E,Z)-2,4-decadienoat; Methyl-2-octinat; Methyl-2-noninat; Allyl-2-isoamyloxyacetat; Methyl-3,7-dimethyl-2,6-octadienoat;

der Gruppe der acyclischen Terpenalkohole wie z.B. Citronellol; Geraniol; Nerol; Linalool; Lavadulol; Nerolidol; Farnesol; Tetrahydrolinalool; Tetrahydrogeraniol; 2,6 Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol 2,6-Dimethyl-2,5,7-octatrien-1-ol; sowie deren Formiate, Acetate, Propionate, Isobutyrate, Butyrate, Isovalerianate, Pentanoate, Hexanoate, Crotonate, Tiglinate, 3-Methyl-2-butenoate;

der Gruppe der acyclischen Terpenaldehyde und -ketone wie z.B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;

der Gruppe der cyclischen Terpenalkohole wie z.B. Menthol; Isopulegol; alpha-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;

der Gruppe der cyclischen Terpenaldehyde und -ketone wie z.B. Menthon; Isomenthon; 8-Mercaptomenthan-3-on; Carvon; Campher; Fenchon; alpha-Ionon; beta-Ionon; alpha-n-Methylionon; beta-n-Methylionon; alpha-Isomethylionon; beta-Isomethylionon; alpha-Iron; alpha-Damascon; beta-Damascon; beta-Damascenon; delta-Damascon; gamma-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; alpha-Sinensal; beta-Sinensal;

der Gruppe der cyclischen Alkohole wie z.B. 4-tert.-Butylcyclohexanol; 3,3,5-Trimethylcyclo-hexanol; 3-Isocamphylcyclohexanol; 2,6,9-Trimethyl-Z2,Z5,E9-cyclododecatrien-1-ol; 2-Isobutyl-4-methyltetrahydro-2H-pyran-4-ol;

der Gruppe der cycloaliphatischen Alkohole wie z.B. alpha,3,3-Trimethylcyclohexylmethanol; 2 Methyl-4-(2,2,3-trimethyl-3-cyclopent-1-yl)butanol; 2-Methyl-4-(2,2,3-trimethyl-3-cyclopent-1-yl)-2-buten-1-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;

der Gruppe der Ester cycloaliphatischer Carbonsäuren wie z.B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;

der Gruppe der aromatischen Kohlenwasserstoffe wie z.B. Styrol und Diphenylmethan;

der Gruppe der araliphatischen Alkohole wie z.B. Benzylalkohol; 1-Phenylethylalkohol; 2 Phenylethylalkohol; 3-Phenylpropanol; 2-Phenylpropanol; 2-Phenoxyethanol; 2,2 Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;

der Gruppe der Ester von araliphatischen Alkoholen und aliphatischen Carbonsäuren wie z.B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; alpha-Trichlormethylbenzylacetat; alpha,alpha-Dimethylphenylethylacetat; alpha,alpha-Dimethylphenylethylbutyrat; Cinnamylacetat; 2-Phenoxyethylisobutyrat; 4-Methoxybenzylacetat; der araliphatischen Ether wie z.B. 2-Phenylethylmethylether; 2-Phenylethylisoamylether; 2-Phenylethyl-1-ethoxyethylether; Phenylacetaldehyddimethylacetal; Phenylacetaldehyddiethylacetal; Hydratropaaldehyddimethylacetal; Phenylacetaldehydglycerinacetal;

der Gruppe der aromatischen und araliphatischen Aldehyde wie z.B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)propanal; 2-Methyl-3-(4-tert.-butylphenyl)propanal; 3-(4-tert.-Butylphenyl)propanal; Zimtaldehyd; alpha-Butylzimtaldehyd; alpha-Amylzimtaldehyd; alpha-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4 Methylendioxybenzaldehyd; 3,4-Dimethoxybenzaldehyd; 2-Methyl-3-(4-methoxyphenyl)propanal; 2-Methyl-3-(4-methylendioxyphenyl)propanal;

der Gruppe der aromatischen und araliphatischen Ketone wie z.B. Acetophenon; 4-Methylacetophenon; 4-Methoxyacetophenon; 4-tert.-Butyl-2,6-dimethylacetophenon; 4-Phenyl-2-butanon; 4-(4-Hydroxyphenyl)-2-butanon; 1-(2-Naphthalenyl)ethanon; Benzophenon;

der Gruppe der aromatischen und araliphatischen Carbonsäuren und deren Ester wie z.B. Benzoesäure; Phenylessigsäure; Methylbenzoat; Ethylbenzoat; Hexylbenzoat; Benzylbenzoat; Methylphenylacetat; Ethylphenylacetat; Geranylphenylacetat; Phenylethyl-phenylacetat; Methylcinnamat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; Cis-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;

der Gruppe der stickstoffhaltigen aromatischen Verbindungen wie z.B. 2,4,6-Trinitro-1,3-dime-thyl-5-tert.-butylbenzol; 3,5-Dinitro-2,6-dimethyl-4-tert.-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-tert.-butylphenyl)propanal oder 2,4-Dimethyl-3-cyclohe-xen-carbaldehyd; 6-Isopropylchinolin; 6-Isobutylchinolin; 6-sec.-Butylchinolin; Indol; Skatol; 2-Methoxy-3-isopropy-lpyrazin; 2-Isobutyl-3-methoxypyrazin;

der Gruppe der Phenole, Phenylether und Phenylester wie z.B. Estragol; Anethol; Eugenol; Eugenylmethylether; Isoeugenol; Isoeugenylmethylether; Thymol; Carvacrol; Diphenylether; beta-Naphthylmethylether; beta-Naphthylethylether; beta-Naphthylisobutylether; 1,4-Dimethoxybenzol; Eugenylacetat; 2-Methoxy-4-methylphenol; 2 Ethoxy-5-(1-propenyl)phenol; p-Kresylphenylacetat;

der Gruppe der heterocyclischen Verbindungen wie z.B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2 Ethyl-3-hydroxy-4H-pyran-4-on;

der Gruppe der Lactone wie z.B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

Im Rahmen der vorliegenden Erfindung bevorzugt einzusetzende bzw. bevorzugt in Cellulose inkludierte lipophile Aromastoffe mit einem $\log^p_{ow}$ größer als 1,0 sind vorzugsweise ausgewählt aus der Gruppe bestehend aus:

Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Erfindungsgemäß einzusetzende Aromastoffe können im Rahmen der vorliegenden Erfindung auch in Verbindung mit einem oder mehreren Aromalösungsmitteln eingesetzt werden. Eingesetzt werden hierfür vorzugsweise für den Menschen zum Verzehr geeignete Lösungsmittel für Aromastoffe. Bevorzugte Aromalösungsmittel sind insoweit Ethanol, fette Öle, beispielsweise Speiseöle und insbesondere Pflanzenöle wie beispielsweise Borretschöl, Distelöl, Erdnussöl, Haselnussöl, Kokosöl, Kürbiskernöl, Leinöl, Maiskeimöl, Makadamianussöl, Mandelöl, Olivenöl, Pekannussöl, Pistazienkernöl, Rapsöl, Reiskeimöl, Sesamöl, Sojaöl, Sonnenblumennöl, Walnussöl oder Weizenkeimöl, fraktionierte Kokosöle, die hauptsächlich Fettsäurereste mit einer Länge von sechs bis acht Kohlenstoffatomen (C6- bis C8-Fettsäuren) aufweisen, Propylenglykol, Diacetin (Glycerindiacetat), Triacetin (Glycerintriacetat), Benzylalkohol, Triethylcitrat, Ethyllactat, Isopropanol und Glycerin. Die erfindungsgemäß einzusetzenden Aromastoffe werden gemäß einer bevorzugten Ausführung mit einem oder mehreren der vorangehend genannten Aromalösungsmittel gemischt und dann dem erfindungsgemäßen Verfahren zugeführt. Das erfindungsgemäße Verfahren wird weiter unten beschrieben.

Vorzugsweise umfasst oder besteht eine erfindungsgemäß einzusetzende Aromastoffinklusionscellulose, insbesondere eine vorstehend als bevorzugt bezeichnete Aromastoffinklusionscellulose aus

(i) 75 bis 99 Gew.-%, vorzugsweise 75 bis 95 Gew.-% Cellulose und
(ii) insgesamt 1 bis 25 Gew.-%, vorzugsweise 5 bis 25 Gew.-% inkludierten Aromastoffen, mit der Maßgabe, wie durchgängig im Zusammenhang mit der vorliegenden Erfindung, dass die inkludierten Aromastoffe keine Alkansäuren mit 1 bis 4 C-Atomen sind.

Weiter bevorzugt ist eine Aromastoffinklusionscellulose wie vorangehend beschrieben, wobei die Cellulose (i) eine

- (native) Cellulose aus Pflanzen,
insbesondere aus Holz (insbesondere aus Nadelhölzern wie Kiefern, Fichten, Tannen, Lärchen, Douglasien, Pinien oder aus Laubbäumen wie Buchen, Eichen, Linden, Ahorn, Pappeln, Ulmen, Ebereschen, Birken, Kastanien, Kirschbäumen, Apfelbäumen, Eukalyptus), aus Baumwollsamen (insbesondere Baumwolle, Linters), aus Getreide (insbesondere Weizen, Roggen, Hafer, Gerste, Hirse, Mais, Reis, Dinkel, Triticale), aus Bambus oder Zuckerrohr, oder
- eine Cellulose aus Mikroorganismen ist.

Die Gewinnung der Cellulose aus den genannten Quellen ist allgemein im Stand der Technik bekannt.
Vorzugsweise gilt für die Cellulose (i) einer erfindungsgemäß einzusetzenden Aromastoffinklusionscellulose, dass sie vorzugsweise aus Holz, Getreide, Bambus oder Zuckerrohr gewonnen wurde und ganz besonders bevorzugt eine Cellulose aus Getreide (insbesondere Weizen, Roggen, Hafer, Gerste, Hirse, Mais, Reis, Dinkel, Triticale) ist.

Weitere bevorzugte Formen von Cellulose werden weiter unten beschrieben.

Je nach Herkunft und Verarbeitung weist Cellulose einen Polymerisationsgrad von 200 bis 15000 auf. In einer erfindungsgemäßen Aromastoffinklusionscellulose besitzt die Cellulose (i) vorzugsweise einen Polymerisationsgrad im Bereich von 1000 bis 12000, vorzugsweise im Bereich von 1500 bis 8000.

Die Cellulose (i) einer erfindungsgemäß einzusetzenden Aromastoffinklusionscellulose weist vorzugsweise einen geringen Substitutionsgrad auf. Unter dem Begriff Substitutionsgrad wird im Rahmen des vorliegenden Textes die durchschnittliche Anzahl der durch organische Gruppen substituierten Hydroxylgruppen pro Glucoserestmolekül verstanden.

In einer erfindungsgemäß einzusetzenden, vorzugsweise einer vorstehend als bevorzugt bezeichneten Aromastoffinklusionscellulose besitzt die Cellulose (i) vorzugsweise einen Substitutionsgrad von kleiner als 0,5, vorzugsweise kleiner als 0,1, besonders bevorzugt kleiner als 0,015.

Insbesondere für die erfindungsgemäße Anwendung in Lebensmitteln ist es erfahrungsgemäß von Vorteil, wenn Cellulose kurze Faserlängen aufweist (für erfindungsgemäße der Ernährung oder dem Genuss dienende Zubereitungen und Halbfertigwaren umfassend erfindungsgemäß einzusetzende Aromastoffinklusionscellulosen siehe unten). Die Faserlänge der Cellulose in den Aromastoffinklusionscellulosen beträgt vorzugsweise 0,1 bis 5000 $\mu$m, weiter bevorzugt 1,0 bis 500 $\mu$m, besonders bevorzugt 5,0 bis 150 $\mu$m. Die Faserdicke beträgt vorzugsweise 0,5 bis 80 $\mu$m, weiter bevorzugt 1,0 bis 50 $\mu$m und besonders bevorzugt 1,0 bis 30 $\mu$m.

Dementsprechend ist eine erfindungsgemäß einzusetzende Aromastoffinklusionscellulose, insbesondere eine vorangehend als bevorzugt bezeichnete Aromastoffinklusionscellulose besonders bevorzugt, wobei die Cellulose (i) eine Faserlänge von 0,1 bis 5000 $\mu$m, vorzugsweise von 1,0 bis 500 $\mu$m, besonders bevorzugt von 5,0 bis 150 $\mu$m besitzt.

Bevorzugt ist eine Aromastoffinklusionscellulose, wobei die Cellulose (i) eine Faserdicke von 0,5 bis 80 $\mu$m, vorzugsweise von 1,0 bis 50 $\mu$m, besonders bevorzugt von 1,0 bis 30 $\mu$m besitzt.

Die Einstellung der Cellulosefasergröße, d.h. der Faserlänge und -dicke kann vor oder nach Inkludieren von Aromastoff in die Cellulose, d.h. vor oder nach Durchführung eines erfindungsgemäßen Verfahrens erfolgen (für das erfindungsgemäße Herstellungsverfahren siehe unten).

Wie oben erwähnt, kommt Cellulose in Pflanzen in der Regel gemeinsam mit den Begleitsubstanzen Lignin und Hemicellulosen (Polyosen) vor. Üblicherweise liegen Cellulose, Lignin und Hemicellulose in der Pflanze in enger physikalischer Bindung vor und dienen dort als Gerüstsubstanzen. Der Begriff "Hemicellulose" bezeichnet eine Gruppe uneinheitlicher pflanzlicher Polysaccharide, die aus Pentosen, Hexosen sowie Uronsäuren bestehen. Hemicellulosen sind überwiegend aus den monomeren Bausteinen D-Glucose, D-Mannose, D-Galactose, D-Xylose, L-Arabinose, L-Rhamnose, D-Glucuronsäure sowie 4-O-Methyl-D-Glucuronsäure zusammengesetzt und besitzen in der Regel einen relativ geringen Polymerisationsgrad von bis zu 200. Hemicellulosen werden in die Typen Galactoglucomannane, Arabinoglucuronoxylane, Glucuronoxylane und Glucomannane eingeteilt. Im Rahmen des vorliegenden Textes bezeichnet der Begriff "Hemicellulose" also jeweils die Gruppe voranstehend beschriebener Polysaccharide einzeln oder in Mischung miteinander, d.h. unter "Hemicellulose" kann sowohl ein bestimmtes dieser Polysaccharide als auch eine Mischung unterschiedlicher Polysaccharide zu verstehen sein.

Wie oben erwähnt, betrifft die vorliegende Erfindung insbesondere eine nach einem hierin beschriebenen Verfahren herstellbare Mischung, umfassend oder bestehend aus (i+ii) erfindungsgemäßer Aromastoffinklusionscellulose (wie oben beschrieben) sowie (iii) Begleitsubstanzen, wobei die Begleitsubstanzen (iii) ausgewählt sind aus der Gruppe bestehend aus Hemicellulose und Lignin,

die Gesamtmenge an Hemicellulose bezogen auf das Gesamtgewicht der Begleitsubstanzen (iii) im Bereich von 70 bis 100 Gew.-%, vorzugsweise im Bereich von 88 bis 99,9 Gew.-% und/oder die Gesamtmenge an Lignin bezogen auf das Gesamtgewicht der Begleitsubstanzen (iii) im Bereich bis 30 Gew.-%, vorzugsweise im Bereich von 0,1 bis 12 Gew.-% liegt.

Als weiteren Bestandteil enthält eine solche Mischung optional (iv) Wasser.

Im Rahmen des vorliegenden Textes sind unter Begleitsubstanzen insbesondere Lignin und/oder Hemicellulose (wie oben beschrieben) zu verstehen. Das Wasser (iv) umfasst dabei sowohl - sofern vorhanden - den Wassergehalt der Cellulose, als auch in der erfindungsgemäßen Mischung zusätzlich enthaltenes Wasser.

Vorzugsweise umfasst oder besteht eine erfindungsgemäße Mischung (wie oben beschrieben) aus

(i+ii) 70 bis 99,8 Gew.-% an erfindungsgemäßer Aromastoffinklusionscellulose (wie oben beschrieben) sowie
(iii) insgesamt 0,1 bis 30 Gew.-%, vorzugsweise 15 bis 30 Gew.-% an Begleitsubstanzen sowie optional
(iv) 0,1 bis 15 Gew.-%, vorzugsweise 1 bis 10 Gew.-% Wasser,

jeweils bezogen auf das Gesamtgewicht der Mischung.

Neben den oben genannten Cellulose-Quellen bzw. Cellulosen (native, gegebenenfalls gereinigte Cellulose (mit hohem Reinheitsgrad) oder Cellulose in Mischung mit Begleitsubstanzen aus Pflanzen; Cellulose aus Mikroorganismen) können für die Zwecke der vorliegenden Erfindung auch weitere Cellulosen vorteilhaft verwendet werden und daher in einer Aromastoffinklusionscellulose enthalten sein, wie beispielsweise modifizierte Cellulosen, insbesondere mit Säuren (z.B. Salzsäure) oder Basen (z.B. Natriumhydroxid, Kaliumhydroxid, flüssigem Ammoniak) oder zuerst mit Säuren und anschließend mit Basen bzw. zuerst mit Basen und anschließend mit Säuren behandelte Cellulosen wie mikrokristalline Cellulose, mercerisierte Cellulose oder auch regenerierte Cellulose sowie Pulvercellulose.

Besonders vorteilhaft und daher besonders bevorzugter Bestandteil einer erfindungsgemäß einzusetzenden Aromastoffinklusionscellulose bzw. einer wie oben beschriebenen erfindungsgemäßen Mischung ist eine mit einer oder mehreren Basen, insbesondere eine mit NaOH (vorzugsweise mit einer Konzentration von 10 bis 15 % oder höher) behandelte Cellulose. Cellulose geht bei einer solchen Behandlung in die Form Cellulose II über. Wie vorangehend erwähnt, kann die mit einer oder mehreren Basen behandelte Cellulose anschließend mit einer oder mehreren Säuren neutralisiert werden (die Form Cellulose II bleibt dabei erhalten). Durch erfindungsgemäß einzusetzende Aromastoffinklusionscellulosen, umfassend eine Cellulose (i), wobei die Cellulose eine Cellulose II ist, wird vorteilhafterweise eine besonders hohe Oxidationsstabilität inkludierter Aromastoffe erreicht.

Besonders bevorzugt ist demnach eine Aromastoffinklusionscellulose, vorzugsweise eine vorangehend als bevorzugt beschriebene Aromastoffinklusionscellulose, wobei die Cellulose (i) eine Cellulose II ist. Insbesondere ist die Cellulose (i) vorzugsweise eine mit einer oder mehreren Basen, vorzugsweise eine mit NaOH behandelte Cellulose. Besonders bevorzugt ist folglich auch eine erfindungsgemäße Mischung (wie vorangehend beschrieben) umfassend eine solche Aromastoffinklusionscellulose.

Bevorzugt wird eine mit einer oder mehreren Basen behandelte Cellulose vor Ihrer Verwendung als Bestandteil einer erfindungsgemäß einzusetzenden Aromastoffinklusionscellulose mit Wasser ausgewaschen.

Durch Verwendung einer solchen modifizierten Cellulose im Rahmen der vorliegenden Erfindung wird vorteilhafterweise eine besonders hohe Oxidationsstabilität inkludierter Aromastoffe erreicht.

Prinzipiell geeignete kristalline Modifikationen der erfindungsgemäß zu verwendenden bzw. enthaltenen Cellulosen sind z.B. Cellulose I (native Cellulose), Cellulose II, Cellulose III, Cellulose IV oder nichtkristalline (amorphe) Cellulose, wobei Cellulose II wie vorangehend erläutert besonders bevorzugt ist.

Der Begriff "Cellulose" umfasst im Rahmen des vorliegenden Textes sämtliche der genannten Cellulose-Typen, sofern nicht im Einzelfall etwas anderes angegeben ist.

Ein nächster Aspekt der vorliegenden Erfindung betrifft ein Verfahren zur Herstellung einer Aromastoffinklusionscellulose, umfassend die folgenden Schritte:

(I) Inkludieren eines oder mehrerer primärer Quellmittel (A) in Cellulose;
(III) teilweises oder vollständiges Ersetzen inkludierten Quellmittels durch einen, zwei, drei, vier oder mehr Aromastoffe, mit der Maßgabe, dass die Aromastoffe keine Alkansäuren mit 1 bis 4 C-Atomen sind,
so dass die Aromastoffe in die Cellulose inkludiert werden,

wobei (a) vorzugsweise in Schritt (III) inkludiertes Quellmittel nur teilweise ersetzt wird und das Verfahren zusätzlich den folgenden Schritt umfasst:

(IV) Entfernen nicht durch Aromastoffe ersetzten, inkludierten Quellmittels und/oder

wobei (b) das Verfahren optional zusätzlich den folgenden Schritt umfasst:

(II) teilweises oder vollständiges Ersetzen inkludierten primären Quellmittels (A) durch ein oder mehrere sekundäre Quellmittel (B), so dass diese in die Cellulose inkludiert werden,

sowie anschließend optional den Schritt:

(IIb) teilweises oder vollständiges Ersetzen in Cellulose inkludierten sekundären Quellmittels (B) durch ein oder mehrere weitere sekundäre Quellmittel (B) sowie gegebenenfalls Wiederholung dieses Schrittes,

wobei in Schritt (I) die Cellulose in Mischung mit Hemicellulose und/oder Lignin vorliegt, wobei

- der Anteil an Hemicellulose bezogen auf das Gesamtgewicht von Cellulose, Hemicellulose und Lignin 0,001 bis 80 Gew.-%, bevorzugt 5 bis 50 Gew.-%, besonders bevorzugt 15 bis 40 Gew.-% beträgt, und/oder

- der Anteil an Lignin bezogen auf das Gesamtgewicht von Cellulose, Hemicellulose und Lignin 0,01 bis 10 Gew.-%,

bevorzugt 0,1 bis 8 Gew.-% und besonders bevorzugt 1 bis 7 Gew.-% beträgt,

wobei

für den Fall, dass das Verfahren Schritt (II) umfasst das bzw. eines, mehrere oder sämtliche der primären Quellmittel (A) ausgewählt sind aus der Gruppe (a1) bestehend aus Wasser, Glycerin, Propylenglycol, Ameisensäure, Ammoniak, wässrige Lösungen von Metallhydroxiden, insbesondere von Natriumhydroxid und Kaliumhydroxid, und deren Mischungen; vorzugsweise aus der Gruppe bestehend aus Wasser, wässrige Lösungen von Natriumhydroxid und wässrige Lösungen von Kaliumhydroxid,

für den Fall, dass das Verfahren keinen Schritt (II) umfasst, das bzw. eines der primäre(n) Quellmittel (A) Essigsäure ist, wobei das bzw. eines, mehrere oder sämtliche der sekundären Quellmittel (B) ausgewählt sind aus der Gruppe bestehend aus Ethanol, Propanol, Butanol, Buttersäure, Propionsäure und deren Mischungen, vorzugsweise aus der Gruppe bestehend aus Ethanol und Propanol,

und wobei vorzugsweise das bzw. eines, mehrere oder sämtliche der primären Quellmittel (A) und/oder der sekundären Quellmittel (B) einen höheren Dampfdruck besitzen als der bzw. einer, mehrere oder sämtliche der in Schritt (III) eingesetzten Aromastoffe.

Für erfindungsgemäß bevorzugt zu verwendende (a) Aromastoffe und (b) Cellulose gilt das weiter oben Gesagte entsprechend.

Gemäß einer bevorzugten Ausführungsform dieses Verfahrens betrifft die vorliegende Erfindung ein Verfahren zur Herstellung einer Aromastoffinklusionscellulose (wie oben beschrieben), wobei in Schritt (III) inkludiertes Quellmittel nur teilweise ersetzt wird. Dabei umfasst das erfindungsgemäße Verfahren vorzugsweise zusätzlich den folgenden Schritt:

(IV) Entfernen nicht durch Aromastoffe ersetzten, inkludierten Quellmittels.

Weiter bevorzugt ist ein erfindungsgemäßes Verfahren zur Herstellung einer Aromastoffinklusionscellulose (wie oben beschrieben), wobei in Schritt (III) ein Anteil von 50 % oder mehr, vorzugsweise von 80 % oder mehr, besonders bevorzugt von 90 % oder mehr, ganz besonders bevorzugt von 99 % oder mehr der eingesetzten Aromastoffe in die Cellulose inkludiert wird. Den Ausführungen in der vorliegenden Beschreibung und den unten angeführten Beispielen kann der Fachmann die nötigen Kriterien zum Erreichen dieser Werte entnehmen.

Besonders bevorzugt ist ein erfindungsgemäßes Verfahren zur Herstellung einer Aromastoffinklusionscellulose (wie oben beschrieben), das zusätzlich den folgenden Schritt umfasst:

(II) teilweises oder vollständiges Ersetzen inkludierten primären Quellmittels (A) durch ein oder mehrere sekundäre Quellmittel (B), so dass diese in die Cellulose inkludiert werden,

sowie anschließend optional den Schritt:

(IIb) teilweises oder vollständiges Ersetzen in Cellulose inkludierten sekundären Quellmittels (B) durch ein oder mehrere weitere sekundäre Quellmittel (B)

sowie gegebenenfalls Wiederholung dieses Schrittes.

Der Begriff "Quellmittel" bezeichnet im Zusammenhang mit der vorliegenden Erfindung Substanzen, die in die molekulare Struktur von Cellulose eingelagert (d.h. "inkludiert" im Sinne der obigen Definition für Einschlussverbindungen) werden können, mit Ausnahme der im erfindungsgemäßen Verfahren zu verwendenden Aromastoffe; diese werden zwar ebenfalls in Cellulose inkludiert, werden jedoch im Rahmen des vorliegenden Textes nicht als "Quellmittel" bezeichnet.

Der Begriff "primäre Quellmittel" bezeichnet im Rahmen des vorliegenden Textes Substanzen, die sich in die molekulare Struktur nicht vorgequollener Cellulose einlagern können. Die Fähigkeit der primären Quellmittel, sich in Cellulose einlagern zu können, beruht darauf, dass sie in die Cellulosestrukturen eindringen und dort Wasserstoffbrückenbindungen zwischen den OH-Gruppen der Glucoserestmoleküle lösen können. Die Einlagerung (Inklusion) der primären Quellmittel wird im Rahmen des vorliegenden Textes auch als "erste Quellung" der Cellulose bezeichnet. Erfindungsgemäß bevorzugte primäre Quellmittel (A) sind weiter unten genannt.

Der Begriff "sekundäre Quellmittel" bezeichnet im Rahmen des vorliegenden Textes Substanzen, die, wenn in Cellulose inkludiert, in Schritt (III) durch die einzusetzenden bzw. zu inkludierenden Aromastoffe ersetzt werden können. Diese Eigenschaft beruht darauf, dass die sekundären Quellmittel vorteilhafterweise sehr gut, d.h. in einem sehr weiten Konzentrationsbereich, ohne Phasentrennung mit den genannten Aromastoffen gemischt werden können. Weiterhin erhalten die sekundären Quellmittel vorteilhafterweise den Quellzustand der Cellulose und ermöglichen eine bessere Verteilung der Aromastoffe sowie deren Platzierung zwischen den Celluloseketten. Erfindungsgemäß bevorzugte sekundäre Quellmittel (B) sind weiter unten genannt. Der Schritt der Inklusion sekundärer Quellmittel (B) in (vorgequollene) Cellulose wird im Rahmen des vorliegenden Textes als "zweite Quellung" der Cellulose bezeichnet.

Gemäß den vorangehenden Ausführungen wird im Rahmen eines bevorzugten erfindungsgemäßen Verfahrens zur Herstellung einer Aromastoffinklusionscellulose zuerst Cellulose mit einem oder mehreren primären Quellmitteln (A) (vor-)gequollen, d.h. die primären Quellmittel (A) werden in Cellulose inkludiert (Schritt (I)). Danach werden die inkludierten primären Quellmittel (A) gegebenenfalls vorzugsweise teilweise oder vollständig durch sekundäre Quellmittel (B) ersetzt, wodurch wiederum die sekundären Quellmittel (B) in Cellulose inkludiert werden (Schritt (II)). Optional werden die inkludierten sekundären Quellmittel (B) wiederum teilweise oder vollständig durch weitere sekundäre Quellmittel (B) ersetzt (Schritt (IIb)). In einem nächsten Schritt (III) werden die inkludierten Quellmittel, also inkludierte primäre Quellmittel (A) und/oder inkludierte sekundäre Quellmittel (B), teilweise oder vollständig, vorzugsweise möglichst vollständig, durch erfindungsgemäß zu verwendende Aromastoffe ersetzt, so dass diese in Cellulose inkludiert werden. Sofern in Schritt (III) inkludiertes Quellmittel nur teilweise durch Aromastoffe ersetzt wird, erfolgt vorzugsweise ein weiterer Schritt (IV), in dem nicht durch Aromastoffe ersetzte, inkludierte Quellmittel, d.h. verbliebene Mengen inkludierter primärer Quellmittel (A) und/oder inkludierter sekundärer Quellmittel (B), entfernt werden.

Vorzugsweise sind in einem erfindungsgemäßen Verfahren zur Herstellung einer Aromastoffinklusionscellulose, vorzugsweise in einem als bevorzugt bezeichneten Verfahren eines, mehrere oder sämtliche der primären Quellmittel (A) ausgewählt aus der Gruppe (a1) bestehend aus Wasser, Glycerin, Propylenglycol, Ameisensäure, Ammoniak, wässrige Lösungen von Metallhydroxiden, insbesondere von Natriumhydroxid und Kaliumhydroxid, und deren Mischungen; vorzugsweise aus der Gruppe bestehend aus Wasser, wässrige Lösungen von Natriumhydroxid und wässrige Lösungen von Kaliumhydroxid,

oder

der Gruppe (a2) bestehend aus Essigsäure (Eisessig).

Sofern bei dem erfindungsgemäßen Verfahren primäre Quellmittel (A) der Gruppe (a1) verwendet, d.h. in die Cellulose inkludiert werden, werden diese vorzugsweise im Rahmen eines Schrittes (II) (wie oben beschrieben) durch sekundäre Quellmittel (B) ersetzt.

Sofern bei dem erfindungsgemäßen Verfahren primäre Quellmittel (A) der Gruppe (a2) verwendet, d.h. in die Cellulose inkludiert werden, werden diese vorzugsweise entweder zunächst durch sekundäre Quellmittel (B) (siehe Schritt (II)) oder direkt durch einen oder mehrere Aromastoffe (wie oben beschrieben; siehe Schritt (III)) ersetzt. Primäre Quellmittel (A) der Gruppe (a2) eignen sich nämlich vorteilhafterweise besonders gut, um im inkludierten Zustand von den erfindungsgemäß zu verwendenden Aromastoffen ersetzt zu werden, so dass die Aromastoffe in die Cellulose inkludiert werden; primäre Quellmittel der Gruppe (a2) sind somit gleichzeitig auch sekundäre Quellmittel; sie werden auch als universelle Quellmittel bezeichnet.

Dementsprechend betrifft die vorliegende Erfindung vorzugsweise ein Verfahren zur Herstellung einer Aromastoffinklusionscellulose (wie oben beschrieben), wobei

- das Verfahren einen Schritt (II) (wie oben beschrieben) umfasst und das bzw. eines, mehrere oder sämtliche der zu ersetzenden primären Quellmittel (A) ausgewählt sind aus der Gruppe (a1) bestehend aus Wasser, Glycerin, Propylenglycol, Ameisensäure, Ammoniak, wässrige Lösungen von Metallhydroxiden, insbesondere von Natriumhydroxid und Kaliumhydroxid, und deren Mischungen; vorzugsweise aus der Gruppe bestehend aus Wasser, wässrige Lösungen von Natriumhydroxid und wässrige Lösungen von Kaliumhydroxid;
oder
- das Verfahren keinen Schritt (II) (wie oben beschrieben) umfasst und das bzw. eines der primären Quellmittel (A) ausgewählt ist aus der Gruppe (a2) bestehend aus Essigsäure (universelles Quellmittel).

Vorzugsweise ist das bzw. sind eines, mehrere oder sämtliche der sekundären Quellmittel (B) bei einem erfindungsgemäßen Verfahren zur Herstellung einer Aromastoffinklusionscellulose (wie oben beschrieben) ausgewählt aus der Gruppe bestehend aus Ethanol, Propanol, Butanol, Buttersäure, Propionsäure und deren Mischungen; vorzugsweise aus der Gruppe bestehend aus Ethanol und Propanol.

In Schritt (I), d.h. bei der ersten Quellung wird vorzugsweise ein einzelnes primäres Quellmittel (A) der Gruppe (a1), ein Gemisch aus unterschiedlichen primären Quellmitteln (A) der Gruppe (a1), ein einzelnes primäres Quellmittel der Gruppe (a2), ein Gemisch aus einem oder mehreren primären Quellmitteln (A) der Gruppe (a1) und einem primären Quellmitteln (A) der Gruppe (a2) oder ein Gemisch aus einem oder mehreren primären Quellmitteln (A) der Gruppen (a1) und/oder (a2) und einem oder mehreren sekundären Quellmitteln (B), vorzugsweise einem oder mehreren vorangehend als bevorzugt bezeichneten Quellmitteln (B) eingesetzt.

Gemäß einer weiteren Ausführungsform betrifft die vorliegende Erfindung demnach vorzugsweise ein wie oben beschriebenes erfindungsgemäßes Verfahren zur Herstellung einer Aromastoffinklusionscellulose, wobei in Schritt (I) neben einem oder mehreren primären Quellmitteln (A) zudem ein oder mehrere sekundäre Quellmittel (B) eingesetzt werden. Gemäß dieser Ausführungsform werden die primären und sekundären Quellmittel beide in Schritt (I) zugegeben, die erste Quellung (wie oben beschrieben) erfolgt dann regelmäßig durch die primären Quellmittel (A), d.h. bevor sekundäre Quellmittel (B) in die Cellulose inkludiert werden, werden ein oder mehrere der eingesetzten primären Quellmittel (A) in die Cellulose inkludiert, um die Cellulose dadurch vorzuquellen.

Das Inkludieren eines oder mehrerer Quellmittel in Cellulose im Rahmen eines erfindungsgemäßen Inklusionsschrittes Schritt (I), Schritt (II) bzw. Schritt (IIb) erfolgt vorzugsweise durch direktes Mischen des bzw. der zu inkludierenden Quellmittel und der Cellulose oder indirekt durch Dämpfen oder Kondensation des bzw. der Quellmittel an die Cellulose. Details zu diesen Methoden werden weiter unten beschrieben.

Vorzugsweise sind die verwendeten zu inkludierenden Quellmittel (A) und/oder (B) flüchtige, besonders bevorzugt leicht flüchtige Substanzen.

Vorzugsweise ist das erfindungsgemäße Verfahren zur Herstellung einer Aromastoffinklusionscellulose (wie oben beschrieben), wobei das bzw. eines, mehrere oder sämtliche der in den Schritten (I), (II) bzw. (IIb) eingesetzten primären Quellmittel (A) und/oder der sekundären Quellmittel (B) einen höheren Dampfdruck besitzen als der bzw. einer, mehrere oder sämtliche der in Schritt (III) eingesetzten Aromastoffe.

Weiter bevorzugt ist ein erfindungsgemäßes Verfahren ein Verfahren zur Herstellung einer Aromastoffinklusionscellulose (wie oben beschrieben), wobei in einem Schritt ((II) bzw. (IIb) sekundäre Quellmittel (B) eingesetzt werden, die einen höheren Dampfdruck besitzen als der bzw. einer, mehrere oder sämtliche der in Schritt (III) eingesetzten Aromastoffe.

Weiter bevorzugt ist ein Verfahren zur Herstellung einer Aromastoffinklusionscellulose wie vorangehend beschrieben, wobei der eine bzw. einer, mehrere oder sämtliche der in Schritt (III) verwendeten Aromastoffe einen $logP_{OW}$ größer als 1,0, vorzugsweise größer als 1,5, vorzugsweise größer als 2,0, weiter bevorzugt größer als 3 und besonders bevorzugt größer als 4 besitzen.

Besonders bevorzugt ist ein Verfahren zur Herstellung einer Aromastoffinklusionscellulose (wie oben beschrieben), wobei der Gesamtanteil der in Schritt (III) verwendeten Aromastoffe mit $logP_{OW}$ größer als 1,0 bezogen auf die Gesamtmenge der in Schritt (III) verwendeten Aromastoffe vorzugsweise wenigstens 10%, bevorzugt wenigstens 30% und besonders bevorzugt wenigstens 50% beträgt.

Weiter bevorzugt ist ein Verfahren zur Herstellung einer Aromastoffinklusionscellulose wie vorangehend beschrieben, wobei die in Schritt (I) verwendete Cellulose eine

- (native) Cellulose aus Pflanzen,
  insbesondere aus Holz (insbesondere aus Nadelhölzern wie Kiefern, Fichten, Tannen, Lärchen, Douglasien, Pinien oder aus Laubbäumen wie Buchen, Eichen, Linden, Ahorn, Pappeln, Ulmen, Ebereschen, Birken, Kastanien, Kirschbäumen, Apfelbäumen, Eukalyptus), aus Baumwollsamen (insbesondere Baumwolle, Linters), aus Getreide (insbesondere Weizen, Roggen, Hafer, Gerste, Hirse, Mais, Reis, Dinkel, Triticale), aus Bambus oder Zuckerrohr, oder
- eine Cellulose aus Mikroorganismen ist.

Besonders bevorzugt ist auch ein erfindungsgemäßes Verfahren zur Herstellung einer Aromastoffinklusionscellulose wie vorangehend beschrieben, wobei die in Schritt (I) verwendete Cellulose eine modifizierte Cellulose, insbesondere eine mit Säuren (z.B. Salzsäure) oder Basen (z.B. Natriumhydroxid, Kaliumhydroxid, flüssigem Ammoniak) oder zuerst mit Säuren und anschließend mit Basen bzw. zuerst mit Basen und anschließend mit Säuren behandelte Cellulose wie oben beschrieben ist.

Vorzugsweise gilt für die erfindungsgemäß in Schritt (I) einzusetzende Cellulose das weiter oben bezüglich der Herkunft bzw. der Quelle der Cellulose und der Cellulose-Typen Gesagte entsprechend.

Ganz besonders bevorzugt ist daher auch ein erfindungsgemäßes Verfahren zur Herstellung einer Aromastoffinklusionscellulose wie vorangehend beschrieben, wobei die in Schritt (I) verwendete Cellulose eine Cellulose II ist.

Insbesondere ist die in Schritt (I) verwendete Cellulose daher analog den vorangehenden Ausführungen vorzugsweise eine Cellulose, die vor Schritt (I) mit einer oder mehreren Basen, insbesondere mit NaOH (vorzugsweise mit einer Konzentration von 10 bis 15 % oder höher) behandelt worden ist. Demnach umfasst ein wie oben beschriebenes erfindungsgemäßes Verfahren zur Herstellung einer Aromastoffinklusionscellulose vor Schritt (I) vorzugsweise den folgenden Schritt:

- Bereitstellen nativer (gegebenenfalls gereinigter) Cellulose und Behandeln der Cellulose mit einer oder mehreren Basen, insbesondere mit NaOH (vorzugsweise mit einer Konzentration von 10 bis 15 % oder höher), so dass die native Cellulose in die Form Cellulose II übergeht.

Weiterhin kann die Cellulose nach der Behandlung mit einer oder mehreren Basen mit einer oder mehreren Säuren neutralisiert werden (wie vorangehend beschrieben).

Wie vorangehend beschrieben, wird eine mit einer oder mehreren Basen behandelte Cellulose vor Ihrer Verwendung in Schritt (I) vorzugsweise mit Wasser ausgewaschen.

Durch Verwendung einer solchen modifizierten Cellulose im Rahmen der vorliegenden Erfindung wird vorteilhafterweise eine besonders hohe Oxidationsstabilität inkludierter Aromastoffe erreicht. Ein erfindungsgemäßes Verfahren zur Herstellung einer Aromastoffinklusionscellulose wie vorangehend beschrieben, wobei die in Schritt (I) verwendete Cellulose (überwiegend) in der Form von Cellulose II vorliegt, ist daher besonders bevorzugt.

Je nach vorangehender Behandlung nativer Cellulose (d.h. der Form Cellulose I) vor Schritt (I) kann diese bei Verwendung in Schritt (I) nicht nur in der Form Cellulose I oder Cellulose II (wie oben beschrieben), sondern auch in Form von Cellulose III oder Cellulose IV vorliegen. Je nach gewählten Reaktionsbedingungen kann die Cellulose im Verlauf des erfindungsgemäßen Verfahrens auch in unterschiedlichen Formen vorliegen bzw. in unterschiedliche Formen der Cellulose übergehen. So kann Cellulose beispielsweise bei Quellen in flüssigem Ammoniak in Cellulose III bzw. bei Quellen in Glycerin bei Temperaturen höher als 200 °C in Cellulose IV übergehen.

Besonders bevorzugt ist ein Verfahren zur Herstellung einer Aromastoffinklusionscellulose wie vorangehend beschrieben, wobei die in Schritt (I) verwendete Cellulose einen Polymerisationsgrad im Bereich von 200 bis 15000, vorzugsweise im Bereich von 1000 bis 12000 und besonders bevorzugt 1500 bis 8000 besitzt.

Weiter bevorzugt ist ein Verfahren zur Herstellung einer Aromastoffinklusionscellulose wie vorangehend beschrieben, wobei die in Schritt (I) verwendete Cellulose einen Substitutionsgrad von kleiner als 0,5, vorzugsweise kleiner als 0,1, besonders bevorzugt kleiner als 0,015 besitzt.

Vorzugsweise gilt für die erfindungsgemäß in Schritt (I) einzusetzende Cellulose das weiter oben für die in einer erfindungsgemäßen Aromastoffinklusionscellulose enthaltene Cellulose bezüglich der Fasergröße (Faserlänge und -dicke) Gesagte entsprechend.

In der Regel enthalten Cellulosen amorphe und kristalline Anteile. Die in der Erfindung verwendeten Cellulosen können generell eine beliebige Kristallinität besitzen. Im Sinne einer höheren Stabilität der erfindungsgemäßen Aromastoffinklusionscellulose besitzt die in Schritt (I) einzusetzende Cellulose bevorzugt eine Kristallinität von 10 bis 90 %, besonders bevorzugt von 15 bis 70 %. Eine hohe Kristallinität weisen insbesondere mikrokristalline Cellulosen oder bakterielle Cellulosen (d.h. aus Bakterien gewonnene Cellulosen) auf. Dem Fachmann bekannte Methoden zur Bestimmung der Kristallinität sind z.B. Röntgendiffraktion und die Bestimmung des Iodsorptionsvermögens.

Besonders bevorzugt ist demnach ein Verfahren zur Herstellung einer Aromastoffinklusionscellulose wie vorangehend beschrieben, wobei die in Schritt (I) verwendete Cellulose eine Kristallinität von 10 bis 90 %, vorzugsweise von 15 bis 70 % besitzt.

Die zu verwendenden Cellulosen können eine beliebige spezifische Oberfläche aufweisen. Bevorzugt beträgt die spezifische Oberfläche, mit Wasser als Sorptionsmedium, jedoch etwa 500000 cm$^2$/g bis etwa 10000000 cm$^2$/g, bevorzugt 1000000 cm$^2$/g bis 7000000 cm$^2$/g und besonders bevorzugt 2000000 cm$^2$/g bis 5000000 cm$^2$/g. Die spezifische Oberfläche sollte hierbei vorzugsweise aus der Wasserdampfsorption nach dem BET-Modell berechnet werden. Bestimmen lässt sich die spezifische Oberfläche durch gravimetrische Verfahren, oder auch in speziellen automatisierten Apparaten wie dem DVS 1000 der Firma Surface Measurement Systems LTD, London.

Weiter bevorzugt ist demnach ein Verfahren zur Herstellung einer Aromastoffinklusionscellulose wie vorangehend beschrieben, wobei die in Schritt (I) eingesetzte Cellulose eine spezifische Oberfläche von 50000 bis 10000000 cm$^2$/g, vorzugsweise von 1000000 bis 7000000 cm$^2$/g, besonders bevorzugt von 2000000 bis 5000000 cm$^2$/g besitzt.

Wie bereits oben erwähnt, können neben Cellulose je nach Herkunft der Cellulose unterschiedliche Arten und Mengen an Hemicellulosen (siehe Beschreibung weiter oben) mit dieser in Mischung vorliegen. Ebenso kann ein geringer Anteil Lignin vorhanden sein. Die Verwendung von in Mischung mit Begleitsubstanzen vorliegenden Cellulosen in Schritt (I) führt, wie weiter unten in den Beispielen dargelegt wird, zu deutlichen Vorteilen gegenüber der Verwendung reiner Cellulose. Cellulosen mit Begleitsubstanzen ermöglichen eine höhere Beladung oder/und eine vereinfachte Herstellung.

Für ein erfindungsgemäßes Verfahren zur Herstellung einer Aromastoffinklusionscellulose gilt (wie oben beschrieben), dass in Schritt (I) die Cellulose in Mischung mit Hemicellulose und/oder Lignin vorliegt, wobei

- der Anteil an Hemicellulose bezogen auf das Gesamtgewicht von Cellulose, Hemicellulose und Lignin 0,001 bis 80 Gew.-%, bevorzugt 5 bis 50 Gew.-%, besonders bevorzugt 15 bis 40 Gew.-% beträgt, und/oder
- der Anteil an Lignin bezogen auf das Gesamtgewicht von Cellulose, Hemicellulose und Lignin 0,01 bis 10 Gew.-%, bevorzugt 0,1 bis 8 Gew.-% und besonders bevorzugt 1 bis 7 Gew.-% beträgt.

Durch die erfindungsgemäße Verarbeitung der Cellulosen können sich die zuvor genannten Eigenschaften verändern, wobei insbesondere eine Verringerung der Menge an Cellulose-Begleitsubstanzen (Hemicellulosen, Lignin) eintreten kann. Beispielsweise führt die Behandlung mit einer oder mehreren Basen und anschließendem Auswaschen mit Wasser (wie vorangehend beschrieben) - wie in eigenen Untersuchungen beobachtet - häufig zu einer Verringerung der Menge an Hemicellulosen.

Das Mischen von (primärem oder sekundärem bzw. gegebenenfalls primärem und sekundärem) Quellmittel und (gegebenenfalls vorgequollener) Cellulose in Schritt (I), (II) oder (IIb) wird vorzugsweise in Abhängigkeit der verwendeten Anteile an Quellmitteln mit geeigneten Ausrüstungen durchgeführt. Bei Verwendung relativ geringer Mengen an Quellmittel (Quellmittelgehalt in der Cellulose-Quellmittel-Mischung etwa 20 bis 70 Gew.-%) weisen die Mischungen in der Regel die Eigenschaften von Feststoffen auf und werden daher bevorzugt mit bekannten Mischern wie beispielsweise Pflugscharmischern und Trommelmischern gemischt. Mittlere Mengen an Quellmitteln (Quellmittelgehalt in der Cellulose-Quellmittel-Mischung etwa 70-80 Gew.-%) resultieren in einer pastösen Konsistenz der Mischung und werden daher bevorzugt mit Ausrüstungen verarbeitet, die hohe Viskositäten handhaben können, wie Kneter und Extruder. Sehr hohe Mengen an Quellmitteln (Quellmittelgehalt in der Cellulose-Quellmittel-Mischung etwa 80 Gew.-% und höher) werden vorzugsweise in einfachen Gefäßen wie beispielsweise Behältern, Tanks und Rührbehältern gegebenenfalls mit Möglichkeiten zur Beheizung verarbeitet. Die genannten Quellmittelgehalte dienen hierbei nur als Richtwerte, da die Herkunft und eine gegebenenfalls erfolgte Vorbehandlung der Cellulose einen erheblichen Einfluss auf die Zustandsform und die Viskosität sowie folglich auf die Auswahl der zu verwendenden Ausrüstungen hat. Dem Fachmann sind die Kriterien für die Auswahl der entsprechenden Ausrüstungen bekannt.

Die Quellzeit, d.h. die Dauer des Mischens bei einem erfindungsgemäßen Inklusionsschritt Schritt (I), Schritt (II) oder Schritt (IIb) wird vom Fachmann jeweils in Abhängigkeit von der verwendeten Cellulose (für bevorzugt zu verwendende Cellulose siehe oben), dem bzw. den Quellmitteln (für bevorzugt zu verwendende Quellmittel siehe oben), den Quellmittelkonzentrationen und dem gewählten Quellverfahren ermittelt. Die jeweils erforderliche Dauer der Quellung (d.h. die Dauer bis zur Inklusion der Quellmittel) ist stark von der Temperatur abhängig. In der Regel führt eine Temperaturerhöhung zur Beschleunigung der Quellung, d.h. der Inklusion der gewünschten Quellmittel. Bei niedrigen Temperaturen (z.B. bei Raumtemperatur) werden für eine ausreichende Quellung der Cellulose erfahrungsgemäß etwa 12 bis 36 Stunden benötigt, während bei hohen Temperaturen (z.B. 70 bis 280 °C) regelmäßig nur einige Minuten (ca. 2 bis 60 Minuten) erforderlich sind. Weitere Temperatur-Zeit-Regimes kann der Fachmann leicht ermitteln.

Bevorzugt erfolgt die Quellung im Rahmen eines erfindungsgemäßen Inklusionsschrittes Schritt (I), Schritt (II) bzw. Schritt (IIb) bei atmosphärischem Druck und bei der Siedetemperatur des bzw. der verwendeten zu inkludierenden Quellmittel oder bei einer Temperatur bis zu 20 °C darunter. Eine Quellung unter Überdruck wird in manchen Fällen vorzugsweise durchgeführt, um die Siedetemperatur des Quellmittels zu erhöhen und die Quellzeit zu verringern. Weiter bevorzugt ist häufig die Verwendung einer Druckentspannung, wobei Quellmittel und Cellulose erst einem hohen Überdruck ausgesetzt werden und der Druck plötzlich entspannt wird. Ferner erfolgt nach einem erfindungsgemäßen Inklusionsschritt Schritt (I), insbesondere bei der Verwendung von Wasser als primärem Quellmittel (A), vorzugsweise ein Gefrieren des Quellmittels. Durch die Volumenzunahme des Quellmittels (insbesondere von Wasser) beim Gefrieren werden die Cellulosefasern durch das inkludierte Quellmittel geweitet und eine folgende Quellung, d.h. eine nachfolgende Inklusion wird dadurch begünstigt. Zudem wird der Quellprozess im Rahmen eines erfindungsgemäßen Inklusionsschrittes (Schritt (I), Schritt (II) bzw. Schritt (IIb)) vorzugsweise durch mechanische Hilfsmittel, wie Rührer, Mischer, Dispergatoren oder Mühlen unterstützt.

Wie vorangehend beschrieben, muss das Inkludieren eines oder mehrerer Quellmittel in Cellulose im Rahmen eines erfindungsgemäßen Inklusionsschrittes (Schritt (I), Schritt (II) bzw. Schritt (IIb)) nicht durch Mischen erfolgen (wie es vorangehend beschrieben ist), sondern kann indirekt durch Dämpfen oder Kondensation des bzw. der Quellmittel an die Cellulose.

Zum Dämpfen wird die (gegebenenfalls vorgequollene) Cellulose vorzugsweise mit einem mit zu inkludierendem Quellmittel angereicherten Gasgemisch behandelt. Vorzugsweise besteht das Gasgemisch aus Dampf, der dem siedenden zu inkludierendem Quellmittel oder einer siedenden Quellmittel-Mischung entweicht. So kann die (gegebenenfalls vorgequollene) Cellulose beispielsweise in Tüchern, Filtern oder auf Sieben lagernd über dem siedenden Quellmittel bzw. der siedenden Quellmittelmischung gedämpft werden. Alternativ wird die (gegebenenfalls vorgequollene) Cellulose vorzugsweise in Destillationsapparaturen oder in Wirbelschichten mit dem Dampf zu inkludierenden Quellmittels bzw. einer Quellmittelmischung behandelt.

Dabei kann eine Kondensation des Dampfes auf den Fasern oder an kälteren Apparaturteilen eintreten, sodass die Quellung vorzugsweise kombiniert durch Quellmittel aus der Gasphase und Quellmittel aus einer flüssigen Phase erfolgt. Hierbei werden vorzugsweise Cellulose-Quellmittelmischungen mit einem Quellmittelgehalt von etwa 40 bis 70 Gew.-% verwendet.

Weiterhin lässt sich in die (gegebenenfalls vorgequollene) Cellulose Quellmittel durch kombiniertes Dämpfen und Kondensieren inkludieren. Hierfür eignen sich vorteilhafterweise bereits relativ geringe Mengen an zu inkludierendem Quellmittel (Quellmittelgehalt in der Cellulose-Quellmittelmischung etwa 20 bis 70 Gew.-%, bevorzugt 50 bis 70 Gew.-%). Hierzu werden Quellmittel und Cellulose vorzugsweise in einem geschlossenen Gefäß erhitzt und anschließend abgekühlt, so dass die Quellung kombiniert, sowohl durch die Gasphase als auch durch die Kondensation des Quellmittels erfolgt.

Für die Durchführung des erfindungsgemäßen Verfahrens sollte für die erste Quellung (Schritt (I)) vorzugsweise eine Mindestmenge an primärem Quellmittel (A) eingesetzt werden. Diese Mindestmenge an primärem Quellmittel (A) ist besonders vorteilhaft bzw. je nach Verfahrensgestaltung sogar notwendig, damit die primären Quellmittel (A) die Funktion der (ersten) Quellung übernehmen können. Unterhalb dieser Mindestmenge besteht die Gefahr, dass diese die Cellulose nicht bzw. nicht ausreichend quellen und unter Umständen sogar das Gegenteil der Quellung, d.h. eine Entquellung hervorrufen bzw. begünstigen, was insbesondere bei dem primären Quellmittel (A) Wasser der Fall ist. Die zu verwendende Menge an primärem Quellmittel (A) beträgt in der Regel zumindest 15 Gew.-%, bevorzugt zumindest 20 Gew.-%, bezogen auf das Gesamtgewicht aus primären Quellmitteln (A) und Cellulose sowie - falls vorhanden - Begleitsubstanzen in der Ausgangsmischung ($M_I$). Besonders bevorzugt ist daher ein Verfahren zur Herstellung einer Aromastoffinklusionscellulose wie vorangehend beschrieben, wobei in Schritt (I) vor Inklusion der Quellmittel der Anteil an primären Quellmitteln (A) in einer Ausgangsmischung ($M_I$) umfassend Cellulose, primäre Quellmittel (A) und zusätzlich Hemicellulose und/oder Lignin wenigstens 20 Gew.-%, vorzugsweise wenigstens 30 Gew.-%, vorzugsweise wenigstens 40 Gew.-% beträgt, bezogen auf das Gesamtgewicht von Cellulose, primäre Quellmittel (A), Hemicellulose und Lignin in der Ausgangsmischung ($M_I$). Zum Erzielen einer höheren Aromastoffbeladung im Produkt, d.h. der Aromastoffinklusionscellulose, ist es in der Regel vorteilhaft, wenigstens 40 Gew.-% an primären Quellmitteln (A) zu verwenden.

Je nach Art, Herkunft und vorangegangener Bearbeitung der erfindungsgemäß einzusetzenden Cellulose kann diese zu Beginn des erfindungsgemäßen Verfahrens unterschiedliche Wassergehalte aufweisen.

Da es sich bei Wasser im Rahmen der vorliegenden Erfindung um ein primäres Quellmittel (A) der Gruppe (a1) handelt (wie oben beschrieben), wird auch der gegebenenfalls zu Beginn von Schritt (I) des erfindungsgemäßen Verfahrens (noch) in der Cellulose enthaltene Wassergehalt der Menge an primären Quellmitteln (A) zugeordnet, insbesondere hinsichtlich der Mengenangaben der Quellmittel-Anteile in den bezeichneten Ausgangsmischungen. Sofern im Rahmen des vorliegenden Textes also von dem Wassergehalt der Cellulose die Rede ist, wird dieser je nach Art, Herkunft, vorangegangener Bearbeitung der Cellulose und erfindungsgemäßer Verfahrensgestaltung sowie dabei eingesetzter Quellmittel sowohl Wasser umfassen, welches als primäres Quellmittel (A) im Sinne der vorliegenden Erfindung eingesetzt wird, als auch Wasser, welches aus dem Wassergehalt der erfindungsgemäß einzusetzenden Cellulose zu Beginn des erfindungsgemäßen Verfahrens resultiert.

Der Begriff "Ausgangsmischung ($M_I$)" bezeichnet im Rahmen des vorliegenden Textes eine zu Beginn des erfindungsgemäßen Schrittes (I) (Inkludieren eines oder mehrerer primärer Quellmittel (A) in Cellulose) vorliegende Mischung, die erfindungsgemäß einzusetzende Cellulose, in die Cellulose zu inkludierende primäre Quellmittel (A) und zusätzlich Hemicellulose und/oder Lignin umfasst.

Das erfindungsgemäße Verfahren ist auch mit hohen Quellmittelüberschüssen durchführbar. Es ist aber für die Durchführung des Verfahrens in der Regel ausreichend, wenn während eines Behandlungsschrittes der primäre Quellmittelgehalt in der besagten Ausgangsmischung ($M_I$) maximal 95 Gew.-%, bevorzugt maximal 90 Gew.-% und besonders bevorzugt maximal 80 Gew.-% beträgt, bezogen auf das Gesamtgewicht von Cellulose, primäre Quellmittel (A), Hemicellulose (sofern vorhanden) und Lignin (sofern vorhanden) in der Ausgangsmischung ($M_I$).

Besonders bevorzugt ist also ein Verfahren zur Herstellung einer Aromastoffinklusionscellulose (wie oben beschrieben), wobei in Schritt (I) vor Inklusion der Quellmittel der Anteil an primären Quellmitteln (A) in einer Ausgangsmischung ($M_I$) umfassend Cellulose, primäre Quellmittel (A) und zusätzlich Hemicellulose und/oder Lignin im Bereich von 20 bis 95 Gew.-%, vorzugsweise im Bereich von 30 bis 90 Gew.-%, besonders bevorzugt im Bereich von 40 bis 80 Gew.-% liegt, bezogen auf das Gesamtgewicht von Cellulose, primäre Quellmittel (A), Hemicellulose (sofern vorhanden) und Lignin (sofern vorhanden) in der Ausgangsmischung ($M_I$).

Sofern bei der ersten Quellung, d.h. der Inklusion primären Quellmittels (A) in Cellulose mit größeren Quellmittelüberschüssen gearbeitet wird und das Verfahren einen Schritt (II) wie oben definiert umfasst (Ersetzen primären Quellmittels durch sekundäre Quellmittel), ist es vorteilhaft, zwischen Schritt (I) und Schritt (II) nicht inkludierte Quellmittel teilweise zu entfernen, z.B. durch Filtrieren, Pressen, Zentrifugieren und/oder Trocknen. Zweck ist die Reduktion des Gehalts an primärem Quellmittel auf ein Niveau, das die Beibehaltung des Quellungszustandes der Cellulose (zumindest über einen gewissen Zeitraum hinweg) ermöglicht und dennoch die Einlagerung der Aromastoffe begünstigt. Ein zu hoher Gehalt an primärem Quellmittel würde hingegen die Einlagerung von Aromastoffen erschweren.

Eine vollständige Entfernung empfiehlt sich hierbei in der Regel (d.h. in Abhängigkeit der Verfahrensgestaltung) nicht, da die Quellung, d.h. die Inklusion der Quellmittel reversibel ist und eine zu vollständige Entfernung einen (teilweisen) Rückfall der Cellulose in den ungequollenen Zustand hervorrufen kann (Entquellung), so dass die sekundären Quellmittel (B) in Schritt (II) nicht in gewünschtem Maße inkludiert werden können. Dieser Umstand sollte insbesondere bei der Verminderung des Quellmittelanteils durch Trocknung, insbesondere bei Trocknung durch Konvektionstrocknung, Kontakttrocknung oder dielektrische Trocknung beachtet werden. Beim rein mechanischen Entfernen des Quellmittels, insbesondere des Quellmittels Wasser, z.B. durch Filtrieren, Pressen und Zentrifugieren ist hingegen der Rückfall in den ungequollenen Zustand nicht zu erwarten, d.h. selbst eine vollständige Entfernung nicht inkludierter Quellmittel wirkt sich in der Regel nicht derart negativ aus. Bei Anwendung der Gefriertrocknung (für Details zur Gefriertrocknung siehe unten) ist eine Entquellung ebenfalls nicht zu erwarten. Die Strukturgebung durch das Eis führt hierbei nämlich nach eigenen Untersuchungen dazu, dass trotz vollständiger Entfernung des Quellmittels, insbesondere des Quellmittels Wasser die Cellulose in einem "quasi-gequollenen", aktivierten Zustand verharrt. Durch Weiterbehandlung mit einem sekundären Quellmittel (ohne Notwendigkeit der Anwesenheit eines primären Quellmittels) kann der gequollene Zustand wieder hergestellt werden und eine Inklusion der Aromastoffe erfolgen. Der quasi-gequollene Zustand ist nach eigenen Untersuchungen am stabilsten unter möglichst vollständigem Ausschluss von Wasser (beim Kontakt geringer Mengen Wasser nämlich, d.h. bei einem Wassergehalt von kleiner als 15 Gew.-% besteht die Gefahr, dass die Cellulose von dem quasi-gequollenen Zustand in den ungequollenen Zustand übergeht).

Bei der Verwendung von Gemischen aus Cellulose und Hemicellulosen (und gegebenenfalls Lignin) können Quellung und Entquellung mehrmalig hintereinander reversibel durchgeführt werden, ohne dass eine Verminderung des Inklusionspotentials der Cellulose stattfindet. Sofern die Cellulose vor Schritt (I) mit starken Basen (besonders Natronlauge, Kalilauge oberhalb einer Konzentration von ca. 17%) behandelt und aufgereinigt wurde und in Schritt (I) nicht in Mischung mit Hemicellulose (und gegebenenfalls Lignin) vorliegt, gilt diese Reversibilität nach dem Trocknen nicht mehr. Ist diese gereinigte (d.h. von Hemicellulose und gegebenenfalls Lignin befreite) Cellulose einmal getrocknet (d.h. bis zu einem Wassergehalt geringer als 20 Gew.-%; das betreffend den Wassergehalt der Cellulose oben Gesagte gilt hierbei entsprechend) kann das Inklusionspotential (Fähigkeit zur Bildung der erfindungsgemäßen Aromastoffinclusionscellulosen) der Cellulose teilweise bis irreversibel geschädigt werden. Dies äußert sich in einer geringeren Beladung mit Aromastoffen bzw. kann gegebenenfalls die Inklusion der Aromastoffe sogar unmöglich machen. Zur Beibehaltung des Inklusionspotentials kann die Cellulose nach der Reinigung ohne Trocknung vorzugsweise im feuchten Zustand gelagert werden. Dies verursacht allerdings in manchen Fällen mikrobielle Probleme. Diese Probleme treten in der Regel nicht auf, wenn eine Mischung umfassend (noch nicht gereinigte) Cellulose, die noch in Mischung mit Hemicellulose vorliegt (wie oben beschrieben) in Schritt (I) eingesetzt wird, da hierbei die Cellulose in der Regel ihr Inklusionspotential auch im getrockneten Zustand beibehält, so dass sie problemlos lange Zeit (und vorteilhafterweise nicht notwendigerweise im feuchten Zustand) lagerfähig ist und erst bei Bedarf aufgeschlossen und gegebenenfalls gereinigt (von Hemicellulose befreit) werden kann.

Vor einer zweiten Quellung, d.h. vor Schritt (II) oder Schritt (IIb) beträgt der Anteil inkludierter Quellmittel vorzugsweise wenigstens 5 Gew.-%, vorzugsweise wenigstens 10 Gew.-% und besonders bevorzugt zwischen 20 und 50 Gew.-% bezogen auf das Gesamtgewicht an Cellulose, Hemicellulose (sofern vorhanden), Lignin (sofern vorhanden) und inkludiertem Quellmittel. Da sich der gequollene Zustand der Cellulose bei sehr geringen Quellmittelrestanteilen nur über eine kurze Zeit aufrecht erhalten lässt, ist eine sofortige Weiterverarbeitung bevorzugt. Auch hierbei gilt, dass dies bei Anwendung der Gefriertrocknung (wie weiter unten beschrieben) nicht zutrifft. Im Falle der Gefriertrocknung kann der Anteil inkludierter Quellmittel, insbesondere bei Verwendung des Quellmittels Wasser, demnach auch auf Werte im Bereich von 0 bis 5 Gew.-% unter weitgehender Erhaltung des Quellzustandes abgesenkt werden. Vorteilhafterweise kann dadurch eine bessere Lagerfähigkeit (insbesondere zwischen den Schritten (I) und (II)) erreicht werden.

Abhängig von den ausgewählten primären Quellmitteln (A) wird die in Schritt (I) vorgequollene Cellulose gegebenenfalls in Schritt (II) mit sekundären Quellmitteln (B) behandelt. Vorteilhafterweise werden dabei mit den in Schritt (III) zu inkludierenden Aromastoffen inkompatible primäre Quellmittel (A) durch kompatible sekundäre Quellmittel (B) teilweise oder vollständig ersetzt. Eine Kompatibilität im Sinne dieser Erfindung liegt insbesondere dann vor, wenn die zu inkludierenden Aromastoffe in den Quellmitteln bzw. Quellmittelmischungen, die sie ersetzen sollen gut oder bevorzugt vollständig löslich sind. Ein zweites Quellen durch einen Schritt (II) ist daher insbesondere dann vorteilhaft, wenn die zu inkludierenden Aromastoffe nicht oder überwiegend nicht in den primären Quellmitteln (A) aus Schritt (I) löslich sind. Bei der Verwendung primärer Quellmittel (A) der Gruppe (a2) in Schritt (I) ist ihr Ersetzen durch sekundäres Quellmittel (B) nicht erforderlich, weil die Quellmittel der Gruppe (a2) durch erfindungsgemäß einzusetzende Aromastoffe ersetzt werden können, das Ersetzen durch sekundäre Quellmittel kann aber optional durchgeführt werden. Mengen, Verfahrensparameter und Ausrüstungen bei der zweiten Quellung sind im Wesentlichen identisch mit denen der ersten Quellung. Die zweite Quellung ist ebenfalls wie die erste Quellung über die flüssige Phase, Gasphase oder kombiniert über flüssige und Gasphase durchführbar (für Details siehe Beschreibung weiter oben).

Nach dem Quellen in Schritt (II) können weitere Quellungen mit weiteren sekundären Quellmitteln (B) in analoger Art und Weise durchgeführt werden.

Vor dem Ersetzen der inkludierten Quellmittel durch Aromastoffe in Schritt (III) sollte der inkludierte Quellmittelanteil in der Cellulose auf einen optimalen Wert eingestellt werden. Daher gilt für ein Verfahren zur Herstellung einer Aromastoffinklusionscellulose (wie oben beschrieben) vorzugsweise, dass zu ersetzendes inkludiertes (primäres und/oder sekundäres) Quellmittel in Schritt (III) Bestandteil einer Ausgangsmischung ($M_{III}$) ist, die Cellulose, inkludiertes und gegebenenfalls (Restmengen) nicht inkludiertes (primäres und/oder sekundäres) Quellmittel und Hemicellulose und/oder Lignin umfasst, wobei der Gesamtanteil an inkludiertem und nicht inkludiertem Quellmittel im Bereich von 5 bis 90 Gew.-%, vorzugsweise im Bereich von 10 bis 70 Gew.-%, besonders bevorzugt im Bereich von 20 bis 50 Gew.-% liegt, bezogen auf das Gesamtgewicht von Cellulose, inkludiertem und nicht inkludiertem Quellmittel, Hemicellulose und Lignin in der Ausgangsmischung ($M_{III}$).

Der Begriff "Ausgangsmischung ($M_{III}$)" bezeichnet im Rahmen des vorliegenden Textes eine zu Beginn des erfindungsgemäßen Schrittes (III) (Ersetzen inkludierten Quellmittels durch Aromastoff) vorliegende Mischung, die (gemäß Schritt (I), (II) bzw. (IIb) durch primäres und/oder sekundäres Quellmittel vorgequollene) Cellulose, inkludiertes und

# EP 2 196 098 B1

gegebenenfalls (Restmengen) nicht inkludiertes (primäres und/oder sekundäres) Quellmittel und zusätzlich Hemicellulose und/oder Lignin, jedoch noch keine zu inkludierenden Aromastoffe umfasst.

Bezüglich des Quellmittelanteils in der Cellulose vor dem Ersetzen der inkludierten Quellmittel durch Aromastoffe in Schritt (III) gilt zudem, dass ein Verfahren zur Herstellung einer Aromastoffinklusionscellulose wie oben beschrieben besonders bevorzugt ist, wobei zu ersetzendes inkludiertes primäres Quellmittel (A) in Schritt (III) Bestandteil der Ausgangsmischung ($M_{III}$) ist, die Cellulose, inkludiertes und gegebenenfalls (Restmengen) nicht inkludiertes (primäres und/oder sekundäres) Quellmittel und Hemicellulose und/oder Lignin umfasst, wobei das Gewichtsverhältnis der Gesamtmenge an (inkludiertem und gegebenenfalls nicht inkludiertem) primärem Quellmittel (A) zur Gesamtmenge an Cellulose sowie Hemicellulose und/oder Lignin in der Ausgangsmischung ($M_{III}$) zwischen 1:4 und 1:10000, vorzugsweise zwischen 1:9 und 1:10000, besonders bevorzugt zwischen 1:10 und 1:10000 liegt. Diese Wertebereiche sollten insbesondere für Wasser als primäres Quellmittel (A) eingehalten werden, da ein zu hoher Wassergehalt, d.h. oberhalb der genannten Verhältnisse, die Inklusion von Aromastoffen be- oder sogar verhindern kann (das oben betreffend einen zu hohen Gehalt an primärem Quellmittel und die damit verbundene erschwerte Einlagerung der Aromastoffe Gesagte gilt hier entsprechend). Bei der Verwendung hoher Quellmittelüberschüsse während der ersten bzw. zweiten Quellung sollte vor dem Kontakt der (vorgequollenen) Cellulose mit den Aromastoffen in Schritt (III) der Überschuss auf einen geeigneten Quellmittelanteil reduziert werden. Dies kann z.B. durch Dekantieren oder analog den Ausführungen weiter oben durch Zentrifugieren, Pressen und/oder Trocknen unter Beibehaltung des gequollenen Zustandes geschehen.

Das Ersetzen der (inkludierten) Quellmittel durch Aromastoffe in Schritt (III) erfolgt vorzugsweise durch Mischen der vorgequollenen Cellulose (bzw. der Ausgangsmischung ($M_{III}$)) mit den Aromastoffen. Für die zu verwendenden Ausrüstungen gelten hierbei die gleichen Gesetzmäßigkeiten wie bei der vorangehenden oben beschriebenen Quellung der Cellulose, d.h. der Fachmann entscheidet aufgrund des Zustandes der (vorgequollenen) Cellulose (Feststoff, Paste, Flüssigkeit) über geeignete Ausrüstungen.

In einer besonders bevorzugten Ausgestaltung des erfindungsgemäßen Verfahrens wird vor Durchführung des Schrittes (III) die Menge des aus Schritt (I) bzw. Schritt (II) oder (IIb) verbleibenden (inkludierten und nicht inkludierten) Quellmittels so gewählt, dass die Ausgangsmischung ($M_{III}$) als Feststoff erscheint. Nach Zusatz der Aromastoffe erscheint die resultierende Mischung vorzugsweise ebenfalls als Feststoff. Dies sorgt vorteilhafterweise dafür, dass die Verluste an Aromastoffen bei einem gegebenenfalls erfolgenden Schritt (IV), d.h. beim Entfernen des nicht durch Aromastoffe ersetzten Quellmittels, allenfalls gering sind.

Bei erfindungsgemäßer Durchführung insbesondere der vorstehend beschriebenen besonders bevorzugten Ausführungsform betragen die Verluste (Verhältnis eingesetzte Aromastoffe zu verkapselten Aromastoffen * 100 %) der eingesetzten Aromastoffe vorteilhafterweise weniger als 50 %, bevorzugt weniger als 20 % und besonders bevorzugt weniger als 10 %. In besonders bevorzugten Ausgestaltungen des erfindungsgemäßen Verfahrens ergeben sich sogar Aromaverluste kleiner als 1%. Aufgrund des bevorzugten Einsatzes einer Ausgangsmischung ($M_{III}$) als Feststoff findet die Verteilung der Aromastoffe in der Cellulose überwiegend durch die Gasphase statt. Deshalb ist es vorteilhaft, die Mischung aus Aromastoff(en) und gequollener Cellulose (einschließlich inkludierter und gegebenenfalls nicht inkludierter Quellmittel) in einem Gefäß zu verschließen. Zur schnelleren Verteilung werden die Aromastoffe vorzugsweise auf die gequollene Cellulose z.B. aufgesprüht, aufgetropft oder aufgegossen. Auch ein zusätzliches Mischen mit geeigneten Ausrüstungen ist vorteilhaft und daher je nach Ausführung bevorzugt.

Die Mischzeiten beim Mischen der vorgequollenen Cellulose mit den Aromastoffen in Schritt (III) betragen vorzugsweise je nach Art und Zweck der zu inkludierenden Aromastoffe und in Abhängigkeit der Mischausrüstung und Temperatur etwa 3 Minuten bis zu etwa 24 Stunden. Bevorzugt betragen die Mischzeiten zwischen etwa 3 Minuten und einer Stunde. Die Temperatur während des Mischvorgangs liegt vorzugsweise zwischen etwa 0 und 130 °C, bevorzugt zwischen 10 und 60 °C und besonders bevorzugt zwischen 15 und 40 °C. Es hat sich in eigenen Untersuchungen als vorteilhaft erwiesen, die Temperatur im anfänglichen Stadium zu erhöhen und im zeitlichen Verlauf abzusenken. Die Temperaturen im anfänglichen Stadium betragen dabei beispielsweise zwischen 40 und 100 °C, bevorzugt zwischen 40 und 80 °C und besonders bevorzugt zwischen 40 und 60 °C. Die Temperaturen werden dann im zeitlichen Verlauf auf beispielsweise 0 bis 39 °C, bevorzugt 10 bis 39 °C und besonders bevorzugt 15 bis 30 °C abgesenkt.

Das in einem vorangehend beschriebenen Schritt (IV) erfolgende Entfernen von nicht durch Aromastoffe ersetztem Quellmittel erfolgt vorzugsweise durch Umströmung bzw. Durchströmung mit Gasen oder im Vakuum. Bevorzugt erfolgt die Entfernung dieser Quellmittel durch Umströmung bzw. Durchströmung mit Gasen. Geeignete Gase sind z.B. Luft, Stickstoff, Distickstoffmonoxid, und Kohlendioxid sowie Mischungen aus diesen Gasen. Die zur Entfernung von Quellmittel verwendeten Gase besitzen vorzugsweise eine optimierte relative Luftfeuchte besitzen. Die verwendeten Gase besitzen vorzugsweise eine relative Luftfeuchte von 0 bis 70 %, bevorzugt von 0 bis 60 % und besonders bevorzugt von 0 bis 50%. Die Temperatur der Gase beträgt dabei vorzugsweise etwa 0 bis 100 °C, bevorzugt 0 bis 40 °C und besonders bevorzugt 0 bis 25 °C. Die Herstellung von Gasen mit definiertem Feuchtegehalt ist dem Fachmann bekannt und kann z.B durch Mischung von Gasen mit unterschiedlichem Feuchtegehalt, Befeuchtung von Gasen mit Wasser bzw. Dampf oder durch Auskondensieren erfolgen.

In vollständiger Abwesenheit von primärem Quellmittel, insbesondere in vollständiger Abwesenheit von Wasser, z.B. bei vollständigem Auswaschen oder vollständiger Gefriertrocknung in Kombination mit (nahezu) wasserfreier Entfernung gegebenenfalls vorhandener sekundärer Quellmittel (z.B. bei etwa 0 % Luftfeuchte; vgl. oben), besteht jedoch die Gefahr, dass sich die Cellulose nach Inklusion der Aromastoffe nicht ausreichend verschließt. Das heißt, die Aromastoffe liegen zwar inkludiert vor, jedoch findet eine (wenn auch im Vergleich zu oberflächlich an die Cellulose angelagerten Aromastoffen verzögerte) Verflüchtigung inkludierter Aromastoffe statt. Um eine solche Aromastoffinklusionscellulose in eine stabilere, d.h. besser vor Verflüchtigung der inkludierten Aromastoffe geschützte Form zu überführen, hat es sich nach eigenen Untersuchungen als vorteilhaft erwiesen, ein erfindungsgemäßes Verfahrens zur Herstellung einer Aromastoffinklusionscellulose (wie oben beschrieben) anzuwenden, wobei nach dem Inkludieren der Aromastoffe eine Menge an Wasser zuzugeben wird, die unterhalb einer wirksamen Quellmittelkonzentration liegt, so dass keine Vergrößerung des Abstandes der Celluloseketten der Aromastoffinklusionscellulose zueinander stattfindet. Vorzugsweise wird dieser Schritt in einem geschlossenen Behälter durchgeführt.

Dementsprechend umfasst ein erfindungsgemäßes Verfahren zur Herstellung einer Aromastoffinklusionscellulose (wie oben beschrieben) zudem nach Schritt (III) oder - sofern vorhanden - nach Schritt (IV) vorzugsweise den folgenden Schritt:

- Zugeben von Wasser zu der Cellulose mit inkludierten Aromastoffen in einer Menge, so dass die Verflüchtigung in der Cellulose inkludierter Aromastoffe reduziert wird.

Die geeignete Menge an Wasser kann vom Fachmann unter Beachtung der Lehre des vorliegenden Textes ohne größeren Aufwand ermittelt werden.

Im Folgenden werden weitere Einzelheiten zu erfindungsgemäß bevorzugten Ausgestaltungen des vorangehend beschriebenen Verfahrens zur Herstellung einer Aromastoffinklusionscellulose beschrieben.

Die folgenden Erläuterungen betreffen ein bevorzugtes erfindungsgemäßes Verfahren zur Herstellung einer Aromastoffinklusionscellulose, umfassend die vorangehend definierten und beschriebenen Schritte (I), (II), (III) und (IV):

Die Durchführung dieser Verfahrensgestaltung hat sich insbesondere als vorteilhaft bei der Verwendung des primären Quellmittels (A) Wasser und des sekundären Quellmittels (B) Ethanol bzw. Propanol erwiesen.

Die Durchführung dieser erfindungsgemäßen Verfahrensgestaltung ist insbesondere dann vorteilhaft und angebracht, wenn das primäre Quellmittel (A) und die zu inkludierenden Aromastoffe nicht miteinander kompatibel sind, d.h. wenn sie nicht oder nur geringfügig ineinander löslich sind, eine Mischung nur unter Bildung separierter Phasen möglich ist oder unerwünschte Reaktionen des primären Quellmittels mit den Aromastoffen auftreten.

Die Quellung mit einem der vorangehend genannten bevorzugten primären Quellmittel (A) erfolgt wie weiter oben beschrieben. Nach der ersten Quellung in Schritt (I) beträgt der Gesamtanteil des (inkludierten und nicht inkludierten) primären Quellmittels (A) vor dem Ersetzen des inkludierten Quellmittels (A) in Schritt (II) in einer Ausgangsmischung $(M_{II})$, umfassend Cellulose, inkludiertes und gegebenenfalls nicht inkludiertes Quellmittel (A) und Hemicellulose und/oder Lignin vorzugsweise etwa 5 bis 90 Gew.-%, bevorzugt 10 bis 60 Gew.-% und besonders bevorzugt 20 bis 50 Gew.-%, bezogen auf das Gesamtgewicht an Cellulose, inkludiertem und nicht inkludiertem primären Quellmittel (A), Hemicellulose und Lignin in der Ausgangsmischung $(M_{II})$. Dabei ist zu beachten, dass die erste Quellung in der Regel reversibel verläuft und die Cellulose insbesondere bei der Verringerung des Gehalts primärer Quellmittel (A) (d.h. unterhalb von 20 Gew.-%, insbesondere unterhalb von 15 Gew.-%) in der Ausgangsmischung (MII)) und längerer Lagerung in den ungequollenen Zustand zurückfallen kann. Bei solch niedrigen Gehalten primärer Quellmittel (A) ist der gequollene Zustand jedoch immer noch über einige Stunden stabil, sodass der zeitliche Rahmen für die Weiterverarbeitung in der erfindungsgemäßen Art und Weise problemlos eingehalten werden kann. Bei Lagerung der gequollenen Cellulose (zwischen Schritt (I) und (II)) für länger als etwa 12 bis 24 Stunden kann der gequollene Zustand jedoch wieder in den ungequollenen Zustand übergehen und die Herstellung der erfindungsgemäßen Aromastoffinklusionscellulose ist erschwert oder nicht mehr möglich.

Der Begriff "Ausgangsmischung $(M_{II})$" bezeichnet im Rahmen des vorliegenden Textes eine zu Beginn des erfindungsgemäßen optionalen Schrittes (II) (Ersetzen inkludierten primären Quellmittels durch sekundäres Quellmittel) vorliegende Mischung, die (gemäß Schritt (I) durch primäres Quellmittel vorgequollene) Cellulose, inkludiertes und gegebenenfalls (Restmengen) nicht inkludiertes primäres Quellmittel und zusätzlich Hemicellulose und/oder Lignin umfasst.

Gequollene Cellulosen mit hohem primären Quellmittelanteil (d.h. oberhalb 40 Gew.-%, vorzugsweise oberhalb 50 Gew.-% in der Ausgangsmischung $(M_{II})$) sind in der Regel vorteilhafterweise über einen langen Zeitraum lagerfähig, sofern sie in einem geschlossenen Behälter gelagert werden.

Das Ersetzen des primären durch das sekundäre Quellmittel kann einmalig oder mehrmalig unter den weiter oben genannten Bedingungen erfolgen. Ein mehrmaliges Ersetzen, d.h. ein Wiederholen des Schrittes (II) ist in der Regel erforderlich, wenn zur Entfernung überschüssiger primärer Quellmittelmengen vor Schritt (II) keine mechanischen Hilfsmittel (z.B. Presse, Zentrifuge) verwendet werden. Dann geht man vorzugsweise folgendermaßen vor: Die Ausgangsmischung $(M_{II})$ wird mit einer größeren Menge an sekundärem Quellmittel (B) versetzt, sodass eine niedrigviskose Flüssigkeit mit darin dispergierter (vorgequollener) Cellulose entsteht. Ein wie oben dargestellter Mischungsvorgang wird ausgeführt und anschließend wird soviel (nicht inkludiertes) Quellmittel wie möglich entfernt (schonend, z.B. durch Dekantieren, Filtrieren oder Ablassen durch einen Ablauf). Das Hinzufügen des sekundären Quellmittels (B), Durchführung des Mischungsvorganges und das Entfernen des Quellmittels (primär und sekundär) wird insgesamt etwa zwei- bis dreimal wiederholt. Anschließend folgt Schritt (III), d.h. das Ersetzen inkludierten Quellmittels (hier: hauptsächlich sekundären Quellmittels (B)) durch Aromastoffe.

Durch die Verwendung mechanischer Hilfsmittel (z.B. Pressen, Zentrifugen) zum Entfernen überschüssigen primären Quellmittels (A) wird vorteilhafterweise eine mehrmalige Behandlung mit dem sekundären Quellmittel (B) überflüssig bzw. wird die notwendige Menge zu verwendender sekundärer Quellmittel (B) verringert, so dass eine einmalige Behandlung mit geringeren Mengen sekundärer Quellmittel (B) als ohne Zuhilfenahme der mechanischen Hilfsmittel möglich ist. Sofern eine einmalige Behandlung mit relativ geringen Mengen sekundärem Quellmittel (B) ausreichen soll, um die Menge an primärem inkludiertem Quellmittel (A) so zu reduzieren, dass die erfindungsgemäße Aromastoffinclusionscellulose entstehen kann, sollte der Gehalt des primären Quellmittels (A) in der Ausgangsmischung ($M_{II}$) vorzugsweise kleiner als etwa 60 Gew.-% sein, bezogen auf das Gesamtgewicht an Cellulose, inkludiertem und nicht inkludiertem primären Quellmittel (A), Hemicellulose und Lignin in der Ausgangsmischung ($M_{II}$). Der Gehalt des primären Quellmittels (A) in der Ausgangsmischung ($M_{II}$) beträgt nach Verwendung mechanischer Hilfsmittel (wie oben beschrieben) vorteilhafterweise 40 bis 50 Gew.-%. Ohne vorherige Verwendung mechanischer Hilfsmittel beträgt der Gehalt primären Quellmittels (A) in der Ausgangsmischung ($M_{II}$) häufig zwischen etwa 70 und 90 Gew.- %.

Neben der Verwendung von mechanischen Hilfsmitteln kann die Entfernung überschüssigen primären Quellmittels auch durch Trocknung erfolgen. Unter dem Begriff Trocknung wird im Sinne der vorliegenden Erfindung das Entfernen bzw. Verringern von Quellmitteln durch Verdunsten, Verdampfen bzw. Sublimation verstanden. Der Vorteil der Trocknung liegt darin, dass der Gehalt primärer Quellmittel relativ weit abgesenkt werden kann, nämlich auf einen Wert kleiner als 20 Gew.-%, insbesondere kleiner als 15 Gew.-% bezogen auf das Gesamtgewicht von Cellulose, primäre Quellmittel und -falls vorhanden - Begleitsubstanzen. Hierbei ergibt sich der Vorteil, dass insbesondere bei Verwendung flüchtiger primärer Quellmittel der Gruppe (a1), darunter insbesondere Wasser, lediglich eine sehr geringe Menge sekundärer Quellmittel (B) benötigt wird. Vorteilhafterweise wird die Menge sekundärer Quellmittel (B) dabei vorzugsweise geringer gewählt als bei der Verwendung mechanischer Hilfsmittel, da hierbei die sekundären Quellmittel der Gruppe (B) in vielen Fällen nicht mehr zur Reduzierung des Anteils der primären Quellmittel benötigt werden, sondern in erster Linie (nur noch) zur Vorbereitung der Cellulose auf die Inklusion der Aromastoffe dienen. Dabei kann man sich unter bestimmten Trocknungsbedingungen den oben bereits beschriebenen überraschenden Effekt zunutze machen, dass die Cellulose nach erfolgter primärer Quellung, obwohl der Quellmitttelgehalt bereits auf ein Niveau reduziert wurde bzw. abgesunken ist, bei dem die Cellulose eigentlich (wieder) im ungequollenen Zustand vorliegen würde, zumindest kurzzeitig den Zustand der Quellung beibehält (quasi-gequollener, aktivierter Zustand). Die Menge der zu verwendenden sekundären Quellmittel (B) beträgt in diesem speziellen Fall der Durchführung bevorzugt 0,5 kg bis 2 kg/kg Cellulose einschließlich gegebenenfalls vorhandener Begleitsubstanzen.

Ohne (zumindest kurzzeitige) Beibehaltung des Quellungszustandes findet bei der Durchführung der Trocknung in Abhängigkeit von den verwendeten Parametern eine Entquellung der Cellulose statt. Die Trocknung sollte also vorzugsweise sehr kontrolliert erfolgen. Generell besteht bei Verwendung der Gefriertrocknung die geringste Tendenz zur Entquellung der (vorgequollenen) Cellulose. Bei anderen Trocknungsarten sollte zur Erhaltung des Quellungszustandes der Cellulose bevorzugt eine relativ niedrige Temperatur, d.h. vorzugsweise kleiner als 100 °C, bevorzugt kleiner als 60 °C und besonders bevorzugt kleiner als 40 °C verwendet werden. Außerdem sollten die einzelnen Cellulosefasern einer Vielzahl von Cellulosefasern im zeitlichen Verlauf vorzugsweise möglichst gleichmäßig trocknen, um eine Entquellung einzelner Cellulosefasern zu verhindern. Insoweit ist deshalb die Wirbelschichttrocknung besonders bevorzugt. Im Anschluss an die Trocknung ist eine schnelle Weiterverarbeitung vorteilhaft, da der quasi-gequollene, aktivierte Zustand bei den durch Trocknung eingestellten niedrigen Gehalten primärer Quellmittel in der Regel nur kurzzeitig aufrecht erhalten werden kann. Weitere Details hierzu wurden bereits weiter oben beschrieben.

Sofern eine mehrfache Behandlung der Cellulose mit sekundärem Quellmittel (B) vermieden werden soll, kann im Rahmen des erfindungsgemäßen Verfahrens auch das Verfahren der Perkolation angewendet werden. Die Durchführung und Ausrüstung der Perkolation sind dem Fachmann bekannt, zum Beispiel aus der Herstellung von Gewürz- und Kräuterextrakten für die Spirituosenherstellung. Bei der Perkolation im Sinne der vorliegenden Erfindung durchströmt das sekundäre Quellmittel (B) langsam eine mit primärem Quellmittel (A) angereicherte Celluloseschicht und trägt das primäre Quellmittel (A) aus der Cellulose aus. Die Dicke der Celluloseschicht beträgt dabei vorzugsweise einige Zentimeter bis einige Meter. Aufgrund der kontinuierlichen Durchführung der Perkolation lassen sich die mehrfachen Behandlungen mit sekundären Quellmittel (B) vorteilhafterweise auf eine einmalige Behandlung reduzieren, bei vergleichbar geringem apparativen Aufwand und geringerem Quellmittelverbrauch. Für die Temperatur und die Zeit während der Perkolation gelten die weiter oben getroffenen Aussagen.

Alternativ erfolgt die Behandlung mit dem sekundären Quellmittel (B) vorzugsweise durch Dämpfen. Für weitere Informationen zum Dämpfen siehe Ausführungen weiter oben. Vorteile des Dämpfens sind ein geringer(er) Quellmittelverbrauch, eine kontinuierliche Durchführung und ein optimaler Restquellmittelgehalt in der Ausgangsmischung ($M_{III}$) für die folgende Behandlung mit Aromastoffen in Schritt (III).

Die folgenden Erläuterungen betreffen ein wie oben beschriebenes Verfahren zur Herstellung einer Aromastoffinklusionscellulose, umfassend die vorangehend definierten Schritte (I), (II), (III) und (IV), wobei in Schritt (I) neben einem oder mehreren primären Quellmitteln (A) zudem ein oder mehrere sekundäre Quellmittel (B) eingesetzt werden:

Gemäß dieser Ausführungsform wird die erste Quellung mit einem Gemisch aus primärem und sekundärem Quellmittel durchgeführt. Vorteilhaft in dieser Variante ist die parallele Durchführung der primären und sekundären Quellung, wodurch die Anzahl der notwendigen Behandlungen mit dem sekundären Quellmittel reduziert wird. Es genügt in der Regel, nach der ersten Quellung mit dem Gemisch aus primärem und sekundärem Quellmittel nur noch eine einzige Quellung mit dem sekundären Quellmittel (B) durchzuführen. Die Verwendung von mechanischen Hilfsmitteln, wie Pressen oder Zentrifugen, ist in diesem Falle vorteilhafterweise meist nicht zwingend notwendig. Das Gemisch aus primärem und sekundärem Quellmittel hat dabei vorzugsweise einen Mindestgehalt an primärem Quellmittel (A) von 25 Gew.-% bezogen auf das Gesamtgewicht des Gemisches. Dadurch wird eine ausreichende primäre Quellung erzielt. Bevorzugt besteht das Gemisch aus 25 bis 99 Gew.-% an primärem Quellmittel (A) und 1 bis 75 Gew.-% an sekundärem Quellmittel (B), besonders bevorzugt aus 30 bis 60 Gew.-% an primärem Quellmittel (A) und 40 bis 70 Gew.-% an sekundärem Quellmittel (B), jeweils bezogen auf das Gesamtgewicht des Gemisches.

Die Anwendung eines Gemisches aus primären und sekundären Quellmittel in Schritt (I) hat sich insbesondere für das primäre Quellmittel (A) Wasser in Kombination mit dem sekundären Quellmittel (B) Ethanol oder Propanol bewährt. Weitere bevorzugte Kombinationen sind z.B. das primäre Quellmittel (A) Essigsäure (Eisessig) in Kombination mit dem sekundären Quellmittel (B) Ethanol oder Propanol sowie Mischungen aus Wasser, Essigsäure und Ethanol bzw. Wasser, Essigsäure und Propanol.

Die folgenden Erläuterungen betreffen ein wie oben beschriebenes Verfahren zur Herstellung einer Aromastoffinklusionscellulose, umfassend die vorangehend definierten Schritte (I), (III) und (IV), wobei das Verfahren keinen Schritt (II) wie oben definiert umfasst und das primäre Quellmittel (A) vorzugsweise ausgewählt ist aus der Gruppe (a2):

Gemäß dieser bevorzugten Ausführungsform des erfindungsgemäßen Verfahrens wird die Cellulose in Schritt (I) mit einem primären Quellmittel (A) der Gruppe (a2) behandelt und anschließend direkt mit den zu inkludierenden Aromastoffen behandelt (Schritt (III)).

Der besondere Vorteil dieser Ausführungsform liegt in der Einfachheit des Verfahrens. Es werden nicht zwingend mechanische Hilfsmittel oder mehrfache Behandlungen mit einem weiteren Quellmittel benötigt. Ein primäres Quellmittel (A) der Gruppe (a2) ist einerseits in der Lage, die Wasserstoffbrückenbindungen zwischen den OH-Gruppen der Cellulose zu lösen und besitzt andererseits eine sehr gute Löslichkeit beziehungsweise Mischbarkeit mit den zu inkludierenden Aromastoffen, d.h. ist gut mit den Aromastoffen kombinierbar. Nur sehr wenige Stoffe erfüllen die Anforderungen an ein solches primäres Quellmittel. Ein Beispiel für eine solche Substanz ist Essigsäure (universelles Quellmittel).

Bei dieser erfindungsgemäßen Verfahrensgestaltung ist es äußerst vorteilhaft, dass der Wassergehalt der einzusetzenden Cellulose unterhalb von 20 Gew.-%, insbesondere unterhalb von 15 Gew.-% ist und während des Verfahrens, d.h. bis zur Inklusion der Aromastoffe, unterhalb dieser Werte gehalten wird (das oben betreffend den Wassergehalt der Cellulose Gesagte gilt hierbei entsprechend). Sofern höhere Wassergehalte anwesend wären, bestünde die Gefahr, dass das Wasser die relevanten Bindungsstellen in der Cellulose besetzt und damit die Inklusion der Aromastoffe behindert.

Dementsprechend gilt auch für das gemäß dieser Ausführung verwendete universelle Quellmittel (primäres Quellmittel der Gruppe (a2)), dass dieses vorzugsweise - sofern es in Mischung mit Wasser vorliegt - nur einen sehr niedrigen Wassergehalt, vorzugsweise kleiner als 10 Gew.-%, bevorzugt kleiner als 5 Gew.-% und besonders bevorzugt kleiner oder gleich 1 Gew.-% besitzt, so dass der Wassergehalt der Cellulose nicht oder nur unwesentlich erhöht wird. Im Zusammenhang mit der vorliegenden Erfindung gilt generell, dass die zu verwendenden universellen und sekundären Quellmittel - sofern diese in Mischung mit Wasser vorliegen - vorzugsweise einen nur geringen Wassergehalt, vorzugsweise kleiner als 30 Gew.-%, bevorzugt kleiner als 10 Gew.-% und besonders bevorzugt kleiner oder gleich 1 Gew.-% besitzen.

Die folgenden Erläuterungen betreffen eine weitere alternative Ausführungsform eines erfindungsgemäßen Verfahrens zur Herstellung einer Aromastoffinklusionscellulose.

Gemäß dieser Ausführungsform werden zunächst verschiedene Quellmittel miteinander zur Reaktion gebracht, so dass eine oder mehrere weitere Substanzen entstehen. Zum Beispiel wird diese Ausführungsform vorzugsweise durchgeführt, indem Cellulose mit einem primären Quellmittel (A) behandelt wird und dann ein sekundäres Quellmittel (B) hinzugefügt wird, so dass das primäre Quellmittel (A) mit dem sekundären Quellmittel (B) zu einer oder mehreren weiteren Substanzen (ebenfalls Quellmittel im Sinne der obigen Definition) reagiert. Dabei ist es jedoch auch möglich, dass eine oder mehrere dieser weiteren Substanzen ein Aromastoff (z.B. Propylacetat) ist bzw. Aromastoffe sind.

Hierbei ist es vorteilhaft, wenn zumindest eine, vorzugsweise sämtliche der bei der Reaktion entstehenden Substanzen eine niedrigere Siedetemperatur besitzen als eines oder beide der umgesetzten Quellmittel. Ein Beispiel für solche Quellmittel sind Essigsäure (Eisessig) als primäres Quellmittel (A) und Ethanol als sekundäres Quellmittel (B). Sofern diese beiden Quellmittel bei niedrigen Temperaturen (im Bereich von 0 bis etwa 50 °C) verarbeitet werden, findet kaum oder nur in geringem Maße eine Reaktion zwischen den beiden Quellmitteln statt. Bei höheren Temperaturen (oberhalb von etwa 50 °C), bevorzugt bei einer Temperatur im Bereich von 80 bis 120 °C reagieren Essigsäure und Ethanol zu Essigsäureethylester und Wasser. Die Siedetemperaturen der Quellmittel betragen ca. 118 °C (Essigsäure) und 78 °C (Ethanol). Die Siedetemperaturen der Reaktionsprodukte betragen 100 °C (Wasser) und 77 °C (Essigsäureethylester). Die Umsetzung führt also zu Produkten, die jeweils leichter flüchtig sind als zumindest eines der eingesetzten Quellmittel selbst. Der Anteil des entstehenden Wassers kann bei dieser Ausführungsform leicht über die verwendeten Mengen der Ausgangsstoffe so gesteuert werden, dass der Wasseranteil bezogen auf das Gesamtgewicht von Wasser, Cellulose und - falls vorhanden - Begleitsubstanzen unterhalb von 20 Gew.-%, insbesondere unterhalb von 15 Gew.-% liegt und damit im späteren Verlauf (d.h. bei Inklusion der Aromastoffe) das Entstehen der erfindungsgemäßen Aromastoffinklusionscellulosen nicht behindert. Die Gefahr einer erschwerten Einlagerung der Aromastoffe bei zu hohem Gehalt an primärem Quellmittel wurde bereits weiter oben beschrieben. Nach teilweisem Ersetzen der Produkte bzw. der neu entstandenen Quellmittel durch die zu inkludierenden Aromastoffe in Schritt (III) können die neu entstandenen nicht inkludierten Quellmittel vorteilhafterweise in Schritt (IV) besonders leicht durch die Behandlung mit umströmenden Gasen entfernt werden. Infolgedessen verringern sich Verluste besonders leicht flüchtiger inkludierter Aromastoffe.

Entsprechend den vorangehend ausgeführten Verfahren zur Herstellung einer Aromastoffinklusionscellulose betrifft die vorliegende Erfindung insbesondere eine Aromastoffinklusionscellulose (wie oben beschrieben) oder eine Mischung (wie oben beschrieben), wobei die Aromastoffinklusionscellulose bzw. die Mischung herstellbar ist durch ein erfindungsgemäßes Verfahren (wie oben beschrieben).

Ein weiterer Aspekt der vorliegenden Erfindung betrifft die Verwendung einer erfindungsgemäßen Mischung, vorzugsweise einer vorstehend als bevorzugt bezeichneten Mischung (wie oben beschrieben), zur Aromatisierung einer der Ernährung oder dem Genuss dienenden Zubereitung oder Halbfertigware.

Zudem betrifft die vorliegende Erfindung eine der Ernährung oder dem Genuss dienende Zubereitung oder Halbfertigware, umfassend eine vorzugsweise sensorisch aktive Menge einer erfindungsgemäßen Mischung, vorzugsweise einer voranstehend als bevorzugt bezeichneten Mischung (wie oben beschrieben).

Bevorzugt ist eine der Ernährung oder dem Genuss dienende Zubereitung oder Halbfertigware wie voranstehend beschrieben, wobei der Gesamtanteil an Aromastoffinklusionscellulose bezogen auf das Gesamtgewicht der Zubereitung bzw. Halbfertigware im Bereich von 0,001 bis 10 Gew.-%, bevorzugt im Bereich von 0,25 bis 5 Gew.-%, besonders bevorzugt im Bereich von 0,5 bis 3 Gew.-% liegt.

Erfindungsgemäße der Ernährung oder dem Genuss dienende Zubereitungen oder Halbfertigwaren sind vorzugsweise ausgewählt aus der Gruppe bestehend aus:

Backwaren (z.B. Brot, Trockenkekse, Kuchen, Muffins, Waffeln, Backmischungen, sonstiges Gebäck), Süßwaren (z.B. weiße, helle oder dunkle Schokoladen, gefüllte Schokoladen (beispielsweise mit aromatisierter Fondant-Masse, Typ After-Eight), Schokoladenriegel, sonstige Riegelprodukte, Kaubonbons, Fruchtgummi, Hart- und Weichkaramellen, Kaugummi, Zuckerperlen, Lutscher), Kapseln (vorzugsweise nahtlose Kapsel zum Direktverzehr, vorzugsweise mit einer Umhüllung basierend auf Gelatine und/oder Alginat), Fettmassen (z.B. Backwarenfüllungen für z.B. Keksfüllungen, Schokoladenfettfüllungen, Riegelfettfüllungen), Aufstreumischungen (Toppings), alkoholische oder nichtalkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke oder Instantpulver (z.B. Instant-Kakao-Getränke, Instant-Tee-Getränke, Instant-Kaffeegetränke, Instant Desserts in Pulverform wie Puddingpulver oder Götterspeise), Fleischprodukte (z.B. Schinken, Frischwurst- oder Rohwurstzubereitungen, gewürzte oder marinierte Frisch- oder Pökelfleischprodukte), Eier oder Eiprodukte (z.B. Trockeneipulver), Getreideprodukte und/oder Nussprodukte (z.B. Frühstückscerealien, Cornflakes, Haferflocken, Schüttmüsli, Müsliriegel, Studentenfutter, süßes Popcorn, Nussriegel, Nuss-Frucht-Riegel, vorgegarte Fertigreis-Produkte), Milchprodukte (z.B. Milchgetränke, Milcheis, Joghurt, Pudding, Kefir, Frischkäse, Weichkäse, Hartkäse, Trockenmilchpulver, Molke, Butter, Buttermilch, teilweise oder ganz hydrolysierte Milchprotein-haltige Produkte), Produkte aus Sojaprotein oder anderen Sojabohnen-Fraktionen (z.B. Sojamilch und daraus gefertigte Produkte, Sojalecithin-haltige Zubereitungen, fermentierte Produkte wie Tofu oder Tempe oder daraus gefertigte Produkte, Sojasoßen), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, in Essig eingelegte Gemüse, eingekochte Gemüse), Knabberartikel (z.B. gebackene oder frittierte Kartoffelchips oder Kartoffelteigprodukte, Brotteigprodukte, Extrudate auf Mais- oder Erdnussbasis), Produkte auf Fett- und Ölbasis oder entsprechende Emulsionen (z.B. Mayonnaise, Remoulade, Dressings, Würzzubereitungen), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Erfindungsgemäße der Ernährung oder dem Genuss dienende Zubereitungen oder Halbfertigwaren können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen oder Halbfertigwaren als Nahrungsergänzungsmittel vorliegen.

Bevorzugte erfindungsgemäße, der Ernährung oder dem Genuss dienende Zubereitungen oder Halbfertigwaren sind ausgewählt aus der Gruppe bestehend aus:

Süßwaren wie z.B. Lutschbonbons, Kaugummis, Fruchtgummis, Kaubonbons, (Erfrischungs-)Dragees, Komprimate, Hartkaramellen, Schokocremes, Konfekt und Schokolade, Backwaren wie Kuchen, Waffeln und Kekse, Snacks, Instant-Mahlzeiten sowie anderen Instant-Produkten (Suppen, Saucen, Getränkepulver und -granulate, Würzmischungen), Speiseeis, Fruchtzubereitungen (Marmelade, Konfitüre, Fruchtsaucen), Desserts (Puddings, Götterspeise), Milchprodukte (Quark, Joghurt, Milchdrinks, Molkezubereitungen) sowie Cerealien (Cornflakes, Müsliriegel). Daneben ist auch die Verwendung in Nahrungsergänzungsmitteln und pharmazeutischen Produkten, wie Lutschtabletten, Hals- oder Hustenbonbons, pharmazeutischen Pulvern, Tabletten oder Granulaten vorteilhaft.

Bei erfindungsgemäßen Snacks handelt es sich vorzugsweise um salzige Knabberartikel, wie beispielsweise Kartoffel-Maischips, Extrudate, Pellets, Popcorn, Cracker, Laugengebäck und in Fett oder im Ofen ausgebackene Teigprodukte. Erfindungsgemäße Aromastoffinklusionscellulose oder eine die erfindungsgemäße Aromastoffinklusionscellulose umfassende Aromakomposition können in einen Snack-Artikel eingearbeitet oder auf diesen aufgebracht werden. Die Einarbeitung bzw. Aufbringung kann über Aufstreuwürze, aufgesprühte Öl-Slurry, Fettfüllung oder Teigaromatisierung erfolgen.

Als weitere Bestandteile für erfindungsgemäße, der Ernährung oder dem Genuss dienende Zubereitungen oder Halbfertigwaren können übliche Grund-, Hilfs- und Zusatzstoffe für Nahrungs- oder Genussmittel verwendet werden, z.B. Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder - pasten oder deren Gemische), verdauliche oder nicht verdauliche Kohlenhydrate (z.B. Amylose, Amylopektin, Inulin, Xylane, Cellulose (nicht erfindungsgemäß)), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nicht-proteinogene Aminosäuren und verwandte Verbindungen (z.B. gamma-Aminobuttersäure, Taurin), Peptide (z.B. Glutathion), native oder prozessierte Proteine (z.B. Gelatine), Enzyme (z.B. Peptidasen), Nukleinsäuren, Nucleotide, Geschmackskorrigenzien für unangenehme Geschmackseindrücke, weitere Geschmacksmodulatoren für weitere, in der Regel nicht unangenehme Geschmackseindrücke, andere geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole, Gummi arabicum), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), Bitterstoffe (z.B. Chinin, Coffein, Limonin, Amarogentin, Humolone, Lupolone, Catechine, Tannine), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, Kühlwirkstoffe wie z.B. Menthol, Mentholderivate (z.B. L-Menthol, L-Menthyllactat, L-Menthylglutarat, L-Menthylsuccinat) oder Cubebol, synthetische, natürliche oder naturidentische Aromastoffe oder Riechstoffe sowie Geruchskorrigentien.

Erfindungsgemäße, der Ernährung oder dem Genuss dienende Zubereitungen oder Halbfertigwaren enthalten vorzugsweise zusätzlich ein oder mehrere Geschmackskorrigenzien, vorzugsweise ausgewählt aus der folgenden Liste: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxybenzyl)amid-Mono-natriumsalz, 2,4-Dihydroxybenzoesäure-N-2-(4-hydroxy-3-methoxyphenyl)ethylamid, 2,4-Dihydroxybenzoesäure-N-(4-hydroxy-3-ethoxybenzyl)amid, 2,4-Dihydroxybenzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine gemäß WO 2006/106023 sowie den darauf basierenden Dokumenten (Symrise) (z.B. 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen nach WO 2007/045566, Diacetyltrimere nach WO 2006/058893, Divanillin, Gemische von Molkeproteinen mit Lecithinen und/oder bittermaskierende Substanzen wie Gingerdione gemäß WO 2007/003527.

Erfindungsgemäße, der Ernährung oder dem Genuss dienende Zubereitungen oder Halbfertigwaren enthalten vorzugsweise zusätzlich ein oder mehrere Alkamide, vorzugsweise ausgewählt aus der Gruppe bestehend aus: 2E,4E-Decadiensäure-N-isobutylamid (Pellitorin), 2E,4Z- Decadiensäure-N-isobutylamid (cis-Pellitorin), 2Z,4Z-Decadiensäure-N-isobutylamid, 2Z,4E-Decadiensäure-N-isobutylamid, 2E,4E-Decadiensäure-N-([2S]-2-methylbutyl)amid, 2E,4E-Decadiensäure-N-([2S]-2-methylbutyl)amid, 2E,4E-Decadiensäure-N-([2R]-2-methylbutyl)amid, 2E,4Z-Decadiensäure-N-(2-methylbutyl)amid, 2E,4E-Decadiensäure-N-piperid (Achilleamid), 2E,4E-Decadiensäure-N-piperid (Sarmentin), 2E-Decensäure-N-isobutylamid, 3E-Decensäure-N-isobutylamid, 3E-Nonensäure-N-isobutylamid, 2E,6Z,8E-Decatriensäure-N-isobutylamid (Spilanthol), 2E,6Z,8E-Decatriensäure-N-([2S]-2-methylbutyl)amid (Homospilanthol), 2E,6Z,8E-Decatriensäure-N-([2R]-2-methylbutyl)amid, 2E-Decen-4-insäure-N-isobutylamid, 2Z-Decen-4-insäure-N-isobutylamid, Sanshoole.

Erfindungsgemäße Aromastoffinklusionscellulosen bzw. durch ein erfindungsgemäßes Verfahren hergestellte Aromastoffinklusionscellulosen lassen sich beispielsweise aufgrund des Iodbindungsvermögens von Cellulose sowie insbesondere durch NMR und Röntgenbeugungsspektroskopie nachweisen.

Wegen der überwiegenden Verwendung flüssiger Aromastoffe kann insbesondere das im Folgenden beschriebene Prinzip angewendet werden. Flüssige Aromastoffe (Aromastoffe, die nicht auf einen Träger aufgetragen sind) verursachen im Liquid Echo NMR-Experiment in der Zeitdomäne ein Signal mit einer anfänglichen Signalamplitude zum Zeitpunkt t=0 von A1(t=0), wobei A1(t=0) größer als 0 ist. Sofern die jeweilig verwendeten Aromastoffe in sonstiger nicht erfindungsgemäßer Art und Weise in Verbindung mit Cellulose vorliegen, beispielsweise als einfache Mischung aus Aromastoffen und Cellulose (welche mit dem menschlichen Auge betrachtet durchaus als Feststoff erscheinen kann), wird das Signal der Aromastoffe im Liquid Echo NMR-Experiment detektiert. Dabei stimmen A1(t=0) der flüssigen Aromastoffe und A2(t=0) einer entsprechenden nicht erfindungsgemäßen Aromastoff-Cellulosemischung unter der Voraussetzung, dass äquivalente Aromastoffmengen in beiden Ansätzen des NMR-Experiments verwendet werden, weitestgehend überein. In erfindungsgemäßen Aromastoffinclusionscellulosen dagegen werden die inkludierten Aromastoffe im Sinne des Liquid Echo NMR-Experiments in der Zeitdomäne nicht als Flüssigkeit detektiert, sondern sie verhalten sich wie Feststoffe, d.h. sie verursachen unter vergleichbaren Messbedingungen keine Signalintensität. A2(t=0) ist somit 0.

Das vorangehend beschriebene Prinzip lässt sich auch im Zusammenhang mit üblicherweise festen Aromastoffen anwenden, indem bei der NMR-Messung eine definierte Temperatur oberhalb des Schmelzpunktes der Aromastoffe verwendet wird.

Zur Bestimmung des Gesamtaromastoffgehalts X (d.h. Gehalt an inkludierten und nicht inkludierten Aromastoffen) einer Probe mit erfindungsgemäßer Aromastoffinclusionscellulose können insbesondere destillative und extraktive Probenaufarbeitungen bzw. Kombinationen davon verwendet werden. Insbesondere erfolgt die Probenaufarbeitung durch simultane Destillation und Extraktion (SDE), deren Durchführung dem Fachmann bekannt ist. Dabei ist darauf zu achten, dass die Gewinnung der Aromastoffe erschöpfend erfolgt, weshalb die Aufarbeitung mindestens 4 Stunden dauern sollte. Die Quantifizierung kann durch Gaschromatographie erfolgen.

Der inkludierte Aromastoffgehalt I (d.h. Gehalt an inkludierten Aromastoffen) einer Probe mit einer Aromastoff-Cellulosemischung bzw. mit Aromastoffinclusionscellulose kann berechnet werden aus:

$$I = X * \left( 1 - \frac{A2(t = 0)}{A1(t = 0)} \right)$$

mit

I = inkludierter Aromastoffgehalt
X= Gesamtaromastoffgehalt = Masse Aromastoffe / (Masse Aromastoffe + Masse Cellulose)
und
A2(t=0)= Anfangsamplitude zum Zeitpunkt t=0 der Aromastoff-Celluloseprobe bzw. der Aromastoffinklusionscellulose-Probe
A1(t=0)= Anfangsamplitude zum Zeitpunkt t=0 der Aromastoffe ohne Cellulose, wobei die Aromastoffmenge der Aromastoffgesamtmenge aus der Aromastoff-Celluloseprobe bzw. der Aromastoffinklusionscellulose-Probe entspricht.

Üblicherweise geht man bei der Bestimmung von A1(t=0) und A2(t=0) so vor, dass von einer zu untersuchenden Aromastoff-Celluloseprobe bzw. Aromastoffinklusionscellulose-Probe der Gesamtaromastoffgehalt X bestimmt wird.

A1(t=0) und A2(t=0) werden mit einem NMR-Gerät, z.B. dem Minispec mq 20 der Firma Bruker bestimmt. Zunächst wird ermittelt, wie viel Einwaage der Aromastoff-Celluloseprobe bzw. der Aromastoffinklusionscellulose-Probe $m_{(Probe)}$ in ein Probenröhrchen passt. Diese variiert in Abhängigkeit der Schüttdichte der Probe und beträgt üblicherweise 1 bis 2 g. Anhand der Masse $m_{(Probe)}$ wird mit Hilfe des Gesamtaromastoffgehaltes X die Masse der darin enthaltenen Aromastoffe $m_{(Aromastoff)}$ berechnet. Eine äquivalente Menge dieser Aromastoffe (ohne Cellulose) wird mit der Masse $m_{(Aromastoff)}$ in ein separates Probenröhrchen eingewogen und in den Probenschacht des NMR-Gerätes gestellt. Als NMR-Experiment wird ein 90° Puls, gefolgt von 180° Pulsen jeweils im Abstand von ca. 1,5 ms gewählt (Liquid Echo). Die Auswertungen finden in der Zeitdomäne statt. Die Anfangsamplitude wird über eine biexponentielle Regression ermittelt. Die Signalverstärkung (Gain) des Gerätes wird so angepasst, dass A1(t=0) der Aromastoffprobe ca. 75 +/- 10 % des Maximalwerts der darstellbaren Signalintensität beträgt. Die so eingestellte Signalverstärkung wird zur Bestimmung von A1(t=0) und A2(t=0) beibehalten. Nach Bestimmung von A1(t=0) wird A2(t=0) der Masse $m_{(Probe)}$ der Aromastoff-Celluloseprobe bzw. der Aromastoffinklusionscellulose-Probe bestimmt. Es ist besonderer Wert darauf zu legen, dass die Aromastoffe (ohne Cellulose) und die Aromastoff-Celluloseprobe bzw. die Aromastoffinklusionscellulose-Probe die gleiche Temperatur besitzen.

Erfindungsgemäß entspricht der inkludierte Aromastoffgehalt I besonders bevorzugt dem Gesamtaromastoffgehalt X. In diesem Fall beträgt der Quotient aus I und X I/X=1. Darüber hinaus ist es auch möglich und je nach Anwendung gegebenenfalls bevorzugt, eine Aromastoffinklusionscellulose in Form einer Mischung (eines Aggregats) herzustellen, in der (dem) erfindungsgemäß inkludierte Aromastoffe und in sonstiger Weise, insbesondere oberflächlich an die Cellulose angelagerte Aromastoffe enthalten sind. Solche Aromastoffinklusionscellulose-Formen entstehen insbesondere, wenn in der erfindungsgemäßen Herstellung mit Aromastoffüberschüssen gearbeitet wird und die oft leicht flüchtigen Quellmittel bereits verdampft sind, während die oft etwas schwerer flüchtigen Aromastoffe auf der Oberfläche der Cellulose verbleiben, wobei zusätzlich Aromastoffe in der Cellulose inkludiert sind. In diesen Fällen beträgt I/X zwischen etwa 0,1 und 0,999 und bevorzugt zwischen 0,5 und 0,999.

Dementsprechend betrifft die vorliegende Erfindung auch eine Mischung, umfassend oder bestehend aus erfindungsgemäß einzusetzender vorzugsweise vorangehend als bevorzugt bezeichneter Aromastoffinklusionscellulose und nicht inkludierten Aromastoffen, die zu den inkludierten Aromastoffen stofflich identisch sind, wobei die nicht inkludierten Aromastoffe teilweise an die Oberfläche der Aromastoffinklusionscellulose angelagert sind. Für bevorzugte Ausgestaltungen einer solchen erfindungsgemäßen Mischung und deren Bestandteile gilt das weiter oben Gesagte entsprechend.

Erfindungsgemäße Mischungen (wie oben beschrieben) können selbstverständlich noch weitere Aromastoffe (d.h. Aromastoffe, die sich stofflich von den inkludierten Aromastoffen unterscheiden) enthalten. Dadurch können in einer erfindungsgemäßen Mischung vorteilhafterweise gezielt Aromastoffe mit erfindungsgemäß einzusetzenden Aromastoffinklusionscellulosen kombiniert werden, um einen gewünschten Aroma-Gesamteindruck zu erzielen, der durch die erfindungsgemäß einzusetzenden Aromastoffinklusionscellulosen allein nicht zu erzielen wäre. Insbesondere können in einer solchen Mischung als weitere Aromastoffe vorteilhafterweise auch Aromastoffe enthalten sein, die für eine erfindungsgemäße Inklusion in Cellulose nicht geeignet bzw. nicht bevorzugt sind.

Die vorliegende Erfindung betrifft gemäß den vorangehenden Ausführungen auch eine Mischung, umfassend oder bestehend aus

(i+ii) erfindungsgemäß einzusetzender, vorzugsweise vorangehend als bevorzugt bezeichneter Aromastoffinklusionscellulose sowie
(iii) gegebenenfalls Begleitsubstanzen,
(iv) gegebenenfalls Wasser und
(v) nicht in Cellulose inkludierten Aromastoffen.

Die nicht in Cellulose inkludierten Aromastoffe (v) umfassen dabei - jeweils sofern vorhanden - sowohl Aromastoffe, die im Rahmen des erfindungsgemäßen Verfahrens zur Inklusion in Cellulose eingesetzt, dabei jedoch (trotz generell vorhandener Inkludierbarkeit) nicht inkludiert wurden, d.h. also Aromastoffe, die zu den inkludierten Aromastoffen stofflich identisch sind, als auch Aromastoffe, die als weitere, d.h. nicht zu inkludierende Aromastoffe zu den erfindungsgemäß einzusetzenden Aromastoffinklusionscellulosen zugegeben werden, wobei die weiteren Aromastoffe sich stofflich von den inkludierten Aromastoffen unterscheiden. Insbesondere können daher als nicht in Cellulose inkludierte Aromastoffe auch Aromastoffe enthalten sein, die nicht lipophil sind.

Für die Auswahl bevorzugter Bestandteile einer solchen Mischung gilt das oben Gesagte entsprechend. Besonders bevorzugt ist eine solche Mischung, wobei der Anteil erfindungsgemäß einzusetzender (i+ii) Aromastoffinklusionscellulose inklusive (iii) gegebenenfalls vorhandener Begleitsubstanzen und (iv) gegebenenfalls vorhandenem Wasser 50 bis 99,9 Gew.-%, bevorzugt 75 bis 99,9 Gew.-%, bezogen auf das Gesamtgewicht der Mischung beträgt. Besonders bevorzugt beträgt dabei der Anteil der (v) nicht in Cellulose inkludierten Aromastoffe 0,1 bis 50 Gew.-%, weiter bevorzugt 0,1 bis 25 Gew.-%, bezogen auf das Gesamtgewicht der Mischung.

Nachfolgend wird die Erfindung anhand von Beispielen näher erläutert. Sofern nicht anders angegeben, beziehen sich dabei alle Prozentangaben auf Masseprozente.

Beispiele:

Beispiel 1

10 g Cellulose (Haferfasern HF 600-30 von Firma Rettenmaier aus Rosenberg; Wassergehalt 9 %) werden mit 100 g Wasser versetzt, danach wird die Mischung bis zum Sieden erhitzt und eine Stunde leicht siedend gehalten (erste Quellung). Nach 30 Minuten Standzeit wird überschüssiges Wasser abdekantiert und die Cellulose mit dem noch anhaftenden Wasser wird mit 100 g Ethanol (Reinheit > 99,9%) versetzt. Die Mischung wird zum Sieden erhitzt und abgedeckt für 45 Minuten leicht siedend gehalten (zweite Quellung). Nach 30 Minuten Standzeit wird überschüssiges Wasser-Ethanol-Gemisch abdekantiert. Die Behandlung mit Ethanol wird insgesamt drei Mal durchgeführt. Nach dem letzten Dekantieren werden 10 g d-Limonen hinzugefügt und 30 Minuten mit einem Magnetrührer bei einer Temperatur von 25°C gerührt (Ersetzen inkludierten Quellmittels durch Aromastoff).

Die behandelte Cellulose wird in einen Dreihalskolben gefüllt. Der mittlere Hals wird verschlossen. Durch einen Hals wird trockene Luft mit einer relativen Feuchte von 0,1% und einer Temperatur von 20°C in den Kolben geleitet und über den offenen Hals abgeführt. Nach einer Zeit von etwa 24 Stunden ist die Entfernung des Ethanols und überschüssigen Limonens beendet und der Kolben wird verschlossen. Der Limonen-Cellulosekomplex (erfindungsgemäßer Aromastoffinklusionskomplex) weist bezogen auf das Gesamtgewicht des Limonen-Cellulosekomplexes einen Limonengehalt von 6,2% auf.

Die Aromagehalt-Angaben in den vorliegenden Beispielen beziehen sich jeweils auf den inkludierten Aromastoffgehalt.

Beispiel 2

10 g Cellulose aus Beispiel 1 werden mit einem Gemisch aus 30 g Wasser und 70 g Ethanol (Reinheit >99, 9%) versetzt. Die Mischung wird eine Stunde lang leicht siedend gehalten. Der Cellulose wird es ermöglicht zu sedimentieren und überschüssiges Wasser-Ethanolgemisch wird abdekantiert. 100 g Ethanol werden hinzugefügt und die Mischung wird 45 Minuten gekocht. Nach der Filtration durch ein Baumwolltuch wird die Cellulose ausgewrungen. Der Restgehalt der Quellmittel in der Cellulose-Quellmittelmischung beträgt 64%. 10 g d-Limonen werden hinzugefügt und mit einem Spatel in der ausgewrungenen Cellulose verteilt. Die Mischung wird in einen Dreihalskolben gefüllt und dieser wird für eine Zeit von 30 Minuten vollständig verschlossen. Anschließend wird für 24 Stunden trockene Luft mit einer Temperatur von 20°C durch den Kolben geleitet. Der Limonen-Cellulosekomplex weist einen Limonengehalt von 10,1% auf.

Beispiel 3

Beispiel 2 wird wiederholt, wobei die Entfernung der Quellmittel anstelle der Filtration durch Ausbreiten der Cellulose auf einem Tablett in Raumluft über 24 Stunden bei 20°C und einer relativen Luftfeuchte von 29% erfolgt. Der Limonen-Cellulosekomplex weist einen Limonengehalt von 5,1% auf.

Beispiel 4 (Vergleichsbeispiel)

10 g Cellulose aus Beispiel 1 werden mit 100 g Wasser versetzt, die Mischung wird zum Sieden erhitzt und eine Stunde leicht siedend gehalten. Nach 30 Minuten Standzeit wird das überschüssige Wasser abdekantiert und 10 g d-Limonen werden hinzugefügt. Die Mischung aus gequollener Cellulose, Wasser und d-Limonen wird 30 Minuten mit einem Magnetrührer bei einer Temperatur von 25°C gerührt. Die Mischung wird auf einem Tablett ausgebreitet und für 24 Stunden in Raumluft bei einer Temperatur von 20°C und einer relativen Luftfeuchte von 29% getrocknet. Der Limonengehalt der Cellulose beträgt < 0,01%. Das Limonen wurde nicht in die Cellulose inkludiert. Es ist kein erfindungsgemäßer Limonen-Cellulosekomplex entstanden.

Beispiel 5

10 g Cellulose aus Beispiel 1 werden mit 30 g Wasser und 70 g Ethanol versetzt und die Mischung wird für eine Stunde leicht siedend gehalten. Die überschüssige Quellmittelmischung wird abgepresst (der Quellmittelgehalt an der Mischung nach dem Pressen beträgt 50%) und es wird erneut mit 100 g Ethanol gekocht. Überschüssiges Quellmittel wird abgepresst (der Quellmittelgehalt an der Mischung nach dem Pressen beträgt 50%) und mit 1 g d-Limonen versetzt.

Mit einem Spatel wird das Limonen in der vorbehandelten Cellulose verteilt und die Mischung (erscheint als Feststoff) in einem verschlossenen Dreihalskolben für eine Stunde bei 20°C gelagert. Anschließend werden restliche Quellmittel mit trockener Luft analog Beispiel 2 entfernt. Die Limonenbeladung des erfindungsgemäßen Limonen-Cellulosekomplexes beträgt 8,2%. Die Limonenverluste betragen lediglich 10%, d.h. 90% des eingesetzten Limonens konnten in die Cellulose inkludiert werden.

Beispiel 6

Beispiel 5 wird wiederholt, wobei die Quellmittel nach der zweiten Ethanolbehandlung nicht abgepresst, sondern lediglich abdekantiert werden. Nach dem Zusatz von einem Gramm d-Limonen entsteht eine rührfähige (flüssige) Masse, die für eine Stunde mit einem Magnetrührer bei 20°C gerührt wird. Nach dem Entfernen der Quellmittel analog zu Beispiel 5 beträgt die Limonenbeladung des erfindungsgemäßen Limonen-Cellulosekomplexes 1,9%. Die vergleichende Betrachtung zwischen Beispiel 5 und 6 zeigt die Vorteile einer deutlichen Reduktion der Quellmittelrestmenge vor der Behandlung mit dem Aromastoff d-Limonen.

Beispiel 7

Beispiel 5 wird wiederholt, wobei anstelle des d-Limonens Geraniol verwendet wird. Die Geraniolbeladung des Geraniol-Cellulosekomplexes beträgt 8,9%. Die Verluste betragen lediglich 1%.

Beispiel 8

10 g Pulvercellulose (Vitacel (R) L101 von Fa. Rettenmaier aus Rosenberg) werden in 100 g Wasser für eine Stunde gekocht. Anschließend wird überschüssiges Wasser abdekantiert. In einem Perkolationsgefäß wird das in der Cellulose verbleibende Restwasser durch Perkolation mit 100 ml Ethanol bei 70°C über einen Zeitraum von einer Stunde perkoliert. Die Cellulose wird mit einem Gramm d-Limonen versetzt und die Quellmittel werden wie in Beispiel 1 entfernt.

Beispiel 9

Ein Baumwolltuch wird über die Öffnung eines mit wenig Wasser gefüllten Becherglases gespannt. 10 g Pulvercellulose aus Beispiel 8 werden auf das Baumwolltuch gelegt und für 30 Minuten über dem siedenden Wasser gedämpft. Durch diese Behandlung hat die Pulvercellulose 9,7 g Wasser aufgenommen. Das Baumwolltuch einschließlich der vorgequollenen Cellulose wird über ein Becherglas mit Ethanol gespannt und 60 Minuten über dem siedenden Ethanol gedämpft. 1 g Orangenöl werden hinzugefügt und mit einem Spatel in der vorbehandelten Cellulose verteilt. Die Mischung (Feststoff) wird in einen Dreihalskolben gegeben, und die Quellmittel werden wie in Beispiel 1 angegeben entfernt. Der Gehalt inkludierten Orangenöls beträgt 5,3%.

Beispiel 10

10 g Cellulose aus Beispiel 1 und 5 g Wasser werden in einem verschlossenen, dichten Gefäß bei 120°C für eine Stunde erhitzt. Die Mischung wird auf 20°C abgekühlt. 100 g Ethanol werden hinzugefügt und die Mischung wird 30 Minuten leicht siedend gehalten. Die überschüssigen Quellmittel werden abgepresst. Die Cellulose (mit inkludiertem und anhaftendem Quellmittel) wird in einen Dreihalskolben gegeben und mit trockener Luft (relative Feuchte 0,1%) auf einen Quellmittelgesamtgehalt von 20% getrocknet. 1 g Zitronenaroma wird hinzugefügt und der Dreihalskolben verschlossen. Nach einer Stunde Standzeit wird die Entfernung der Quellmittelreste fortgesetzt.

Beispiel 11

10 g Cellulose und 15 g Eisessig werden in einem verschlossenen, dichten Gefäß bei 120°C für 2 Stunden erhitzt und auf 30°C abgekühlt. Geraniol wird hinzugefügt und die Mischung wird anschließend bei 25°C mit trockener Luft behandelt.

Beispiel 12

10 g Cellulose und 15 g Eisessig werden in einem verschlossenen, dichten Gefäß bei 120°C für 60 Minuten erhitzt. Nach dem Abkühlen auf 40°C werden 50 g Ethanol hinzugefügt und der verschlossene Ansatz wird bei 100°C für 30 Minuten zur Reaktion gebracht. Die nach Essigsäureethylester riechende Cellulose wird mit einer Mischung aus 0,5 g Limonen und 0,5 g Geraniol versetzt und anschließend mit trockener Luft behandelt.

Beispiel 13

10 g Cellulose werden bei 25°C über 24 Stunden in 50 g Eisessig gequollenen. Die überschüssige Essigsäure (Eisessig) wird abdekantiert und 100 g Ethanol werden hinzugefügt. Nach einer Standzeit von einer Stunde bei Raumtemperatur wird die überstehende Flüssigkeit entfernt und die Cellulose wird gepresst, bis ein Quellmittelrestgehalt von 45% in der Cellulose-Quellmittelmischung vorliegt. Analog zu Beispiel 2 wird Limonen hinzugefügt und die Quellmittel entfernt.

Beispiel 14

Beispiel 2 wird wiederholt, wobei anstelle der eingesetzten Cellulose eine mikrokristalline Cellulose verwendet wird.

Beispiel 15

Beispiel 8 wird wiederholt, wobei anstelle des Limonens ein Erdbeeraroma verwendet wird.

Beispiel 16

Beispiel 9 wird wiederholt, wobei anstelle des Orangenöls ein Kaffeearoma verwendet wird.

Beispiel 17

Beispiel 10 wird wiederholt, wobei anstelle des Zitronenaromas ein Vanillearoma verwendet wird.

Beispiel 18

Beispiel 11 wird wiederholt, wobei anstelle des Geraniols ein Rindfleischaroma verwendet wird.

Beispiel 19

Beispiel 12 wird wiederholt, wobei anstelle des Limonens ein Rumaroma verwendet wird.

Beispiel 20

10 g Cellulose aus Beispiel 1 wird für 3 Stunden mit 100 ml einer 1%-igen Salzsäurelösung bei 80°C behandelt. Die Cellulose wird mit Wasser bis zur pH-Neutralität gewaschen. Nach dem Pressen (Restwassergehalt 46%) wird die vorbehandelte Cellulose für 30 min in 100 ml Ethanol gekocht. Die verbleibenden Quellmittel (Wasser und Ethanol) werden abgepresst (Restquellmittelgehalt 46%), 1 g Haselnussaroma werden hinzugefügt und die Mischung wird im geschlossenen Dreihalskolben für 20 Minuten bei 60°C temperiert. Die Mischung wird auf 20°C abgekühlt und die inkludierten Quellmittel werden mit trockener Luft entfernt.

Beispiel 21 (Vergleichsbeispiel)

10 g Cellulose aus Beispiel 1 (Haferfasern HF600-30, Wassergehalt 9%) werden mit 100 g Ethanol versetzt, die Mischung wird zum Sieden erhitzt und eine Stunde leicht siedend gehalten. Nach 30 Minuten Standzeit wird das überschüssige Ethanol abdekantiert und 10 g d-Limonen werden hinzugefügt. Die Mischung aus gequollener Cellulose, Ethanol und d-Limonen wird 30 Minuten mit einem Magnetrührer bei einer Temperatur von 25°C gerührt. Die Mischung wird auf einem Tablett ausgebreitet und für 24 Stunden in Raumluft bei einer Temperatur von 20°C und einer relativen Luftfeuchte von 29% getrocknet. Der Limonengehalt der Cellulose beträgt lediglich 0,1%. Das Limonen wurde nicht in die Cellulose inkludiert.

Beispiel 22

10 g Haferfaser aus Beispiel 1 werden für 10 Minuten in 90 g einer 20%-igen, wässrigen Natriumhydroxydlösung gekocht. 37%-ige Salzsäure wird tropfenweise hinzugefügt, bis das Ausfällen der gelösten Anteile beobachtet werden kann. Weitere 2 ml Salzsäure werden hinzugefügt bis der pH-Wert 0,5 beträgt. Die Fasern werden abfiltriert, mit Wasser bis zur pH-Neutralität gewaschen und auf einen Restwassergehalt von 50% gepresst. Anschließend wird zweimal mit je 100 g Ethanol gekocht und zu der Mischung werden 10 g d-Limonen hinzugefügt. Die Masse wird auf einem Tablett ausgestrichen und bei 25°C bei einer relativen Luftfeuchte von 37% getrocknet. Der Limonengehalt der erfindungsgemäßen Limonenkomplexe beträgt 8,2%.

Beispiel 23

Der erfindungsgemäße Limonen-Cellulosekomplex aus Beispiel 22 wird für 24 Stunden in einem offenen Becherglas bei 100°C im Umlufttrockenschrank gelagert. Der Limonengehalt verringert sich durch die Temperaturbehandlung von 8,2 % auf 7,6%. Dies entspricht einem Verlust von lediglich 9%. Vergleichsweise wird der Test mit einer nicht erfindungsgemäßen einfachen Mischung aus Limonen und Cellulose durchgeführt (Limonen wird auf trockene Cellulose gegeben und 30 min gemischt). Nach der Temperaturbehandlung ist kein Limonen mehr in der einfachen Mischung nachweisbar. Die Limonenverluste betragen 100%. Die Lagerstabilität erfindungsgemäß in Cellulose inkludierter Aromastoffe konnte also deutlich erhöht werden.

Beispiel 24

10 g Haferfaser aus Beispiel 1 werden für 10 Minuten in 90 g einer 20%-igen, wässrigen Natriumhydroxydlösung gekocht. Die Fasern werden abfiltriert, mit Wasser bis zur pH-Neutralität gewaschen und auf einen Restwassergehalt von 50% gepresst. Anschließend wird zweimal mit je 100 g Ethanol gekocht sowie gepresst und zu der Mischung werden 10 g d-Limonen hinzugefügt. Die Masse wird bei 0% relativer Luftfeuchte getrocknet. Der Limonengehalt beträgt 6,9%.

Beispiel 25

10 g Haferfaser aus Beispiel 1 werden für 10 Minuten in 90 g einer 20%-igen, wässrigen Natriumhydroxydlösung gekocht. 37%-ige Salzsäure wird tropfenweise hinzugefügt, bis das Ausfällen der gelösten Anteile beobachtet werden kann. Weitere 2 ml Salzsäure werden hinzugefügt bis der pH-Wert 0,5 beträgt. Die Fasern werden abfiltriert, mit Wasser bis zur pH-Neutralität gewaschen und auf einen Restwassergehalt von 50% gepresst. Anschließend wird dreimal mit je 100 g Ethanol gekocht und zu der Mischung werden 10 g d-Limonen hinzugefügt. Die Masse wird bei einer relativen Luftfeuchte von 0% getrocknet. Der Limonengehalt der erfindungsgemäßen Limonen-Cellulosekomplexe beträgt 22,6 %.

Beispiel 26

Muster aus den Beispielen 8, 14 und 22 (d.h. Proben der erfindungsgemäßen Aromastoffinklusionscellulosen) werden in einem geschlossenen Gefäß im Labor gelagert. Bei einer Verkostung der Proben wurde eine sensorische Fehlerfreiheit festgestellt, d.h. die Oxidation des Limonens wurde unterbunden. Vergleichsweise angefertigte sprühgetrocknete Muster (Limonen im Trägerstoffsystem Gummi-Arabicum und Maltodextrin) wiesen deutliche Fehlnoten auf, d.h. das Limonen wurde oxidiert. Die erfindungsgemäßen Aromastoffinklusionscellulosen waren den sprühgetrockneten Erzeugnissen hinsichtlich der Oxidationsstabilität also deutlich überlegen.

Beispiel 27

10 g mikrokristalline Cellulose (Vivapur (R) 101 der Fa. Rettenmaier aus Rosenberg) werden für 60 Minuten in 50 g Wasser gekocht. Der Wassergehalt wird durch Pressen auf 35% reduziert. Die Cellulose wird in ein waagerecht gelagertes Glasrohr gelegt. Ein trockener Luftstrom wird in einer Gaswaschflasche mit trockenem Ethanol angereichert und durch das Rohr mit der Cellulose geleitet. Das freie Ende des Rohrs wird so verschlossen, dass der Luftstrom gerade noch entweichen kann. Das (inkludierte) Wasser wird nun durch Ethanol ersetzt. Nach 24 Stunden Behandlungszeit wird die behandelte Cellulose mit 1 g Kaffeearoma versetzt und für 30 Minuten in einem verschlossenen Gefäß gelagert. Das (nicht durch Aromastoffe ersetzte) Ethanol wird mit Hilfe eines trockenen Luftstroms entfernt, wobei das Kaffeearoma in der Cellulose inkludiert wird.

Beispiel 28

10 g Pulvercellulose werden für 30 Minuten in 80 ml Wasser gekocht. Das Wasser wird abgepresst (Wassergehalt der Cellulose nach dem Pressen: 45%). Die Cellulose wird in ein waagerecht gelagertes Glasrohr gefüllt und anschließend wird das Glasrohr leicht aus der waagerechten Position gebracht, sodass ein leichtes Gefälle entsteht. In einem Kolben wird wasserfreies Ethanol erhitzt, bis es leicht siedet. Die Dämpfe werden in das Glasrohr mit der Cellulose übergeleitet, wo sie zum Teil als Kondensat und zum Teil in gasförmiger Form das Wasser in der Cellulose ersetzen und abtransportieren. Nach einer Stunde Behandlungszeit wird die Cellulose mit einem Röstaroma versetzt und das (nicht durch Aromastoffe ersetzte) Ethanol im Vakuum entfernt.

Beispiel 29

Beispiel 24 wird wiederholt, wobei anstelle des d-Limonen ein Zwiebelaroma verwendet wird.

Beispiel 30

Beispiel 25 wird wiederholt, wobei anstelle der 10 g d-Limonen 2 g Laucharoma eingesetzt werden.

Beispiel 31

Beispiel 28 wird wiederholt, wobei anstelle des Röstaromas ein Tomatenaroma verwendet wird.

Beispiel 32

Beispiel 8 wird wiederholt, wobei anstelle des d-Limonen ein Sahnearoma verwendet wird.

Beispiel 33 (Vergleichsbeispiel)

10 g Cellulose aus Beispiel 1 werden mit 10 g d-Limonen gemischt. Diese einfache Mischung wird in den in Beispiel 1 dargestellten Dreihalskolben gefüllt und analog zu Beispiel 1 weiterbehandelt, d.h. der mittlere Hals wird verschlossen. Durch einen Hals wird trockene Luft mit 0% relativer Luftfeuchte und einer Temperatur von 20°C in den Kolben geleitet und über den offenen Hals abgeführt. Nach etwa 24 Stunden wird der Limonengehalt der Cellulose bestimmt. Er beträgt weniger als 0,01%. Dieses Beispiel verdeutlicht noch einmal, dass eine erfindungsgemäße Aromastoffinclusionscellulose nicht durch einfaches Mischen von Aromastoffen und (nicht erfindungsgemäß vorgequollener) Cellulose entsteht.

Beispiel 34

Das Beispiel demonstriert die Anwendung des oben beschriebenen Analyseverfahrens zur Bestimmung des Gesamtaromastoffgehalts X per SDE und GC-Quantifizierung sowie zur Bestimmung des inkludierten Aromastoffgehalts I unter Zuhilfenahme der NMR.

| | Gesamtaromastoffgehalt X | Inkludierter Aromastoffgehalt I |
|---|---|---|
| erfindungsgemäßer Limonen-Cellulosekomplex gemäß Bsp.1 | 6,2% | 6,2% |
| erfindungsgemäßer Limonen-Cellulosekomplex gemäß Bsp.2 | 10,1% | 10,1% |
| erfindungsgemäßer Geraniol-Cellulosekomplex gemäß Bsp.7 | 8,9% | 8,9% |
| erfindungsgemäßer Limonen-Cellulosekomplex gemäß Bsp.25 | 22,6% | 22,6% |
| Vergleich: einfache Mischung aus Limonen und Cellulose* | 10,1% | 0,0% |
| Vergleich: einfache Mischung aus Geraniol und Celllose* | 8,9% | 0,0% |
| * Die Herstellung erfolgt durch Mischen der jeweiligen Aromastoffe und der Cellulose mit einem Spatel. Anders als in Beispiel 33 wird die Mischung nicht weiterbehandelt, sondern direkt analysiert. | | |

Anwendungsbeispiele:

Beispiel F1: Kaugummis mit erfindungsgemäß einzusetzender Aromastoffinklusionscellulose

Die Kaugummibase K2 besteht aus 28,5% Terpenharz, 33,9% Polyvinylacetat (MW = 14000), 16,25% hydriertes Pflanzenöl, 5,5% Mono- und Diglyceride, 0,5% Polyisobuten (MW 75000), 2,0% Butyl Rubber (Isobuten-Isopren-Copolymer), 4,6% amorphes Siliciumdioxid (Wassergehalt ca. 2,5%), 0,05% Antioxidans tert.-Butylhydroxytoluol (BHT), 0,2% Lecithin und 8,5% Calciumcarbonat. Die Herstellung der Kaugummibase K2 und der Kaugummis kann analog zu US 6,986,907 erfolgen.

| | Rezeptur I (Gew.-%) | Rezeptur II (Gew.-%) | Rezeptur III (Gew.-%) |
|---|---|---|---|
| Kaugummibase K2 | 25,30 | 27,30 | 26,30 |
| Sorbitol | Ad 100 | Ad 100 | Ad 100 |
| Glycerin | 2,40 | 2,40 | 2,40 |
| Lecithin | 7,00 | 7,00 | 7,00 |
| Aspartam | 0,14 | 0,14 | 0,14 |
| Verkapseltes Aspartam | 0,68 | 0,68 | 0,48 |
| Menthol, sprühgetrocknet | 1,00 | 0,50 | 0,40 |
| Kirscharoma, sprühgetrocknet | - | 1,20 | - |
| Aromastoffinklusionscellulose aus Beispiel 9 | 1,45 | - | 0,50 |
| Aromastoffinklusionscellulose aus Beispiel 10 | - | 1,15 | 0,50 |

Die Kaugummis der Rezeptur (I) werden als Streifen, die der Rezepturen (II) und (III) als Pellets ausgeformt.

Beispiel F2: Zuckerfreie Hartkaramellen mit erfindungsgemäß einzusetzender Aromastoffinklusions-cellulose

| Inhaltsstoff | A (Gew.-%) | B (Gew.-%) |
|---|---|---|
| Palatinit, Typ M | Ad 100 % | Ad 100 % |
| Wasser | 24,82 % | 24,82 % |
| Pfefferminzaroma | 0,15% | 0,05% |
| Orangenaroma | - | 0,10 % |
| Hesperetin | - | 0,01 % |
| Spilanthol | - | 0,01 % |
| Trans-Pellitorin | 0,01 % | - |
| Aromastoffinklusionscellulose aus Beispiel 15 | 075% | 0,50 % |

Palatinit wird mit Wasser gemischt und die Mischung bei 165 °C aufgeschmolzen sowie anschließend auf 115°C abgekühlt. Aroma und erfindungsgemäße Aromastoffinklusionscellulose sowie trans-Pellitorin im Falle A und Spilanthol und Hesperetin im Falle B werden zugegeben und nach dem Durchmischen in Formen gegossen, nach dem Erstarren aus den Formen entfernt und anschließend einzeln verpackt.

Beispiel F3: Fettarme Joghurts mit erfindungsgemäß einzusetzender Aromastoffinklusionscellulose

EP 2 196 098 B1

|  | Zubereitung (Angaben in Gew.-%) | | |
|---|---|---|---|
| Inhaltsstoff | A | B | C |
| Sucrose | 10% | 8% | 6% |
| Tagatose | - | - | 0,5 % |
| Fructose | - | - | 0,5 % |
| Hesperetin | - | 0,01 % | 0,005 % |
| Phloretin | - | - | 0,005 % |
| Pfirsicharoma | 0,30 % | - | 0,40 % |
| Erdbeer-Rhabarberaroma | - | 0,25% | - |
| Aromastoffinklusionscellulose aus Beispiel 17 | 0,25 % | 0,90 % | 0,40 % |
| Joghurt, 0,1 % Fett | Ad 100 % | Ad 100 % | Ad 100 % |

Die Inhaltsstoffe werden gemischt und bei 5°C gekühlt.

Beispiel F4: Diätschokolade auf Basis von Fructose mit erfindungsgemäß einzusetzender Aromastoffinklusionscellulose

Eine für Diabetiker geeignete Schokolade aus folgenden Zutaten wird hergestellt und in rechteckige Tafeln gegossen:

Kakaomasse, Fructose, Magermilchpulver, Kakaobutter, Inulin, Butterreinfett, Emulgator Sojalecithin, Walnüsse, Speisesalz, Joghurt-Vanille-Aroma (enthaltend Vanillin und 1 Gew.-% Hesperetin, bezogen auf das Gesamtgewicht des Vanille-Aromas) und 1 Gew.-% erfindungsgemäße Aromasstoffinklusionscellulose aus Beispiel 17.

Nährwert (pro 100 g):

Eiweiß 8,8 g, Kohlenhydrate 34 g (davon Fructose 23 g, Lactose 7,5 g, Saccharose 1,4 g), Fett 36 g; Ballaststoffe 18,5 g (davon 12,2 g Inulin); Natrium: 0,10 g. Kakao-Anteil mindestens 50 Gew.-%.

Beispiel F5: Müslimischung mit erfindungsgemäß einzusetzender Aromastoffinklusionscellulose

| Nr. | | A (Gew.-%) | B (Gew.-%) | C (Gew.-%) |
|---|---|---|---|---|
| 1 | Haferflocken | 17,00 | 17,00 | 17,00 |
| 2 | Knusprige Haferflocken Cluster | 10,00 | 10,00 | 10,00 |
| 3 | Reis Crispies | 16,90 | 16,90 | 16,90 |
| 4 | Cornflakes | 16,50 | 16,50 | 16,50 |
| 5 | Korinthen | 3,50 | 3,50 | 3,50 |
| 6 | Haselnüsse, zerhackt | 2,50 | 2,50 | 2,50 |
| 7 | Glucose Sirup aus Weizen, DE 30 | 9,50 | 9,50 | 9,50 |
| 8 | Saccharose | 19,00 | 19,00 | 19,00 |
| 9 | Wasser | 4,00 | 4,00 | 4,00 |
| 10 | Citronensäurepulver, wasserfrei | 0,10 | 0,10 | 0,10 |
| 11 | Aromastoffinklusionscellulose aus Beispiel 17 | 1,00 | - | 0,50 |
| 12 | Aromastoffinklusionscellulose aus Beispiel 20 | - | 1,00 | 0,50 |

Bestandteile Nr. 1 bis 6 werden in einer Drehtrommel gemischt (Mix 1). Bestandteile Nr. 7 bis 9 werden erwärmt und Bestandteile Nr. 10 bis 12 werden zugegeben (Mix 2). Mix 2 wird zu Mix 1 gegeben und gut gemischt. Zuletzt wird die resultierende Müslimischung auf ein Backblech gegeben und in einem Ofen bei 130°C für 8 Minuten getrocknet.

Beispiel F6: Fruchtgummis mit erfindungsgemäß einzusetzender Aromastoffinklusionscellulose

| Zutaten: | A (Gew.-%) | B (Gew.-%) |
|---|---|---|
| Wasser | 22,70 | 24,70 |
| Saccharose | 34,50 | 8,20 |
| Glucosesirup, DE 40 | 31,89 | 30,09 |
| Iso Syrup C* Tru Sweet 01750 (Cerestar GmbH) | 1,50 | 2,10 |
| Gelatine 240 Bloom | 8,20 | 9,40 |
| Polydextrose (Litesse® Ultra, Danisco Cultor GmbH) | - | 24,40 |
| Gelber und roter Farbstoff | 0,01 | 0,01 |
| Citronensäure | 0,20 | 0,10 |
| Orangenaroma | - | 0,10 |
| Aromastoffinklusionscellulose aus Beispiel 9 | 1,0 | 0,90 |

Beispiel F7: Kaubonbon mit erfindungsgemäß einzusetzender Aromastoffinklusionscellulose

Zutatenliste:

| Wasser | | 77 % |
|---|---|---|
| Zucker | Raffinade C4 | 41,0 % |
| Glucose Sirup | Dextrose 40 | 37,3 % |
| Gehärtetes Pflanzenfett | Schmelzpunkt 32-36 °C | 6,6 % |
| Lecithin | Emulgator (Sojalecithin) | 0,3 % |
| Gelatine | Schweinegelatine | 0,8 % |
| Fondant | Typ - S30 | 4,9 % |
| Aromastoffinklusionscellulose aus Beispiel 10 | | 1,4 % |

Beispiel F8: Fruchtiger Müsliriepel mit erfindungsgemäß einzusetzender Aromastoffinklusionscellulose

Zutatenliste:

| Saccharose | Zucker | 17,0 % |
|---|---|---|
| Dextrose 40 | Glucose Sirup | 14,7 % |
| Sorbit P 300 | Feuchthaltemittel | 5,0 % |
| Pflanzenfett | Schmelzpunkt 37°C | 5,0 % |
| Wasser | | 3,0 % |
| Haferflocken | | 13,3 % |

(fortgesetzt)

| | | |
|---|---|---|
| Haferflakes | Hafer Extrudate | 10,0 % |
| Cornflakes | | 5,5 % |
| Rice Crispies | Reis Extrudate | 20,0 % |
| Korinthen | | 5,0 % |
| Aromastoffinklusionscellulose aus Beispiel 17 | | 1,3 % |
| Zitronensäure, Puder | | 0,2 % |

Beispiel F9: Waffel-Fettfüllung mit erfindungsgemäß einzusetzender Aromastoffinklusionscellulose

Zutatenliste:

| | | |
|---|---|---|
| Pflanzenhartfett | Schmelzpunkt 33 - 35 °C | 42,2 % |
| Puderzucker | | 37,0 % |
| Dextrose | Traubenzucker, wasserfrei, mikrofein | 19,0 % |
| Citronensäure | | 0,3 % |
| Aromastoffinklusionscellulose aus Beispiel 10 | | 1,5 % |

Herstellungshinweise: Das Fett auf Raumtemperatur / ca. 21 °C temperieren. Den Puderzucker fein absieben. Alle Zutaten, inklusive Aroma, in einen Hobart-Laborrührer aufschlagen.

Beispiel F10: Sandkuchen mit erfindungsgemäß einzusetzender Aromastoffinklusionscellulose

Zutatenliste / Basisrezeptur Sandkuchen:

| | | |
|---|---|---|
| Weizenmehl | Typ 405 | 15,90 % |
| Weizenstärke | | 4,40 % |
| Saccharose | Zucker, EG Qualität I | 19,20 % |
| Kochsalz | | 0,14 % |
| Kartoffelmehl | | 6,22 % |
| Eigelbpulver | | 1,84 % |
| Backpulver | | 0,70 % |
| Aufschlagemulgator | Mono-Diglyceride | 1,42 % |
| Wasser | | 18,85 % |
| Reinfett | Schmelzpunkt ca. 34 °C | 13,89 % |
| Eier | | 16,02 % |
| Beta-Carotin, 1 %ige Lösung | | 1,41 % |
| Aromastoffinklusionscellulose aus Bsp. 27 | | 0,01% |

Herstellungshinweise:

Das Fett temperieren. Alle Trockenstoffe einschließlich des erfindungsgemäßen Verkapselungsproduktes in die Rührschüssel des Hobart-Labormixers geben. Dann Reinfett, Wasser und Eier hinzugeben und 1 Minute auf Stufe 1 sowie 2 Minuten auf Stufe 3 aufschlagen. Den Teig in eine Backform geben und 55 Minuten bei 180° C backen.

Beispiel F11: Mürbeteigkekse (Industriequalität) mit erfindungsgemäß einzusetzender Aromastoffinklusionscellulose

Zutatenliste:

| Weizenmehl | Typ 550 | 53,49 % |
|---|---|---|
| Pflanzenweichfett | Schmelzpunkt 24 / 26 °C | 19,0 % |
| Puderzucker | | 19,0 % |
| Salz | | 0,4 % |
| Ammoniumbicarbonat | Triebmittel | 0,4 % |
| Magermilchpulver | | 1,0 % |
| Maltosesirup | DE 60,5 | 1,2 % |
| Wasser | | 5,50 % |
| Aromastoffinklusionscellulose aus Beispiel 28 | | 0,005% |

Herstellungshinweise:

a) Puderzucker, Maltosesirup, Magermilchpulver und Pflanzenweichfett im Hobart-Laborkneter auf Stufe 1 glattlaufen lassen.
b) Mit einem Teil des Wassers das Ammoniumbicarbonat lösen und das restliche Wasser zur Mischung aus a) geben und kurz mischen.
c) Die restlichen Zutaten mit der Aromastoffinklusionscellulose aus Beispiel 28 zu Mischung a) geben und zu einem glatten Teig ausarbeiten.
d) Den Teig mit der Ausrollmaschine auf ca. 3 mm Dicke ausrollen, evtl. mit einem Reliefholz ein Muster aufbringen, und in der gewünschten Form ausstechen.

Enddicke des Teiges: ca. 2,6 mm; Ofentemperatur: 200°C, Backzeit: 6 Minuten.

Beispiel F12: Snack-Artikel mit erfindungsgemäß einzusetzender Aromastoffinklusionscellulose

Beispielrezeptur für die Herstellung von Crackern:

Weizenmehl (60-63%), Backpulver (1,0-1,5%), Pflanzenfett (6,0-6,5%), Maltosesirup (2,0-2,5%), Emulgator (1,2-1,8%), Ammoniumbicarbonat (1,5-2,0%), Sprühmagermilchpulver (1,0-1,5%), Backfrischhefe (0,3-0,9%), Speisesalz (0,3-0,6%), Wasser (20,0-23,5%), erfindungsgemäße Aromastoffinklusionscellulose (ca. 0,01 Gew.-%), dabei vorzugsweise eine Aromastoffinklusionscellulose gemäß Beispiel 18.
Die Cracker werden nach dem Mischen der Zutaten gebacken oder frittiert.

Beispiel F13: Aufstreuwürzung (Seasoning) mit erfindungsgemäß einzusetzender Aromastoffinklusionscellulose

Beispielrezeptur für die Herstellung von Aufstreuwürzungen (Seasonings) z.B. für Snacks (Knabberartikel):
Speisesalz (10-25%), Träger (z.B. Molkenpulver) (40-60%), Füllstoffe (z.B. Fettpulver) (5-15%), Geschmacksverstärker (1,5-3,5%), Hilfsmittel (z.B. Kieselsäure) (0,1-5%), Käsepulver (10-30%), hydrolysierte pflanzliche Proteine (5-10%), Hefe-Extrakt (5-15%), Gewürze (1-5%), Säuerungsmittel (z.B. Citronensäure) (0,1-1,0%), Farbe (z.B. Paprika-Extrakt) (0,1-1,0%), erfindungsgemäße Aromastoffinklusionscellulose aus Beispiel 29 (0,05-0,5 Gew.-%).

Beispiel F14: Lauchcreme Suppe mit erfindungsgemäß einzusetzender Aromastoffinklusionscellulose

Eine Lauchcremesuppe wird nach folgender Rezeptur hergestellt: Milchfettbaustein, Vana Crema (25-30%), Kartoffelstärke (15-25%), Milchzucker, Lactose (18-22%), Maltodextrin (10-12%), Salz (7-9%), Glutamat Mononatriumsalz (2-4%), Pflanzenfett (2-4%), Spinatpulver (1-2%), Zitronensäurepulver (0,2-0,4%), Lauchpulver (1-2%), Lauchstückchen gefriergetrocknet (ca. 10x10 mm) (0,5-1,5%), Gemüsebrühepulver (0,2-0,5%), Curcuma Extrakt (0,05-0,1%), erfindungsgemäßes Verkapselungsprodukt aus Beispiel 30 (0,01-0,1 Gew.-%).

Beispiel F15: Würzmischung für Kartoffelchips mit erfindunpspemäß einzusetzender Aromastoffinklusionscellulose

| Bestandteil | Rezeptur A |
|---|---|
| Natriumglutamat | 3,50 g |
| Käsepulver | 10,00 g |
| Knoblauchpulver | 2,00 g |
| Molkenpulver | 38,86 g |
| Würzextraktöl | 0,20 g |
| Paprikapulver | 9,80 g |
| Kochsalz | 19,00 g |
| Tomatenpulver | 9,00 g |
| Trockenaroma | 2,50 g |
| Siliciumdioxid | 0,02 g |
| Pflanzenöl | 0,02 g |
| Zwiebelpulver | 3,00 g |
| Käse Aroma | 0,03 g |
| Tomaten Aromakonzentrat | 0,04 g |
| Aromastoffinklusionscellulose gemäß Beispiel 32 | 2,00 g |

6 g der Würzmischung werden auf 94 g Kartoffelchips aufgezogen.

Beispiel F16: Weiße Soße mit erfindungsgemäß einzusetzender Aromastoffinklusionscellulose

| Bestandteil | Rezeptur |
|---|---|
| Maltodextrin | 28,42 g |
| Kochsalz | 5,35 g |
| Natriumglutamat | 2,00 g |
| Pflanzenfett | 5,00 g |
| Pfeffer, weiss | 0,02 g |
| Zwiebelpulver | 1,50 g |
| vorverkleisterte Maisstärke | 30,00 g |
| Fettpulver | 27,70 g |

(fortgesetzt)

| Bestandteil | Rezeptur |
|---|---|
| Aromastoffinklusionscellulose gemäß Beispiel 29 | 0,01 g |

90 g der Soßenmischung werden mit 1000 ml heißem Wasser aufgegossen und mit dem Schneebesen kräftig verrührt.

Beispiel F17: Braune Soße mit erfindungsgemäß einzusetzender Aromastoffinklusionscellulose

| Bestandteil | Rezeptur |
|---|---|
| Stärke | 39,00 g |
| Maltodextrin | 34,09 g |
| Kochsalz | 6,00 g |
| Zuckerkulör, sprühgetrocknet | 5,00 g |
| Hefeextraktpulver | 3,00 g |
| Natriumglutamat | 2,00 g |
| Zucker | 0,50 g |
| Fettpulver | 5,00 g |
| Tomatenpulver | 3,00 g |
| Natürliches Gemüseextrakt | 1,00 g |
| Zwiebelextrakt | 0,30 g |
| Pfefferextrakt | 0,10 g |
| Trockenaroma | 1,00 g |
| Aromastoffinklusionscellulose gemäß Beispiel 29 | 0,01 g |

90 g der Soßenmischung werden mit 1000 ml heißem Wasser aufgegossen und mit dem Schneebesen kräftig verrührt.

Beispiel F18: Tomatensuppe mit erfindungsgemäß einzusetzender Aromastoffinklusionscellulose

| Bestandteil | Rezeptur |
|---|---|
| Wasser | 50,70 g |
| Pflanzenöl | 5,50 g |
| Tomatenpaste | 24,00 g |
| Sahne | 1,00 g |
| Zucker | 2,00 g |
| Kochsalz | 1,70 g |
| Natriumglutamat | 0,40 g |
| Weizenmehl | 5,50 g |
| Stärke | 1,20 g |

(fortgesetzt)

| Bestandteil | Rezeptur |
|---|---|
| gewürfelte Tomaten | 7,50 g |
| Aromastoffinklusionscellulose gemäß Beispiel 31 | 0,5 g |

Die festen Bestandteile werden eingewogen, gemischt und dem Wasser hinzugefügt. Das Pflanzenöl wird zudosiert und die Tomatenpaste hinzugegeben. Die Mischung wird unter Rühren aufgekocht.

Beispiel F19: Instantsuppe mit erfindungsgemäß einzusetzender Aromastoffinklusionscellulose, Typ Lauch-Creme

| Bestandteil | Einwaage |
|---|---|
| Kartoffelstärke | 20,0 g |
| Fettpulver | Ad 100 g |
| Lactose | 20,0 g |
| Maltodextrin | 11,73 g |
| Kochsalz | 8,0 g |
| Natriumglutamat | 3,0 g |
| Spinatpulver | 2,0 g |
| Grünes Lauchpulver | 2,0 g |
| Citronensäure, als Pulver | 0,3 g |
| Gehärtetes Pflanzenfett | 3,0 g |
| Gefriergetrockneter Lauch | 1,0 g |
| Huhnaroma | 1,0 g |
| Würzmischung, Typ "gekochte Zwiebel" | 0,6 g |
| Hefe-Würzmischung, Typ "Gemüsebrühe", Pulver | 0,3 g |
| Curcuma-Extrakt | 0,07 g |
| Aromastoffinklusionscellulose gemäß Beispiel 30 | 0,1 g |

5 g der Pulvermischung werden mit je 100 ml heißem Wasser aufgegossen, um eine verzehrfertige Suppe zu erhalten.

Beispiel F20: Würzmischung mit erfindungsgemäß einzusetzender Aromastoffinklusionscellulose, Typ "Pfeffer":

| Bestandteil | Rezeptur |
|---|---|
| Milchprotein | 0,8 g |
| Johannisbrotkernmehl | 2,0 g |
| Maisstärke | Ad 100 g |
| Kochsalz | 14,0 g |
| Paprikapulver | 12,0 g |
| Tomatenpulver | 12,0 g |

(fortgesetzt)

| Bestandteil | Rezeptur |
|---|---|
| Saccharose | 4,0 g |
| Knoblauchpulver | 0,5 g |
| Gehärtetes Pflanzenfett | 8,0 g |
| Fettpulver | 10,0 g |
| Natriumglutamat | 6,0 g |
| Lebensmittelfarbstoff Rote Bete und Paprika | 2,0 g |
| Aroma Typ "Pfeffer" | 2,0 g |
| Aroma Typ "Pizza" | 1,2 g |
| Aromastoffinklusionscellulose gemäß Beispiel 31 | 0,4 g |
| Extrakt aus schwarzem Pfeffer | 0,1 g |

100 g Nackensteak vom Schwein werden mit jeweils 1,7 g der Zubereitung gleichmäßig bestreut und gebraten.

Beispiel F21: Bouillon mit erfindungsgemäß einzusetzender Aromastoffinklusionscellulose

| Bestandteil | Einwaage |
|---|---|
| Fettpulver | 8,77 g |
| Natriumglutamat | 8,77 g |
| Hefeextrakt Pulver | 12,28 g |
| Kochsalz | 29,83 g |
| Maltodextrin | Ad 100 g |
| Natürlicher Gemüseextrakt | 3,07 g |
| Aromastoffinklusionscellulose gemäß Beispiel 29 | 0,01 g |
| Aromastoffinklusionscellulose gemäß Beispiel 31 | 0,5 g |

15 g der Pulvermischung werden mit 1000 ml heißem Wasser aufgegossen und ggf. für bis zu 30 Minuten gekocht, wobei zusätzlich Nudeln hinzugefügt werden können.

Beispiel F22: Tomatenketchup mit erfindungsgemäß einzusetzender Aromastoffinklusionscellulose

| Inhaltsstoff | (Gew.-%) |
|---|---|
| Kochsalz | 2 |
| Stärke, Farinex WM 55 | 1 |
| Sucrose | 12 |
| Hesperetin 2,5%ig in 1,2-Propylenglycol | 0,4 |
| Tomaten-Konzentrat 2-fach | 40 |
| Glucosesirup 80 Brix | 18 |
| Branntweinessig 10% | 7 |

(fortgesetzt)

| Inhaltsstoff | (Gew.-%) |
|---|---|
| Wasser | Ad 100 |
| Aromastoffinklusionscellulose gemäß Beispiel 31 | 0,5 |

Die Inhaltsstoffe werden in der angegebenen Reihenfolge gemischt und das fertige Ketchup mit Hilfe eines Rührwerkes homogenisiert, in Flaschen abgefüllt und sterilisiert.

## Patentansprüche

1. Verfahren zur Herstellung einer Aromastoffinklusionscellulose, umfassend die folgenden Schritte:

(I) Inkludieren eines oder mehrerer primärer Quellmittel (A) in Cellulose;
(III) teilweises oder vollständiges Ersetzen inkludierten Quellmittels durch einen, zwei, drei, vier oder mehr Aromastoffe, mit der Maßgabe, dass die Aromastoffe keine Alkansäuren mit 1 bis 4 C-Atomen sind,

so dass die Aromastoffe in die Cellulose inkludiert werden,
wobei (a) vorzugsweise in Schritt (III) inkludiertes Quellmittel nur teilweise ersetzt wird und das Verfahren zusätzlich den folgenden Schritt umfasst:

(IV) Entfernen nicht durch Aromastoffe ersetzten, inkludierten Quellmittels und/oder

wobei (b) das Verfahren optional zusätzlich den folgenden Schritt umfasst:

(II) teilweises oder vollständiges Ersetzen inkludierten primären Quellmittels (A) durch ein oder mehrere sekundäre Quellmittel (B), so dass diese in die Cellulose inkludiert werden,

sowie anschließend optional den Schritt:

(IIb) teilweises oder vollständiges Ersetzen in Cellulose inkludierten sekundären Quellmittels (B) durch ein oder mehrere weitere sekundäre Quellmittel (B)

sowie gegebenenfalls Wiederholung dieses Schrittes,
wobei in Schritt (I) die Cellulose in Mischung mit Hemicellulose und/oder Lignin vorliegt,
wobei

- der Anteil an Hemicellulose bezogen auf das Gesamtgewicht von Cellulose, Hemicellulose und Lignin 0,001 bis 80 Gew.-%, bevorzugt 5 bis 50 Gew.-%, besonders bevorzugt 15 bis 40 Gew.-% beträgt, und/oder
- der Anteil an Lignin bezogen auf das Gesamtgewicht von Cellulose, Hemicellulose und Lignin 0,01 bis 10 Gew.-%, bevorzugt 0,1 bis 8 Gew.-% und besonders bevorzugt 1 bis 7 Gew.-% beträgt,

wobei
für den Fall, dass das Verfahren Schritt (II) umfasst das bzw. eines, mehrere oder sämtliche der primären Quellmittel (A) ausgewählt sind aus der Gruppe (a1) bestehend aus Wasser, Glycerin, Propylenglycol, Ameisensäure, Ammoniak, wässrige Lösungen von Metallhydroxiden, insbesondere von Natriumhydroxid und Kaliumhydroxid, und deren Mischungen; vorzugsweise aus der Gruppe bestehend aus Wasser, wässrige Lösungen von Natriumhydroxid und wässrige Lösungen von Kaliumhydroxid,
für den Fall, dass das Verfahren keinen Schritt (II) umfasst, das bzw. eines der primäre(n) Quellmittel (A) Essigsäure ist,
wobei das bzw. eines, mehrere oder sämtliche der sekundären Quellmittel (B) ausgewählt sind aus der Gruppe bestehend aus Ethanol, Propanol, Butanol, Buttersäure, Propionsäure und deren Mischungen, vorzugsweise aus der Gruppe bestehend aus Ethanol und Propanol,
und wobei vorzugsweise das bzw. eines, mehrere oder sämtliche der primären Quellmittel (A) und/oder der sekundären Quellmittel (B) einen höheren Dampfdruck besitzen als der bzw. einer, mehrere oder sämtliche der in Schritt (III) eingesetzten Aromastoffe.

2. Verfahren zur Herstellung einer Aromastoffinklusionscellulose nach Anspruch 1, wobei (a) in Schritt (I) vor Inklusion der Quellmittel der Anteil an primären Quellmitteln (A) in einer Ausgangsmischung ($M_I$) umfassend Cellulose, primäre Quellmittel (A) und Hemicellulose und/oder Lignin wenigstens 20 Gew.-%, vorzugsweise wenigstens 30 Gew.-%, vorzugsweise wenigstens 40 Gew.-% beträgt, bezogen auf das Gesamtgewicht von Cellulose, primäre Quellmittel (A), Hemicellulose und Lignin in der Ausgangsmischung ($M_I$),
wobei vorzugsweise in Schritt (I) vor Inklusion der Quellmittel der Anteil an primären Quellmitteln (A) in einer Ausgangsmischung ($M_I$) umfassend Cellulose, primäre Quellmittel (A) und Hemicellulose und/oder Lignin im Bereich von 20 bis 95 Gew.-%, vorzugsweise im Bereich von 30 bis 90 Gew.-%, besonders bevorzugt im Bereich von 40 bis 80 Gew.-% liegt, bezogen auf das Gesamtgewicht von Cellulose, primäre Quellmittel (A), Hemicellulose und Lignin in der Ausgangsmischung ($M_I$) und/oder
wobei (b) zu ersetzendes inkludiertes Quellmittel in Schritt (III) Bestandteil einer Ausgangsmischung ($M_{III}$) ist, die Cellulose, inkludiertes und gegebenenfalls nicht inkludiertes Quellmittel und Hemicellulose und/oder Lignin umfasst, wobei der Gesamtanteil an inkludiertem und nicht inkludiertem Quellmittel im Bereich von 5 bis 90 Gew.-%, vorzugsweise im Bereich von 10 bis 70 Gew.-%, besonders bevorzugt im Bereich von 20 bis 50 Gew.-% liegt, bezogen auf das Gesamtgewicht von Cellulose, inkludiertem und nicht inkludiertem Quellmittel, Hemicellulose und Lignin in der Ausgangsmischung ($M_{III}$).

3. Mischung umfassend oder bestehend aus

(i+ii) Aromastoffinklusionscellulose, umfassend oder bestehend aus

(i) Cellulose und
(ii) einem, zwei, drei, vier oder mehr in die Cellulose inkludierten Aromastoffen, mit der Maßgabe, dass die Aromastoffe keine Alkansäuren mit 1 bis 4 C-Atomen sind,

und

(iii) Begleitsubstanzen, wobei die Begleitsubstanzen (iii) ausgewählt sind aus der Gruppe bestehend aus Hemicellulose und Lignin,

wobei

die Gesamtmenge an Hemicellulose bezogen auf das Gesamtgewicht der Begleitsubstanzen (iii) im Bereich von 70 bis 100 Gew.-%, vorzugsweise im Bereich von 88 bis 99,9 Gew.-% und/oder die Gesamtmenge an Lignin bezogen auf das Gesamtgewicht der Begleitsubstanzen (iii) im Bereich bis 30 Gew.-%, vorzugsweise im Bereich von 0,1 bis 12 Gew.-% liegt,
wobei die Mischung herstellbar ist durch ein Verfahren umfassend die Schritte nach Anspruch 1 oder 2.

4. Mischung nach Anspruch 3, wobei der eine bzw. einer, mehrere oder sämtliche der inkludierten Aromastoffe einen $logP_{OW}$ größer als 1,0, vorzugsweise größer als 1,5, vorzugsweise größer als 2,0, weiter bevorzugt größer als 3,0 und besonders bevorzugt größer als 4,0 besitzen.

5. Mischung nach Anspruch 3 oder 4, wobei die Aromastoffinklusionscellulose aus

(i) 75 bis 99 Gew.-%, vorzugsweise 75 bis 95 Gew.-% Cellulose und
(ii) insgesamt 1 bis 25 Gew.-%, vorzugsweise 5 bis 25 Gew.-% inkludierten Aromastoffen, mit der Maßgabe, dass die Aromastoffe keine Alkansäuren mit 1 bis 4 C-Atomen sind,

besteht oder diese umfasst.

6. Mischung nach einem der Ansprüche 3 bis 5, wobei die Cellulose (i)

- einen Polymerisationsgrad im Bereich von 1000 bis 12000, vorzugsweise im Bereich von 1500 bis 8000 besitzt und/oder
- einen Substitutionsgrad von kleiner als 0,5, vorzugsweise kleiner als 0,1, besonders bevorzugt kleiner als 0,015 besitzt
und/oder

- eine Faserlänge von 0,1 bis 5000 µm, vorzugsweise von 1,0 bis 500 µm, besonders bevorzugt von 5,0 bis 150 µm besitzt
und/oder
- eine Faserdicke von 0,5 bis 80 µm, vorzugsweise von 1,0 bis 50 µm, besonders bevorzugt von 1,0 bis 30 µm besitzt.

**7.** Mischung nach einem der Ansprüche 3 bis 6, umfassend zudem (iv) Wasser.

**8.** Mischung nach einem der Ansprüche 3 bis 7, umfassend oder bestehend aus

(i+ii) 70 bis 99,8 Gew.-% an Aromastoffinklusionscellulose
(iii) insgesamt 0,1 bis 30 Gew.-%, vorzugsweise 15 bis 30 Gew.-% an Begleitsubstanzen sowie optional
(iv) 0,1 bis 15 Gew.-%, vorzugsweise 1 bis 10 Gew.-% Wasser,

jeweils bezogen auf das Gesamtgewicht der Mischung.

**9.** Mischung nach einem der Ansprüche 3 bis 8, umfassend oder bestehend aus

(i+ii) Aromastoffinklusionscellulose wie in einem der Ansprüche 3 bis 8 beschrieben sowie
(iii) Begleitsubstanzen,
(iv) gegebenenfalls Wasser und
(v) nicht in Cellulose inkludierten Aromastoffen, wobei vorzugsweise

- der Anteil an (i+ii) Aromastoffinklusionscellulose, (iii) vorhandenen Begleitsubstanzen und (iv) gegebenenfalls vorhandenem Wasser 50 bis 99,9 Gew.-%, bevorzugt 75 bis 99,9 Gew.-% beträgt und
- der Anteil der (v) nicht in Cellulose inkludierten Aromastoffe 0,1 bis 50 Gew.-%, bevorzugt 0,1 bis 25 Gew.-% beträgt,

jeweils bezogen auf das Gesamtgewicht der Mischung.

**10.** Verwendung einer Mischung nach einem der Ansprüche 3 bis 9 zur Aromatisierung einer der Ernährung oder dem Genuss dienenden Zubereitung oder Halbfertigware.

**11.** Der Ernährung oder dem Genuss dienende Zubereitung oder Halbfertigware, umfassend eine Menge an einer Mischung nach einem der Ansprüche 3 bis 9, wobei vorzugsweise der Gesamtanteil an Aromastoffinklusionscellulose bezogen auf das Gesamtgewicht der Zubereitung bzw. Halbfertigware im Bereich von 0,001 bis 10 Gew.-%, bevorzugt im Bereich von 0,25 bis 5 Gew.-%, besonders bevorzugt im Bereich von 0,5 bis 3 Gew.-% liegt.

**Claims**

**1.** A method for producing a flavouring substance-included cellulose, comprising the following steps:

(I) inclusion of one or more primary swelling agent(s) (A) in cellulose;
(III) partial or complete replacement of included swelling agent by one, two, three, four, or more flavouring substances, with the proviso that the flavouring substances are not alkanoic acids with 1 to 4 C atoms,

so that the flavouring substances are included in the cellulose,
wherein (a) preferably swelling agent included in step (III) is only partially replaced and the method additionally comprises following step:

(IV) removal of included swelling agent not replaced by flavouring substances and/or

wherein (b) the method optionally additionally comprises the following step:

(II) partial or complete replacement of included primary swelling agent (A) by one or more secondary swelling agent(s) (B), so that these are included in the cellulose,

as well as subsequently optionally the step:

(IIb) partial or complete replacement of secondary swelling agent (B) included in cellulose by one or more further secondary swelling agent(s) (B)

as well as repetition of this step if necessary,
wherein in step (I) the cellulose is present in a mixture with hemicellulose and/or lignin,
wherein

- the proportion of hemicellulose with regard to the total weight of cellulose, hemicellulose and lignin is 0.001 to 80 wt.%, preferably 5 to 50 wt.%, particularly preferably 15 to 40 wt.%,
and/or
- the proportion of lignin with regard to the total weight of cellulose, hemicellulose and lignin is 0.01 to 10 wt.%, preferably 0.1 to 8 wt.% and particularly preferably 1 to 7 wt.%,

wherein
in case the method comprises step (II), the or one, several or all of the primary swelling agent(s) (A), respectively, are selected from the group (a1) consisting of water, glycerine, propylene glycol, formic acid, ammonia, aqueous solution of metal hydroxides, in particular of sodium hydroxide and potassium hydroxide, and mixtures thereof; preferably from the group consisting of water, aqueous solutions of sodium hydroxide and aqueous solutions of potassium hydroxide,
in case the method does not comprise step (II), the or one of the primary swelling agent(s) (A), respectively, is acetic acid,
wherein the or one, several or all of the secondary swelling agent(s) (B), respectively, are selected from the group consisting of ethanol, propanol, butanol, butyric acid, propionic acid and mixtures thereof, preferably from the group consisting of ethanol and propanol,
and wherein preferably the or one, several or all of the primary swelling agent(s) (A) and/or of the secondary swelling agent(s) (B), respectively, have a higher vapour pressure than the or one, several or all of the flavouring substances used in step (III).

2. A method for producing a flavouring substance-included cellulose according to claim 1,
wherein (a) in step (I) before inclusion of the swelling agents the proportion of primary swelling agents (A) in a starting mixture ($M_I$) comprising cellulose, primary swelling agents (A) and hemicellulose and/or lignin is at least 20 wt.%, preferably at least 30 wt.%, preferably at least 40 wt.%, with regard to the total weight of cellulose, primary swelling agents (A), hemicellulose and lignin in the starting mixture ($M_I$),
wherein preferably in step (I) before inclusion of the swelling agents the proportion of primary swelling agents (A) in a starting mixture ($M_I$) comprising cellulose, primary swelling agents (A) and hemicellulose and/or lignin is in the range of 20 to 95 wt.%, preferably in the range of 30 to 90 wt.%, particularly preferably in the range of 40 to 80 wt.%, with regard to the total weight of cellulose, primary swelling agents (A), hemicellulose and lignin in the starting mixture ($M_I$)
and/or
wherein (b) in step (III) included swelling agent that is to be replaced is part of a starting mixture ($M_{III}$), that comprises cellulose, included and, if applicable, not included swelling agent and hemicellulose and/or lignin, wherein the total proportion of included and not included swelling agent is in the range of 5 to 90 wt.%, preferably in the range of 10 to 70 wt.%, particularly preferably in the range of 20 to 50 wt.%, with regard to the total weight of cellulose, included and not included swelling agent, hemicellulose and lignin in the starting mixture ($M_{III}$).

3. Mixture comprising or consisting of

(i+ii) flavouring substance-included cellulose, comprising or consisting of

(i) cellulose and
(ii) one, two, three, four, or more flavouring substance(s) included in the cellulose, with the proviso that the flavouring substances are not alkanoic acids with 1 to 4 C atoms,

and
(iii) accompanying substances, wherein the accompanying substances (iii) are selected from the group consisting of hemicellulose and lignin,

wherein
the total amount of hemicellulose with regard to the total weight of the accompanying substances (iii) is in the range of 70 to 100 wt.%, preferably in the range of 88 to 99.9 wt.% and/or the total amount of lignin with regard to the total weight of the accompanying substances (iii) is in the range of up to 30 wt.%, preferably in the range of 0.1 to 12 wt.%, wherein the mixture is producible by a method comprising the steps according to claim 1 or 2.

4. Mixture according to claim 3, wherein the one or one, several or all of the included flavouring substances, respectively, have a $logP_{OW}$ greater than 1.0, preferably greater than 1.5, preferably greater than 2.0, further preferably greater than 3.0 and particularly preferably greater than 4.0.

5. Mixture according to claim 3 or 4, wherein the flavouring substance-included cellulose consists of or comprises

(i) 75 to 99 wt.%, preferably 75 to 95 wt.% cellulose and
(ii) a total of 1 to 25 wt.%, preferably 5 to 25 wt.% of included flavouring substances, with the proviso that the flavouring substances are not alkanoic acids with 1 to 4 C atoms.

6. Mixture according to any of the claims 3 to 5, wherein the cellulose (i)

- has a degree of polymerization in the range of 1000 to 12000, preferably in the range of 1500 to 8000 and/or
- has a degree of substitution of less than 0.5, preferably less than 0.1, particularly preferably less than 0.015 and/or
- has a fibre length of 0.1 to 5000 $\mu$m, preferably of 1.0 to 500 $\mu$m, particularly preferably of 5.0 to 150 $\mu$m and/or
- has a fibre thickness of 0.5 to 80 $\mu$m, preferably 1.0 to 50 $\mu$m, particularly preferably of 1.0 to 30 $\mu$m.

7. Mixture according to any of the claims 3 to 6, additionally comprising (iv) water.

8. Mixture according to any of the claims 3 to 7, comprising or consisting of

(i+ii) 70 to 99.8 wt.% of flavouring substance-included cellulose
(iii) a total of 0.1 to 30 wt.%, preferably 15 to 30 wt.% of accompanying substances as well as optionally
(iv) 0.1 to 15 wt.%, preferably 1 to 10 wt.% of water,

with regard to the total weight of the mixture, respectively.

9. Mixture according to any of the claims 3 to 8, comprising or consisting of

(i+ii) flavouring substance-included cellulose as described in any of the claims 3 to 8 as well as
(iii) accompanying substances,
(iv) water, if applicable, and
(v) flavouring substances not included in cellulose, wherein preferably

- the proportion of (i+ii) flavouring substance-included cellulose, (iii) present accompanying substances and (iv) present water, if applicable, is 50 to 99.9 wt.%, preferably 75 to 99.9 wt.% and
- the proportion of (v) flavouring substances not included in cellulose is 0.1 to 50 wt.%, preferably 0.1 to 25 wt.%,

with regard to the total weight of the mixture, respectively.

10. Use of a mixture according to any of the claims 3 to 9 for aromatization of a preparation or semi-finished product for nourishment or pleasure.

11. A preparation or semi-finished product for nourishment or pleasure, comprising an amount of a mixture according to any of the claims 3 to 9,
wherein preferably the total proportion of flavouring substance-included cellulose with regard to the total weight of the preparation or semi-finished product, respectively, is in the range of 0.001 to 10 wt.%, preferably in the range of 0.25 to 5 wt.%, particularly preferably in the range of 0.5 to 3 wt.%.

**Revendications**

1. Procédé de production d'une cellulose incluant des substances aromatisantes, comprenant les étapes suivantes consistant à:

   (I) inclure un ou plusieurs agent(s) de gonflement primaire(s) (A) dans de la cellulose;
   (III) remplacer en partie ou complètement de l'agent de gonflement inclus par une, deux, trois, quatre substances aromatisantes ou plus, à condition que les substances aromatisantes ne soient pas des acides alcanoïques ayant 1 à 4 atomes de carbone,

   de sorte que les substances aromatisantes seront incluses dans la cellulose,
   dans lequel (a) de préférence, à l'étape (III), de l'agent de gonflement inclus n'est remplacé que partiellement et le procédé comprend en sus l'étape suivante consistant à:

   (IV) éliminer de l'agent de gonflement inclus non pas remplacé par des substances aromatisantes,

   et/ou
   dans lequel (b) le procédé comprend en sus, de façon optionnelle, l'étape suivante consistant à:

   (II) remplacer en partie ou complètement de l'agent de gonflement primaire (A) inclus par un ou plusieurs agent(s) de gonflement secondaire(s) (B) de sorte que ceux-ci seront inclus dans la cellulose,

   ainsi qu'ensuite, de façon optionnelle, l'étape consistant à:

   (IIb) remplacer en partie ou complètement de l'agent de gonflement secondaire (B) inclus dans de la cellulose, par un ou plusieurs autre(s) agent(s) de gonflement secondaire(s) (B),

   ainsi que, le cas échéant, la répétition de cette étape,
   dans lequel, à l'étape (I), la cellulose se présente en mélange avec de l'hémicellulose et/ou de la lignine,
   dans lequel

   - la proportion d'hémicellulose par rapport au poids total de cellulose, d'hémicellulose et de lignine est comprise entre 0,001 et 80 % en poids, de préférence entre 5 et 50 % en poids, de manière particulièrement préférée entre 15 et 40 % en poids,
   et/ou
   - la proportion de lignine par rapport au poids total de cellulose, d'hémicellulose et de lignine est comprise entre 0,01 et 10 % en poids, de préférence entre 0,1 et 8 % en poids et de manière particulièrement préférée entre 1 et 7 % en poids,

   dans lequel,
   au cas où le procédé comprendrait l'étape (II), ledit ou bien l'un, plusieurs ou l'ensemble des agents de gonflement primaires (A) sont choisis dans le groupe (a1) constitué par l'eau, le glycérol, le propylène glycol, l'acide formique, l'ammoniaque, des solutions aqueuses d'hydroxydes métalliques, en particulier d'hydroxyde de sodium et d'hydroxyde de potassium, et les mélanges de ceux-ci; de préférence dans le groupe constitué par l'eau, des solutions aqueuses d'hydroxyde de sodium et des solutions aqueuses d'hydroxyde de potassium,
   au cas où le procédé ne comprendrait pas de l'étape (II), ledit agent de gonflement primaire (A) ou bien l'un des agents de gonflement primaires (A) est de l'acide acétique,
   dans lequel ledit ou bien l'un, plusieurs ou l'ensemble des agents de gonflement secondaires (B) sont choisis dans le groupe constitué par l'éthanol, le propanol, le butanol, l'acide butyrique, l'acide propionique et les mélanges de ceux-ci, de préférence dans le groupe constitué par l'éthanol et le propanol,
   et dans lequel, de préférence, ledit ou bien l'un, plusieurs ou l'ensemble des agents de gonflement primaires (A) et/ou des agents de gonflement secondaires (B) présentent une pression de vapeur supérieure à celle de ladite ou bien de l'une, plusieurs ou l'ensemble des substances aromatisantes utilisées à l'étape (III).

2. Procédé de production d'une cellulose incluant des substances aromatisantes, selon la revendication 1, dans lequel (a), à l'étape (I), avant l'inclusion des agents de gonflement, la proportion d'agents de gonflement primaires (A) dans un mélange de départ ($M_I$) comprenant de la cellulose, des agents de gonflement primaires (A) et de l'hémicellulose et/ou de la lignine, est de 20 % en poids au moins, de préférence de 30 % en poids au moins, de préférence de 40 % en poids au moins, par rapport au poids total de cellulose, d'agents de gonflement primaires (A), d'hémicellulose et de lignine dans le mélange de départ ($M_I$),

dans lequel, de préférence, à l'étape (I), avant l'inclusion des agents de gonflement, la proportion d'agents de gonflement primaires (A) dans un mélange de départ ($M_I$) comprenant de la cellulose, des agents de gonflement primaires (A) et de l'hémicellulose et/ou de la lignine, est comprise entre 20 et 95 % en poids, de préférence entre 30 et 90 % en poids, de manière particulièrement préférée entre 40 et 80 % en poids, par rapport au poids total de cellulose, d'agents de gonflement primaires (A), d'hémicellulose et de lignine dans le mélange de départ ($M_I$), et/ou

dans lequel (b) de l'agent de gonflement inclus à remplacer à l'étape (III) entre dans la composition d'un mélange de départ ($M_{III}$) qui comprend de la cellulose, de l'agent de gonflement inclus et le cas échéant non inclus et de l'hémicellulose et/ou de la lignine, la proportion totale d'agent de gonflement inclus et non inclus étant comprise entre 5 et 90 % en poids, de préférence entre 10 et 70 % en poids, de manière particulièrement préférée entre 20 et 50 % en poids, par rapport au poids total de cellulose, d'agent de gonflement inclus et non inclus, d'hémicellulose et de lignine dans le mélange de départ ($M_{III}$).

3. Mélange comprenant ou se composant de

(i+ii) cellulose incluant des substances aromatisantes, comprenant ou se composant

(i) de cellulose et
(ii) d'une, de deux, trois, quatre substance(s) aromatisante(s), ou plus, incluse(s) dans la cellulose, à condition que les substances aromatisantes ne soient pas des acides alcanoïques ayant 1 à 4 atomes de carbone,

et
(iii) de substances d'accompagnement, les substances d'accompagnement (iii) étant choisies dans le groupe constitué par l'hémicellulose et la lignine,

dans lequel
la quantité totale d'hémicellulose par rapport au poids total des substances d'accompagnement (iii) est comprise entre 70 et 100 % en poids, de préférence entre 88 et 99,9 % en poids, et/ou la quantité totale de lignine par rapport au poids total des substances d'accompagnement (iii) se situe dans la plage allant jusqu'à 30 % en poids, de préférence entre 0,1 et 12 % en poids,
le mélange pouvant être produit par un procédé comprenant les étapes selon la revendication 1 ou 2.

4. Mélange selon la revendication 3, dans lequel ladite une ou bien l'une, plusieurs ou l'ensemble des substances aromatisantes incluses présentent un $logP_{OW}$ supérieur à 1,0, de préférence supérieur à 1,5, de préférence supérieur à 2,0, encore de préférence supérieur à 3,0 et de manière particulièrement préférée supérieur à 4,0.

5. Mélange selon la revendication 3 ou 4, dans lequel la cellulose incluant des substances aromatisantes se compose

(i) de 75 à 99 % en poids, de préférence de 75 à 95 % en poids de cellulose et
(ii) dans l'ensemble, de 1 à 25 % en poids, de préférence de 5 à 25 % en poids de substances aromatisantes incluses, à condition que les substances aromatisantes ne soient pas des acides alcanoïques ayant 1 à 4 atomes de carbone,

ou comprend celles-ci.

6. Mélange selon l'une quelconque des revendications 3 à 5, dans lequel la cellulose (i)

- présente un degré de polymérisation compris entre 1000 et 12000, de préférence entre 1500 et 8000, et/ou
- présente un degré de substitution inférieur à 0,5, de préférence inférieur à 0,1, de manière particulièrement préférée inférieur à 0,015, et/ou
- présente une longueur de fibre comprise entre 0,1 et 5000 $\mu$m, de préférence entre 1,0 et 500 $\mu$m, de manière particulièrement préférée entre 5,0 et 150 $\mu$m, et/ou

- présente une épaisseur de fibre comprise entre 0,5 et 80 μm, de préférence entre 1,0 et 50 μm, de manière particulièrement préférée entre 1,0 et 30 μm.

7. Mélange selon l'une quelconque des revendications 3 à 6, comprenant en sus (iv) de l'eau.

8. Mélange selon l'une quelconque des revendications 3 à 7, comprenant ou se composant

(i+ii) de 70 à 99,8 % en poids de cellulose incluant des substances aromatisantes
(iii) dans l'ensemble, de 0,1 à 30 % en poids, de préférence de 15 à 30 % en poids de substances d'accompagnement, ainsi que, de façon optionnelle,
(iv) de 0,1 à 15 % en poids, de préférence de 1 à 10 % en poids d'eau, respectivement par rapport au poids total du mélange.

9. Mélange selon l'une quelconque des revendications 3 à 8, comprenant ou se composant

(i+ii) de cellulose incluant des substances aromatisantes, telle que décrite dans l'une quelconque des revendications 3 à 8, ainsi que
(iii) de substances d'accompagnement,
(iv) le cas échéant d'eau et
(v) de substances aromatisantes non incluses dans de la cellulose, de préférence

- la proportion de (i+ii) cellulose incluant des substances aromatisantes, de (iii) substances d'accompagnement existantes et de (iv) eau existant le cas échéant est comprise entre 50 et 99,9 % en poids, de préférence entre 75 et 99,9 % en poids, et
- la proportion des (v) substances aromatisantes non incluses dans de la cellulose est comprise entre 0,1 et 50 % en poids, de préférence entre 0,1 et 25 % en poids,

respectivement par rapport au poids total du mélange.

10. Utilisation d'un mélange selon l'une quelconque des revendications 3 à 9, pour l'aromatisation d'un(e) préparation ou produit semi-fini servant à l'alimentation ou à la consommation de luxe.

11. Préparation ou produit semi-fini servant à l'alimentation ou à la consommation de luxe, comprenant une quantité d'un mélange selon l'une quelconque des revendications 3 à 9,
dans laquelle/lequel la proportion totale de cellulose incluant des substances aromatisantes, par rapport au poids total de la préparation ou bien du produit semi-fini, est comprise entre 0,001 et 10 % en poids, de préférence entre 0,25 et 5 % en poids, de manière particulièrement préférée entre 0,5 et 3 % en poids,

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006062089 A
- US 2004137138 A
- US 20020188019 A
- DE 102004041496
- WO 2006106023 A
- WO 2005096841 A
- WO 2006003107 A
- WO 2007045566 A
- WO 2006058893 A
- WO 2007003527 A
- US 6986907 B

**In der Beschreibung aufgeführte Nicht-Patentliteratur**

- **STAUDINGER H. ; EICHER, T.** Über die Quellung resp. Inclusion der Cellulose mit niederen Fettsäuren. *Makromol. Chem.,* 1953, vol. 10, 254-260
- *J. Prakt. Chem.,* 1942, vol. 161, 219
- *Textile Research Journal,* 1974, vol. 44 (12
- *Textile Research Journal,* Januar 1964, 83